(19) Europäisches Patentamt / European Patent Office / Office européen des brevets

(11) **EP 3 246 974 B1**

(12) **EUROPEAN PATENT SPECIFICATION**

(45) Date of publication and mention
of the grant of the patent:
**04.11.2020 Bulletin 2020/45**

(51) Int Cl.:
*H01M 4/587* (2010.01)   *H01M 10/0525* (2010.01)
*H01M 4/133* (2010.01)   *H01M 4/36* (2006.01)
*C01B 32/205* (2017.01)   *C01B 32/20* (2017.01)
*H01M 4/1393* (2010.01)

(21) Application number: **15877904.1**

(22) Date of filing: **25.09.2015**

(86) International application number:
**PCT/JP2015/077205**

(87) International publication number:
**WO 2016/113952 (21.07.2016 Gazette 2016/29)**

(54) **CARBON MATERIAL AND NONAQUEOUS SECONDARY BATTERY USING CARBON MATERIAL**

KOHLENSTOFFMATERIAL UND WASSERFREIE SEKUNDÄRBATTERIE MIT VERWENDUNG DES KOHLENSTOFFMATERIALS

MATÉRIAU CARBONÉ ET PILE RECHARGEABLE À ÉLECTROLYTE NON AQUEUX UTILISANT LE MATÉRIAU CARBONÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.01.2015   JP 2015007038
26.03.2015   JP 2015064897
22.07.2015   JP 2015144890
02.09.2015   JP 2015173261**

(43) Date of publication of application:
**22.11.2017 Bulletin 2017/47**

(73) Proprietor: **Mitsubishi Chemical Corporation
Tokyo 100-8251 (JP)**

(72) Inventors:
• **YAMADA, Shunsuke**
**Chiyoda-ku,**
**Tokyo 1008251 (JP)**
• **ISHIWATARI, Nobuyuki**
**Chiyoda-ku,**
**Tokyo 1008251 (JP)**
• **AKASAKA, Satoshi**
**Tokyo 100-8251 (JP)**
• **SOGA, Iwao**
**Chiyoda-ku,**
**Tokyo 1008251 (JP)**

• **TANAKA, Hideaki**
**Chiyoda-ku,**
**Tokyo 1008251 (JP)**
• **FUSE, Tooru**
**Chiyoda-ku,**
**Tokyo 1008251 (JP)**
• **MOROKUMA, Shingo**
**Chiyoda-ku,**
**Tokyo 1008251 (JP)**
• **NISHIO, Koichi**
**Chiyoda-ku,**
**Tokyo 1008251 (JP)**

(74) Representative: **Vossius & Partner
Patentanwälte Rechtsanwälte mbB
Siebertstrasse 3
81675 München (DE)**

(56) References cited:
EP-A1- 2 634 847   WO-A1-2012/020816
JP-A- 2005 060 150   JP-A- 2013 216 563
JP-A- 2013 258 130   JP-A- 2014 152 041
US-A1- 2004 023 115   US-A1- 2010 086 856
US-A1- 2013 130 117

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 246 974 B1

**Description**

TECHNICAL FIELD

The present invention relates to a carbon material and a non-aqueous secondary battery using the carbon material.

BACKGROUND ART

In recent, along with a reduction in size of electronic apparatuses, a demand for a high-capacity secondary battery has increased. Particularly, a lithium ion secondary battery, which has a higher energy density and more excellent large-current charging and discharging characteristics in comparison to a nickel-cadmium battery and a nickel-hydrogen battery, has attracted attention. In the related art, enhancing the capacity of a lithium ion secondary battery has been widely examined. However, in recent, a demand for higher performance has increased with respect to the lithium ion secondary battery. Particularly, it has been required to accomplish higher capacity, high input and output, and a long operational lifespan for a vehicle and the like.

It has been known that carbon materials such as graphite are used as a negative electrode active material in the lithium ion secondary battery. Among the carbon materials, in the case where graphite having a great degree of graphitization is used as the negative electrode active material for the lithium ion secondary battery, capacity close to 372 mAh/g, which is theoretical capacity in lithium intercalation by graphite, is obtained, and graphite is also excellent from the viewpoints of the cost and durability. Accordingly, graphite is regarded as a preferable negative electrode active material. On the other hand, when a density of an active material layer, which includes a negative electrode material, is increased for high capacity, there is a problem such as an increase in charging and discharging irreversible capacity during an initial cycle, deterioration of input and output characteristics, and deterioration of cycle characteristics due to breakage and deformation of a material.

To solve the above-described problem, for example, PTL 1 discloses a technology of improving the cycle characteristics and storage characteristics. Specifically, a particle size distribution of a raw material carbon composition, which is obtained by subjecting a heavy oil composition to a coking treatment with a delayed coking process, is adjusted so that a ratio of fine particles having a particle size of 1/3 or less of an average particle size becomes 5% or greater. Then, a compressive stress and a shear stress are applied to the raw material carbon composition to prepare a graphite precursor that is granulated and spheroidized. In addition, the graphite precursor is heated for graphitization.

PTL 2 discloses a technology of improving cycle characteristics by allowing squamous graphite, which has a small particle size and hardness higher than that of spheroidized natural graphite, to adhere to the spheroidized natural graphite through an isotropic compressing treatment without using a binder.

In addition, PTL 3 discloses a technology of improving initial charging and discharging efficiency, load characteristics, and low-temperature characteristics by coating at least a part of a surface of squamous artificial graphite having an average particle size of 25 to 35 $\mu$m with a coating layer including amorphous carbon and natural graphite having an average particle size of 0.1 to 3 $\mu$m.

In addition, PTL 4 discloses a technology of improving compressibility and cycle characteristics of an active material layer by allowing natural graphite to adhere to a surface of a mesocarbon microbead.

In addition, PTL 5 discloses a technology of allowing squamous graphite to adhere to a surface of granular graphite by mixing the granular graphite, the squamous graphite, and a binder, and by baking and pulverizing the resultant mixture.

In addition, with regard to the negative electrode material, for example, PTL 6 discloses a technology of improving filling properties and high-speed charging and discharging characteristics. In the technology, mechanical energy is applied to squamous natural graphite for spheroidization of the squamous graphite. In addition, spheroidized natural graphite that is obtained is set as a nucleus, and a surface thereof is covered with amorphous carbon.

In addition, PTL 7 discloses the following method. Specifically, squamous natural graphite, a meltable organic material, and a pitch having a softening point of 70°C are heated and kneaded, and mechanical impact is applied to the resultant mixture with a hybridizer apparatus. Then, carbon black is added to the mixture, and mechanical impact is additionally applied to the mixture so as to obtain a spheroidized powder. The spheroidized powder is baked to obtain a negative electrode material powder. In addition, PTL 8 discloses a method in which a resin binder is put into raw material graphite particles, and the resultant mixture is subjected to a spheroidizing treatment so as to obtain spheroidized graphite particles of which a particle surface is smooth. In addition, PTL 9 discloses a method in which coal-based calcined cokes and paraffin wax are subjected to high-speed stirring while being heated for granulation into a spherical shape.

In addition, for example, PTL 10 discloses a technology of improving rapid charging and discharging characteristics. Specifically, a coke powder having an average particle size of 5 $\mu$m as a graphitizable aggregate, pitch or coal-tar as a binder are mixed, and the resultant mixture is baked, graphitized, and pulverized. According to this, a plurality of flat particles are aggregated or coupled to each other in such a manner that orientation planes are not parallel to each other, thereby setting a pore volume of pores having a size in a range of $10^2$ to $10^6$ Å to 0.4 to 2.0 cc/g.

PTL 11 discloses a technology of reducing swelling during charging and discharging by additionally performing a spheroidizing treatment to spherical graphite so as to suppress a crystal orientation in graphite particles.

PRIOR ART DOCUMENT

PATENT LITERATURE

[PTL 1] Japanese Patent Application Publication No. 2013-079173
[PTL 2] Japanese Patent Application Publication No. 2007-220324
[PTL 3] Japanese Patent Application Publication No. 2011-216241
[PTL 4] Japanese Patent Application Publication No. 2007-317551
[PTL 5] Japanese Patent Application Publication No. 2004-127723
[PTL 6] Japanese Patent No. 3534391
[PTL 7] Japanese Patent Application Publication No. 2008-305722
[PTL 8] Japanese Patent Application Publication No. 2014-114197
[PTL 9] WO 2014/141372 A
[PTL 10] Japanese Patent Application Publication No. 2002-083587
[PTL 11] Japanese Patent Application Publication No. 2011-086617

SUMMARY OF THE INVENTION

PROBLEM TO BE SOLVED BY INVENTION

According to an examination made by the present inventors, they obtained the following findings. In the technology disclosed in PTL 1, a shape of an adhered green coke fine powder is not controlled. Therefore, formation of a granulated body is not sufficient. In addition, core green coke and the adhered green coke fine powder are fused to each other, and primary particles of the granulated body assimilate with each other. Accordingly, it is difficult to maintain a granulated body structure, and thus the granulated body becomes approximately one particle. Accordingly, charging and discharging reaction sites on a particle surface decrease, and thus cycle characteristics and the storage characteristics are improved, but the effect is limited. In addition, since a void at the periphery of the green coke core particle disappears due to the fusion, the granulated body is not appropriately deformed during pressing and is broken, and thus there is a tendency that an excessive side reaction with an electrolytic solution occurs. In addition, fine pores in particles are reduced, and thus migration of the electrolytic solution is limited. From the results, it can be seen that the capacity, the charging and discharging load characteristics, and the input and output characteristics are not sufficient yet.

In the technology disclosed in PTL 2, since the squamous graphite having a small particle size is allowed to adhere to a core through the isotropic compressing treatment, a void at the periphery of core particles disappears, and thus a granulated body is not appropriately deformed during pressing and is broken. Accordingly, an excessive side reaction with an electrolytic solution occurs, and capacity and charging and discharging efficiency are not sufficient yet. In addition, since the spheroidized natural graphite is used as a core, electrode expansion is great during charging and discharging, and the cycle characteristics are not sufficient yet.

In the technology disclosed in PTL 3, since the squamous artificial graphite is used as a base material, diffusibility of an electrolytic solution in a negative electrode is low, and the input and output characteristics and the cycle characteristics are not sufficient yet. In addition, consideration is not given to a void between the base material and the coating layer, and the filling properties, the capacity, and the charging and discharging efficiency are not sufficient yet.

In the technology disclosed in PTL 4, since the mesocarbon microbead having low graphite crystallinity is used as a base material, there is a problem such as a decrease in discharging capacity, low productivity, and high cost. In addition, consideration is not given to the void between the base material and the coating layer, and the filling properties, the capacity, and the charging and discharging efficiency are not sufficient yet.

In the technology disclosed in PTL 5, since the granular graphite and the squamous graphite are allowed to adhere to each other with a binder interposed therebetween, a void at the periphery of the granular graphite nucleus is small, and thus migration of an electrolytic solution is limited. As a result, the capacity and the input and output characteristics are not sufficient. In addition, the adherence occurs only through mixing of the granular graphite, the squamous graphite, and the binder, and then baking is performed. Accordingly, arrangement of squamous graphite is not controlled, and the squamous graphite, which adheres to the granular graphite in a vertically napped state, is peeled off and is pulverized during pulverization. In addition, the resultant pulverized particles are arranged in an electrode, and thus there is a concern that the charging and discharging load characteristics and the input and output characteristics deteriorate.

In addition, according to investigation made by the present inventors, in the spheroidized natural graphite disclosed in PTL 6, much better rapid charging and discharging characteristics at high capacity are obtained in comparison to squamous graphite used as a raw material, but an adhesion force between particles is deficient. As a result, there is a problem that the squamous graphite remains, and a fine powder occurs during spheroidization, and thus there is a problem that battery characteristics and productivity deteriorate.

In addition, since the negative electrode material powder disclosed in PTL 7 is in a state in which the meltable organic material and the pitch which are contained include a softened solid during spheroidization of graphite, an adhesion force between raw material graphites is not sufficient, and an effect of improving battery characteristics through suppression of remaining of the squamous graphite and occurrence of a fine powder during spheroidization is not sufficient.

In the method of producing the spheroidized graphite as disclosed in PTL 8, similarly, the adhesion force between graphite particles through addition of the resin binder is small, and the effect of improving the battery characteristics through suppression of occurrence of the fine powder is not sufficient. On the other hand, a technology of realizing spheroidization by adding a resin binder solution obtained by dissolution in a toluene solvent is also disclosed as an example. However, a flashing point of the solvent is low. Accordingly, when reaching a temperature equal to or higher than the flashing point due to temperature rising during a spheroidizing treatment, there is a risk of explosion or firing during production, and thus further improvement is required.

In addition, PTL 9 does not disclose a method of granulating graphite into a spherical shape, and the paraffin wax is a solid. Accordingly, the effect of suppressing occurrence of a fine powder during spheroidization and the effect of improving the battery characteristics are not sufficient.

In addition, according to investigation made by the present inventors, in the technology disclosed in PTL 10, since the coke particles are coupled to each other by using a binder to produce granulated particles, pores in the particles are filled with a residue of the binder. As a result, there is a tendency that the amount of pores in particles decreases. Particularly, relatively great pores are rich, but fine pores are reduced. Accordingly, migration of an electrolytic solution into a deep position is limited, and thus the capacity, the charging and discharging load characteristics, and the input and output characteristics are not sufficient yet.

In addition, according to investigation made by the present inventors, in the spheroidized natural graphite disclosed in PTL 6 or PTL 11, coating with amorphous carbon or strength enhancement by spheroidization is high, a void in particles is clogged, and thus movability of Li ions deteriorates. As a result, output characteristics are not sufficient. In addition, particle strength is also high, and thus binding properties between particles which constitute the spheroidized natural graphite is also high, and pressing properties are not sufficient.

In addition, in the negative electrode material powder disclosed in PTL 7 to PTL 9, a void in particles is filled with the meltable organic material or the pitch which is contained, or the resin during spheroidization of graphite, and thus movability of Li ions deteriorates. As a result, the output characteristics are not sufficient. In addition, graphite particles are strongly bonded to each other, and thus there is a room for an improvement of pressing properties. In addition, in the negative electrode material powder disclosed in PTL 7, when repeating charging and discharging, bonding between particles becomes weak, and a decrease in inter-particle conductivity occurs. As a result, there is a room for improvement of the cycle characteristics.

The invention has been made in consideration of the background art, and an object A thereof is to provide a carbon material which is capable of obtaining a non-aqueous secondary battery which has high capacity and excellent filling properties and initial efficiency, and exhibits low charging resistance, and which is capable of being stably produced with efficiency so as to provide a non-aqueous secondary battery in which performance is high and productivity is excellent as a result thereof.

In addition, another object B of the invention is to provide a carbon material which is capable of obtaining a non-aqueous secondary battery excellent in capacity, charging and discharging efficiency, an electrode expansion rate, filling properties, discharging load characteristics, and low-temperature output characteristics, and is capable of being stably produced with efficiency so as to provide a non-aqueous secondary battery in which performance is high and productivity is excellent as a result thereof.

In addition, still another object C of the invention is to provide a carbon material capable of obtaining a non-aqueous secondary battery having high capacity, and excellent output characteristics, cycle characteristics, and pressing properties so as to provide a non-aqueous secondary battery with high performance as a result thereof.

In addition, still another object D of the invention is to provide a carbon material which is capable of obtaining a non-aqueous secondary battery having high capacity, and excellent low-temperature output characteristics and discharging load characteristic, and which is capable of being stably produced with efficiency so as to provide a non-aqueous secondary battery in which performance is high and productivity is excellent as a result.

In addition, still another object E of the invention is to provide a method of manufacturing a composite carbon material for a non-aqueous secondary battery. The method includes a process of granulating a raw material carbon material, and is capable of manufacturing a composite carbon material for a non-aqueous secondary battery in various types of particle structures. In addition, the method is capable of realizing a high-throughput, and is capable of stably manufacturing a negative electrode material in which the degree of spheroidization is high, filling properties are excellent, anisotropy is small, and the amount of fine powders is small. In addition, the object E is to provide a negative electrode material capable of obtaining a non-aqueous secondary battery having high capacity and excellent low-temperature output characteristics by the manufacturing method, and to provide a high-performance non-aqueous secondary battery as a result thereof. MEANS FOR SOLVING THE PROBLEM A composite material and a non aqueous battery according to the invention are defined in the appended claims.

The present inventors have made a thorough investigation to achieve the object A, and as a result, they obtained the following finding. When using a composite carbon material which contains at least bulk mesophase artificial graphite particle ($A_a$) and graphite particle ($B_a$) having an aspect ratio of 5 or greater, and is capable of absorbing and releasing lithium ions, specifically, a composite carbon material for a non-aqueous secondary battery in which a graphite crystal layered structure of the graphite particle ($B_a$) is arranged in the same direction as that of an outer peripheral surface of the bulk mesophase artificial graphite particle ($A_a$) at a part of a surface of the bulk mesophase artificial graphite particle ($A_a$), and an average circularity is 0.9 or greater, it is possible to obtain

a non-aqueous secondary battery which has high capacity, and excellent filling properties and initial efficiency, and exhibits low charging resistance and excellent productivity. As a result, the present inventors have accomplished the invention A.

That is, the gist of the invention A is as follows.

<A1> A composite carbon material for a non-aqueous secondary battery comprising at least a bulk mesophase artificial graphite particle ($A_a$) and a graphite particle ($B_a$) having an aspect ratio of 5 or greater, and being capable of absorbing and releasing lithium ions, wherein a graphite crystal layered structure of the graphite particle ($B_a$) is arranged in the same direction as a direction of an outer peripheral surface of the bulk mesophase artificial graphite particle ($A_a$) at a part of a surface of the bulk mesophase artificial graphite particle ($A_a$), and an average circularity is 0.9 or greater.

<A2> The composite carbon material for a non-aqueous secondary battery according to <A1>, wherein an average particle size d50 of the graphite particle ($B_a$) is smaller than an average particle size d50 of the bulk mesophase artificial graphite particle ($A_a$).

<A3> The composite carbon material for a non-aqueous secondary battery according to <A1> or <A2>, wherein an artificial graphite particle (C) having an average particle size d50, which is smaller than the average particle size d50 of the bulk mesophase artificial graphite particle ($A_a$), adhere to at least a part of a surface of the bulk mesophase artificial graphite particle ($A_a$) or the graphite particle ($B_a$).

<A4> The composite carbon material for a non-aqueous secondary battery according to any one of <A1> to <A3>, wherein the graphite particle ($B_a$) contains natural graphite.

<A5> A lithium ion secondary battery comprising a positive electrode and a negative electrode which are capable of absorbing and releasing lithium ions, and an electrolyte, wherein

the negative electrode includes a current collector and an active material layer that is formed on the current collector, and the active material layer contains the composite carbon material for a non-aqueous secondary battery according to any one of <A1> to <A4>.

The present inventors have made a thorough investigation to achieve the object B, and as a result, they obtained the following findings. When using a composite carbon particle which has a core-shell structure with a graphite particle ($A_b$) set as a core particle and which is capable of absorbing and releasing lithium ions, specifically, a composite carbon particle for a non-aqueous secondary battery in which a shell layer of the composite carbon particle is a composite particle layer including a plurality of graphite particles ($B_b$) having an aspect ratio of 5 or greater, and on a backscattered electron image by observing a particle cross-section with a scanning electron microscope (SEM) at an acceleration voltage 10 kV, a cross-sectional area of the core particle is 15% to 70% of a cross-sectional area of the composite carbon particle, at least one void, of which a cross-sectional area is 3% or greater of the cross-sectional area of the core particle and which is in contact with the core particle contiguous to each other, is formed on an inner side in comparison to the shell layer, and the sum of a void cross-sectional area is 15% or greater of the cross-sectional area of the core particles, and a composite carbon material that contains the composite carbon particle for a non-aqueous secondary battery, it is possible to obtain a non-aqueous secondary battery having excellent filling properties, high capacity, high charging and discharging efficiency, a low electrode expansion rate, excellent discharging load characteristics and input and output characteristics, and excellent productivity. As a result, the present inventors have accomplished the invention B.

More specifically, the gist of the invention B is as follows.

<B1> A composite carbon particle for a non-aqueous secondary battery having a core-shell structure with graphite particles ($A_b$) set as a core particle and being capable of absorbing and releasing lithium ions, wherein a shell layer of the composite carbon particle is a composite particle layer including a plurality of graphite particles ($B_b$) having an aspect ratio of 5 or greater, and on a backscattered electron image obtained by observing a particle cross-section with a scanning electron microscope (SEM) at an acceleration voltage 10 kV, a cross-sectional area of the core particle is 15% to 70% of a cross-sectional area of the composite carbon particle, at least one void, of which a cross-sectional area is 3% or greater of the cross-sectional area of the core particle and which is in contact with the core particle contiguous to each other, is formed on an inner side in comparison to the shell layer, and the sum of a void cross-sectional area is 15% or greater of the cross-sectional area of the core particle.

<B2> A composite carbon material for a non-aqueous secondary battery, comprising a composite carbon particle having a core-shell structure with a graphite particle ($A_b$) set as a core particles and being capable of absorbing and releasing lithium ions, wherein a shell layer of the composite carbon particle is a composite particle layer including a plurality of graphite particles ($B_b$) having an aspect ratio of 5 or greater, and on a backscattered electron image obtained by observing a particle cross-section of the composite carbon material with a scanning electron microscope (SEM) at an acceleration voltage 10 kV, a relationship between a major axis and a minor axis of the particle cross-section that is not compressed, and an average particle size d50 satisfies the following Expression (B1), and when randomly selecting 30 particles among the composite carbon particles having an aspect ratio of 3 or less, the number of the composite carbon particles according to <B1> which exist in the 30 particle is 10 or greater.

$$\text{Expression (B1)} \quad R/2 \leq (A_b + B_b)/2 \leq 2R$$

(in Expression (B1), $A_b$ represents a major axis ($\mu$m), $B_b$ represents a minor axis ($\mu$m), and R represents an average particle size d50 ($\mu$m))

<B3> A composite carbon material for a non-aqueous secondary battery, comprising a composite carbon particle which have a core-shell structure with a graphite particle ($A_b$) set as a core particle and being capable of absorbing and releasing lithium ions, wherein a shell layer of the composite carbon particle is a composite particle layer including a plurality of graphite particles ($B_b$) having an aspect ratio of 5 or greater, and on a backscattered electron image obtained by observing a particle cross-section of the composite carbon material with a scanning electron microscope (SEM) at an acceleration voltage 10 kV, an average value of the sums of void cross-sectional areas, which are calculated by the following Condition (B1), is 15% or greater.

Condition (B1)

Among the composite carbon particles contained in the composite carbon material, 20 particles, in which a cross-sectional area of the core particles is 15% to 70% of a cross-sectional area of the composite carbon particles, are randomly selected. In the respective particles, the sums of cross-sectional areas of voids, of which a cross-sectional area is 3% or greater of the cross-sectional area of the core particle and which are in contact with the core particle, are respectively calculated. An average value of 10 particles, which remain after excluding five particles exhibiting a greater value of the sum of the void cross-sectional areas, and five particles exhibiting a smaller value of the sum of the void cross-sectional areas, is set as the average value of the sums of the void cross-sectional areas.

<B4> The composite carbon material for a non-aqueous secondary battery according to <B2> or <B3>, wherein the composite carbon the material has an average circularity of 0.9 or greater.

<B5> The composite carbon material for a non-aqueous secondary battery according to any one of <B2> to <B4>, wherein the average particle size d50 of the graphite particles ($B_b$) is smaller than the average particle size d50 of the graphite particle ($A_b$).

<B6> The composite carbon material for a non-aqueous secondary battery according to any one of <B2> to <B5>, wherein the graphite particle ($A_b$) is an artificial graphite particle.

<B7> The composite carbon material according to any one of <B2> to <B6>, comprising an artificial graphite particle (C) having an average particle size d50 smaller than the average particle size of the graphite particle ($A_b$) in the shell layer of the composite carbon particle.

<B8> The composite carbon material for a non-aqueous secondary battery according to any one of <B2> to <B7>, wherein the graphite particle ($B_b$) contains natural graphite.

<B9> A lithium ion secondary battery comprising a positive electrode and a negative electrode being capable of absorbing and releasing lithium ions, and an electrolyte, the negative electrode includes a current collector and an active material layer that is formed on the current collector, and the active material layer contains the composite carbon material for a non-aqueous secondary battery according to any one of <B2> to <B8>.

The present inventors have made a thorough investigation to achieve the object C, and as a result, they obtained the following findings. When using a composite carbon material for a non-aqueous secondary battery which is capable of absorbing and releasing lithium ions, specifically, a carbon material in which a volume-based average particle size of the composite carbon material varies by 0.8 $\mu$m or greater before and after an ultrasonic treatment when the composite carbon material is subjected to the ultrasonic treatment under specific conditions, it is possible to obtain a non-aqueous secondary battery negative electrode material having high capacity, excellent output characteristics and cycle characteristics, and good pressing properties. As a result, the present inventors have accomplished the invention.

That is, the gist of the invention C is as follows.

<C1> A composite carbon material for a non-aqueous secondary battery being capable of absorbing and releasing lithium ions, wherein a volume-based average particle size of the composite carbon material varies by 0.8 $\mu$m or greater before and after an ultrasonic treatment when the composite carbon material is subjected to the ultrasonic treatment according to the following method.

(Ultrasonic Treatment Method)

Putting a dispersion obtained by uniformly dispersing 100 mg of carbon material in 30 ml of water into a columnar polypropylene container in which the bottom has a radius of 2 cm, immersing a columnar chip having a radius of 3 mm of an ultrasonic homogenizer of 20 kHz in the dispersion to a depth of 2 cm or greater, and irradiating the dispersion with ultrasonic waves for 10 minutes at an output of 15 W while maintaining the dispersion at 10°C to 40°C.

<C2> The composite carbon material for a non-aqueous secondary battery according to <C1>, wherein the composite carbon material has a volume-based average particle size of 1 to 30 $\mu$m.

<C3> The composite carbon material for a non-aqueous secondary battery according to <C1> or <C2>, wherein the composite carbon material has a tap density of 0.8 g/cm$^3$ or greater.

<C4> The composite carbon material for a non-aqueous secondary battery according to any one of <C1> to <C3>, wherein the composite carbon material has a volume-based mode diameter which varies by 0.5 $\mu$m or greater before and after the ultrasonic treatment when being subjected to the ultrasonic treatment in accordance with the method.

<C5> The composite carbon material for a non-aqueous secondary battery according to any one of <C1> to <C4>, wherein the composite carbon material has d90/d10 of 2 to 10.

<C6> The composite carbon material for a non-aqueous secondary battery according to any one of <C1> to <C5>, wherein the composite carbon material has a BET specific surface area of 17 m$^2$/g or less.

<C7> The composite carbon material for a non-aqueous secondary battery according to any one of <C1> to <C6>, wherein the composite carbon material is constituted by a composite particle including bulk mesophase artificial graphite and natural graphite.

<C8> A lithium ion secondary battery, comprising a positive electrode and a negative electrode being capable of absorbing and releasing lithium ions, and an electrolyte, wherein the negative electrode includes a current collector, and a negative electrode active material layer that is formed on the current collector, and the negative electrode active material layer contains the composite carbon material for a non-aqueous secondary battery according to any one of <C1> to <C7>.

The present inventors have made a thorough investigation to achieve the object D, and as a result, they obtained the following finding. When using a composite carbon material for a non-aqueous secondary battery in which a plurality of graphite particles ($A_d$) capable of absorbing and releasing lithium ions are composited, specifically, a composite carbon material for a non-aqueous secondary battery in which a mode diameter in a pore distribution obtained by a mercury intrusion method with respect to a powder is 0.1 to 2 $\mu$m, and a volume-based average particle size (d50) is 5 to 40 $\mu$m, it is possible to obtain a non-aqueous secondary battery that has high capacity and is excellent in charging and discharging load characteristics, input and output characteristics, cycle characteristics, and productivity. As a result, the present inventors have accomplished the invention.

More specifically, the gist of the invention D is as follows.

<D1> A composite carbon material for a non-aqueous secondary battery in which graphite particles ($A_d$) capable of absorbing and releasing lithium ions are composited, wherein a mode diameter in a pore distribution obtained by a mercury intrusion method with respect to a powder is 0.1 to 2 $\mu$m, and a volume-based average particle size (d50) is 5 to 40 $\mu$m.

<D2> The composite carbon material for a non-aqueous secondary battery according to <D1>, wherein a volume of a pore having a size of 0.1 to 2 $\mu$m of the composite carbon material is 0.2 ml/g or greater.

<D3> The composite carbon material for a non-aqueous secondary battery according to <D1> or <D2>, wherein the composite carbon material has a bulk density of 0.3 g/cm$^3$ or greater.

<D4> The composite carbon material for a non-aqueous secondary battery according to any one of <D1> to <D3>, wherein the composite carbon material has a tap density of 0.6 g/cm$^3$ or greater.

<D5> The composite carbon material for a non-aqueous secondary battery according to any one of <D1> to <D4>, wherein the composite carbon material has d90/d10 of 3.5 or greater.

<D6> The composite carbon material for a non-aqueous secondary battery according to any one of <D1> to <D5>, wherein an average particle size d50 of the composite carbon material for a non-aqueous secondary battery is 1.5 times to 15 times an average particle size d50 of the graphite particles ($A_d$).

<D7> The composite carbon material for a non-aqueous secondary battery according to any one of <D1> to <D6>, wherein the graphite particles ($A_d$) are artificial graphite particles.

<D8> The composite carbon material for a non-aqueous secondary battery according to any one of <D1> to <D7>, further comprising natural graphite particles ($B_d$).

<D9> A lithium ion secondary battery comprising a positive electrode and a negative electrode being capable of absorbing and releasing lithium ions, and an electrolyte, wherein the negative electrode includes a current collector, and an active material layer that is formed on the current collector, and the active material layer contains the composite carbon material for a non-aqueous secondary battery according to any one of <D1> to <D8>.

The present inventors have made a thorough investigation to achieve the object E, and as a result, they solved the object E in accordance with a method for manufacturing a composite carbon material for a non-aqueous secondary battery which includes a granulation process of granulating a raw material carbon material through application of any one mechanical energy among at least an impact force, a compressive force, a frictional force, and a shear force. The composite carbon material includes at least a bulk mesophase artificial graphite ($A_e$) and/or a precursor thereof, and a graphite particle ($B_e$) and/or a precursor thereof, and the process of granulating the raw material carbon material is performed under the presence of a granulating agent that is a liquid in the granulation process. As a result, the present inventors have accomplished the invention E.

More specifically, the gist of the invention E is as follows.

<E1> A method for manufacturing a composite carbon material for a non-aqueous secondary battery comprising a granulation process of granulating a raw material carbon material through application of any one mechanical energy among at least an impact force, a compression force, a frictional force, and a shear force, wherein the composite carbon material includes at least a bulk mesophase artificial graphite particle ($A_e$) and/or a precursor thereof, and a graphite particle ($B_e$) and/or a precursor thereof, and the granulation process is performed under the presence of a granulating agent that is a liquid in the granulation process.

<E2> The method according to <E1>, wherein the granulating agent has a contact angle $\theta$ with graphite, which is measured by the following measurement method, is less than 90°.

<Method of Measuring Contact Angle $\theta$ with Graphite>

Adding 1.2 $\mu$L of granulating agent dropwise to an HOPG surface, and measuring a contact angle by a contact angle measuring device (automatic contact angle meter DM-501, manufactured by Kyowa Interface Science Co., Ltd.) when spreading converges and a variation rate of the contact angle $\theta$ for one second becomes 3% or less. Here, in the case of using a granulating agent of which a viscosity at 25°C is 500 cP or less, a value at 25°C is set as a measurement value of the contact angle $\theta$. In the case of using a granulating agent of which a viscosity at 25°C is greater than 500 cP, a value at a temperature raised to a temperature, at which the viscosity becomes 500 cP or less, is set as the measurement value of the contact angle $\theta$.

<E3> The method according to <E1> or <E2>, wherein a viscosity of the granulating agent is 1 cP or greater in the granulation process.

<E4> The method according to any one of <E1> to <E3>, wherein a viscosity of the granulating agent at 25°C is 1 to 100000 cP.

<E5> The method according to any one of <E1> to <E4>, wherein the graphite particles contains at least one selected from the group consisting of squamous natural graphite, scale-like natural graphite, and bulk natural graphite.

<E6> The method according to any one of <E1> to <E5>, further comprising a baking process after the granulation process.

<E7> The method according to any one of <E1> to <E6>, wherein the granulation process is performed under an atmosphere of 0°C to 250°C.

<E8> The method according to any one of <E1> to <E7>, wherein, in the granulation process, a rotor of an apparatus, which includes a rotary member that rotates in a casing at a high speed, and the rotor that is provided with a plurality of blades in the casing, rotates at a high speed to apply any one of an impact force, a compressive force, a frictional force, and a shear force with respect to graphite that is put into an inner side of the apparatus so as to granulate the graphite.

EFFECT OF THE INVENTION

When using the composite carbon material of the invention A as a negative electrode active material for a non-aqueous secondary battery, it is possible to stably provide a lithium secondary battery which has high capacity and is excellent in filling properties, initial efficiency, and productivity with efficiency.

A mechanism in which the composite carbon material of the invention A exhibits excellent battery characteristics is not clear. However, from a result of the investigation made by the present inventors, it is considered that the excellent battery characteristics are exhibited due to the following effect.

The bulk mesophase artificial graphite particle ($A_a$) has a structure having fewer defects in a graphite surface, and having fewer voids closely clogged on an inner side of the particles, and thus the bulk mesophase artificial graphite particle ($A_a$) has characteristics in which cycle characteristics, high-temperature storage characteristics, and stability are more excellent in comparison to natural graphite. Accordingly, when using the bulk mesophase artificial graphite particle ($A_a$) as a parent particle of the composite carbon material of the invention, it is considered that good cycle characteristics, high-temperature storage characteristics, and stability can be provided.

In addition, when a graphite particle ($B_a$) having an aspect ratio of 5 or greater exists at a part of a surface of the bulk mesophase artificial graphite particle ($A_a$), it is considered that it is possible to suppress orientation in an electrode and a decrease in diffusibility of an electrolytic solution which are problematic in the case of adding graphite particles having a high aspect ratio alone, and thus high low-temperature input and output characteristics can be provided. In addition, it is considered that the graphite particle ($B_a$) having an aspect ratio of 5 or greater can come into contact with an electrolytic solution with efficiency, and intercalation and deintercalation of Li ions can be effectively performed, and thus the low-temperature input and output characteristics can be improved.

At this time, when the graphite crystal layered structure of the graphite particle ($B_a$) is arranged in the same direction as that of an outer peripheral surface of the artificial graphite particle ($A_a$), the bulk mesophase artificial graphite particle ($A_a$) and the graphite particle ($B_a$) can come into plane-contact with each other and can strongly adhere to each other. Accordingly, it is considered that it is possible to prevent a decrease in diffusibility of the electrolytic solution due to peeling-off of the graphite particle ($B_a$) having a high aspect ratio from the bulk mesophase artificial graphite particle ($A_a$) and an orientation of the graphite particle ($B_a$) in the electrode, and the high low-temperature input and output characteristics can be provided. In addition, it is considered that contact properties between composite carbon particles are improved, and thus conductivity is improved and the low-temperature input and output characteristics and the cycle characteristics can be improved.

In addition, when the average circularity is set to 0.9 or greater, it is considered that diffusibility of the electrolytic solution is improved, and a Li-ion concentration gradient which occurs during charging and discharging is effectively mitigated, and thus the low-temperature input and output characteristics can be improved.

When using the composite carbon particles and the composite carbon material including the composite carbon particles of the invention B as a negative electrode active material for a non-aqueous secondary battery, it is possible to stably provide a lithium secondary battery that is excellent in capacity, charging and discharging efficiency, an electrode expansion rate, filling properties, discharging load characteristics and low-temperature output characteristics, and productivity with efficiency.

A mechanism in which the composite carbon particles of the invention B exhibit excellent battery characteristics is not clear. However, from a result of the investigation made by the present inventors, it is considered that the excellent battery characteristics are exhibited due to the following effect.

When the graphite particles ($B_b$) having an aspect ratio of 5 or greater exist at the periphery of the graphite particles ($A_b$), it is considered that the composite carbon particles can migrate through the graphite particles ($B_b$) with high lubricating properties during electrode pressing, and thus filling properties are improved and a high density of an electrode can be realized, and as a result, it is possible to provide a high-capacity non-aqueous secondary battery.

In addition, when the graphite particles ($B_b$) having an aspect ratio of 5 or greater are composited at the periphery of the graphite particles ($A_b$), it is considered that it is possible to suppress an orientation in an electrode and a decrease in diffusibility of an electrolytic solution which are problematic in the case of adding graphite particles having a high aspect ratio alone, and thus high low-temperature input and output characteristics can be provided. In addition, it is considered that the graphite particles ($B_b$) having an aspect ratio of 5 or greater can come into contact with an electrolytic solution with efficiency, and intercalation and deintercalation of Li ions can be effectively performed, and thus the low-temperature input and output characteristics can be improved.

When the composite carbon particles appropriately have a void being in contact with the graphite particle ($A_b$) which is a core particle on an inner side in comparison to the composite particle layer including a plurality of the graphite particles ($B_b$) having an aspect ratio of 5 or greater as a shell layer, it is considered that the composite carbon particles are appropriately deformed during electrode pressing and filling occurs with efficiency, and it is possible to suppress breakage of the composite carbon particles during pressing and an excessive side reaction with an electrolytic solution due to the breakage which are problematic until now, and thus high capacity and high charging and discharging efficiency can be provided. On the other hand, when the graphite particles ($A_b$) exist as core particles having an appropriate size with respect to the composite carbon material, it is considered that it is possible to suppress clogging of a Li-ion diffusion path due to excessive deformation and collapsing of the composite carbon particles during electrode pressing, and thus excellent discharging load characteristics can be provided.

When using the composite carbon material of the invention C as a negative electrode active material for a non-aqueous secondary battery, it is possible to provide a non-aqueous secondary battery having high capacity, and excellent output characteristics, cycle characteristics, and pressing properties.

The reason why the carbon material according to the invention C exhibits the above-described effect is considered as follows. Specifically, a situation in which the volume-based average particle size of the carbon material varies by 0.8 $\mu$m or greater before and after the ultrasonic treatment represents that the carbon material are composite particles constituted by a plurality of particles and have a structure having an appropriate void in the composite particles. As a result, it is considered that an intrusion path of an electrolytic solution and Li ions into the particles is secured during charging and discharging, and the electrolytic solution or the Li ions can smoothly and uniformly spread in the particles, and thus high capacity and excellent output characteristics can be obtained. In addition, in the case where a binding force between materials, which constitute the composite particles, is weak (for example, in the case of composite particles of artificial graphite and natural graphite, and the like), it is considered that collapsing of the composite particles occurs with a relatively weak force during pressing, and thus high pressing properties can be obtained. In addition, it is considered that particles which are collapsed through the pressing function as a conductive auxiliary agent to maintain inter-particle conductivity after charging and discharging, and thus high cycle characteristics can be obtained.

When using the composite carbon particles and the composite carbon material including the composite carbon particles of the invention D as a negative electrode active material for a non-aqueous secondary battery, it is possible to stably provide a lithium secondary battery that has high capacity and is excellent in charging and discharging load characteristics, low-temperature output characteristics, and productivity with efficiency.

A mechanism in which the composite carbon particles of the invention D exhibit excellent battery characteristics is not clear. However, from a result of the investigation made by the present inventors, it is considered that the excellent battery characteristics are exhibited due to the following effect.

When the volume-based average particle size (d50) is set to 5 to 40 $\mu$m, it is possible to suppress aggregation between composite particles, and thus it is possible to prevent occurrence of a problem such as rising of a slurry viscosity and a decrease in electrode strength which are related to a process. In addition, when compositing the graphite particles ($A_d$) having d50 smaller than that of a composite carbon material by applying any one mechanical energy among at least an impact force, a compressive force, a frictional force, and a shear force without using a binder that buries a void, it is possible to form a particle structure having a lot of fine pores in particles of the composite carbon material, and thus a mode diameter in a pore distribution obtained by a mercury intrusion method with respect to a powder can be set to 0.1 to 2 $\mu$m. According to this, it is considered that an electrolytic solution can migrate to a Li-ion absorbing and releasing site at the inside of composite carbon material particles with efficiency, and volume expansion and contraction during charging and discharging can be mitigated with the pores, and thus the high capacity, the charging and discharging load characteristics, and the low-temperature input and output characteristics can be improved.

According to the manufacturing method of the invention E, in a method of manufacturing a negative electrode material for a non-aqueous secondary battery which includes a process of granulating raw material graphite, it is possible to manufacturing the negative electrode material for a non-aqueous secondary battery in various types of particle structures. In addition, the method is capable of realizing a high-throughput, and is capable of stably manufacturing spheroidized graphite particles in which a particle size thereof is appropriately increased, the degree of spheroidization is high, filling properties are excellent, anisotropy is small, and the amount of fine powders is small.

The present inventors consider the reason why the above-described effect is exhibited as follows.

If a liquid adheres between a plurality of particles and a liquid bridge (representing a situation in which a bridge is formed between particles by the liquid) is formed through addition of the granulating agent, an attractive force, which occurs due to a capillary negative pressure on an inner side of the liquid bridge and surface tension of the liquid, acts as a liquid bridge adhesion force between particles. Accordingly, the liquid bridge adhesion force between raw material graphites increases, and thus the raw material graphites can more strongly adhere to each other. In addition, the granulating agent acts a lubricating material, and thus a particle size reduction of the raw material graphite is reduced. In addition, the majority of fine powders which occur in the granulation process adhere to the raw material graphite due to the effect of increasing the liquid bridge adhesion force, and thus independent particles as the fine powder are reduced.

From the results, it is possible to manufacture spheroidized graphite particles in which raw material graphites more strongly adhere to each other, a particle size appropriately increases, the degree of spheroidization is high, and the amount of fine powders is small.

In addition, in the case where the granulating agent includes an organic solvent, if the organic solvent does not have a flashing point, or when the organic solvent has the flashing point, if the flashing point is 5°C or higher, it is possible to prevent a risk of flashing, firing, or explosion of the granulating agent which is derived from impact or heat generation during the granulation process. As a result, it is possible to stably manufacture spheroidized graphite particles with efficiency.

The negative electrode material that is manufactured by the manufacturing method of the invention has a structure in which fine powders having a lot of Li-ion absorbing and releasing sites on a surface of particles and at the inside thereof. In addition, the negative electrode material has a structure in which a plurality of raw material graphites are granulated. Accordingly, it is possible to effectively and efficiently use Li-ion absorbing and releasing sites which exist not only at an outer periphery of particles but also at the inside of the particles. From these results, it is considered that when the negative electrode material obtained by the invention is used in a non-aqueous secondary battery, excellent input and output characteristics can be obtained.

BRIEF DESCRIPTION OF THE DRAWINGS

[Fig. 1]

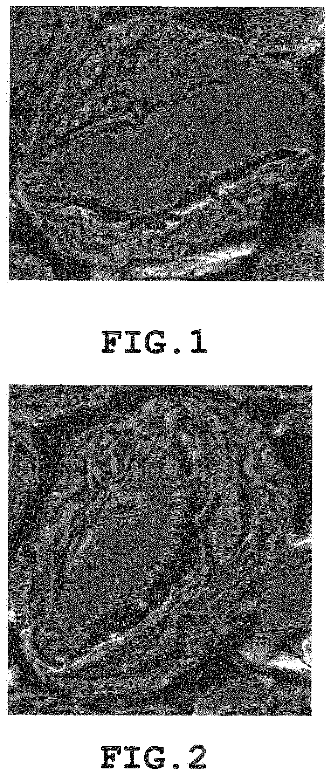

Fig. 1 is a cross-sectional SEM image of Experimental Example A1 (drawing-substituting photograph).
[Fig. 2]
Fig. 2 is a cross-sectional SEM image of Experimental Example A2 (drawing-substituting photograph).
[Fig. 3]

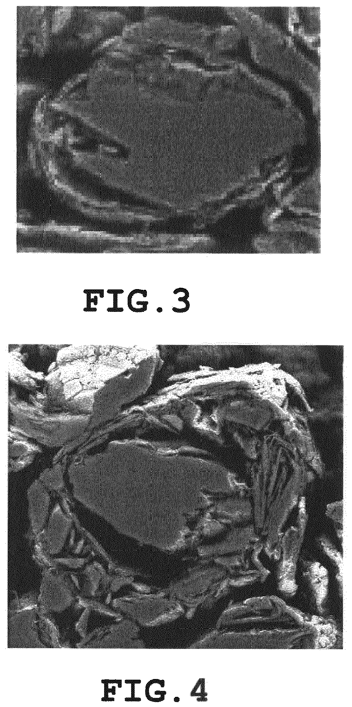

Fig. 3 is a cross-sectional SEM image of Experimental Example A3 (drawing-substituting photograph).
[Fig. 4]
Fig. 4 is a cross-sectional SEM image of composite carbon particles of Experimental Example B1 (drawing-substituting photograph).
[Fig. 5]

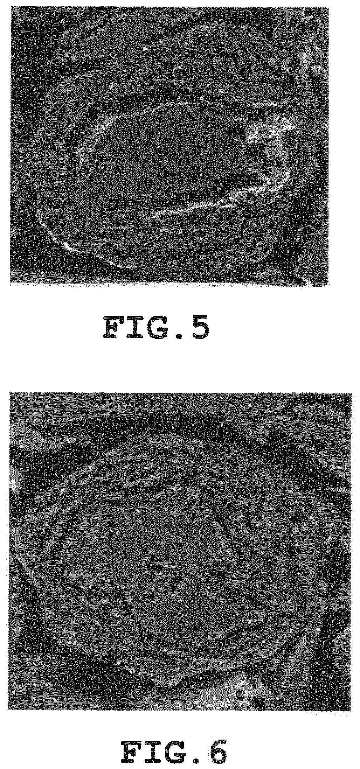

Fig. 5 is a cross-sectional SEM image of composite carbon particles of Experimental Example B2 (drawing-substituting photograph).
[Fig. 6]
Fig. 6 is a cross-sectional SEM image of composite carbon particles of Experimental Example B4 (drawing-substituting photograph).
[Fig. 7]

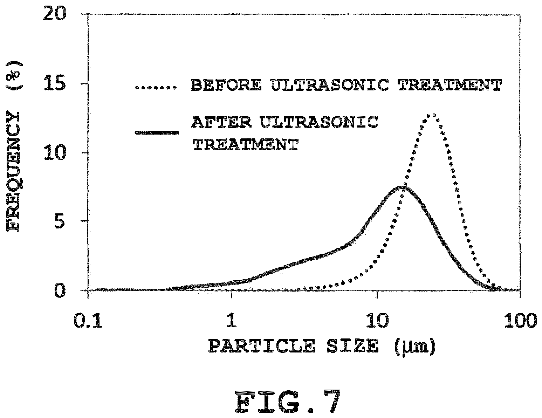

Fig. 7 is a graph illustrating a particle size distribution of Experimental Example C1 before and after an ultrasonic treatment.
[Fig. 8]

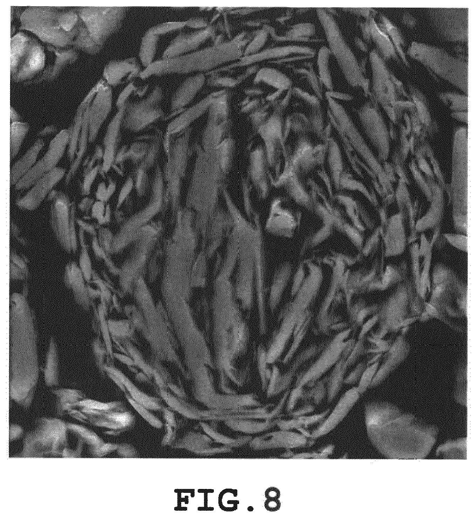

Fig. 8 is a cross-sectional SEM image of composite carbon particles of Experimental Example D2 (drawing-substituting photograph).
[Fig. 9]

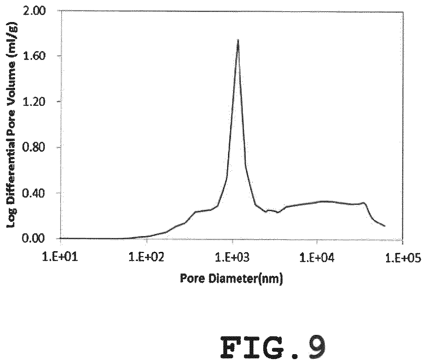

Fig. 9 is a diagram illustrating an example of a pore distribution diagram according to an embodiment (for example, invention D, but there is no limitation thereto) of the invention.

[Description of Embodiments]

Hereinafter, the contents of the invention will be described in detail. Furthermore, the following description of constituent elements of the invention is an example (representative example) of embodiments of the invention, and there is no limitation to the embodiments in a range not departing from the gist of the invention. In addition, respective embodiments can be executed in combination unless otherwise stated.

As an aspect of a composite carbon material for a non-aqueous secondary battery of the invention, there is provided a composite carbon material which contains at least a bulk mesophase artificial graphite particle ($A_a$) and a graphite particle ($B_a$) having an aspect ratio of 5 or greater, and is capable of absorbing and releasing lithium ions. A graphite crystal layered structure of the graphite particle ($B_a$) is arranged in the same direction as that of an outer peripheral surface of the bulk mesophase artificial graphite particle ($A_a$) at a part of a surface of the bulk mesophase artificial graphite particle ($A_a$), and an average circularity is 0.9 or greater. Here, the arrangement in the same direction as that of the outer peripheral surface represents that when a cross-sectional shape of the composite carbon material is observed, a crystal plane (AB plane) of the graphite crystal layered structure of the graphite particle $(B_a)$ conforms to an approximately peripheral direction of the bulk mesophase artificial graphite particle $(A_a)$ that is close to the crystal plane.

An aspect in which the graphite crystal layered structure of the graphite particle $(B_a)$ is arranged in the same direction as that of the outer peripheral surface of the bulk mesophase artificial graphite particle $(A_a)$ can be observed on a cross-sectional SEM image of the composite carbon material for a non-aqueous secondary battery. A specific observation method is as follows. When observing the SEM image, if a perpendicular line drawn to the center of a major axis of the graphite particle $(B_a)$ in the vicinity of a surface of the bulk mesophase artificial graphite particle $(A_a)$ and a tangential line at a point at which the perpendicular line intersect the outer periphery of the bulk mesophase artificial graphite particle $(A_a)$ intersect each other within an angle of $90°\pm45°$, the graphite particle $(B_a)$ can be considered as follows. That is, the graphite crystal layered structure of the graphite particle $(B_a)$ is arranged in the same direction as that of the outer peripheral surface of the bulk mesophase artificial graphite particle $(A_a)$. The angle is preferably within $90°\pm40°$, and more preferably $90°\pm30°$.

In addition, a ratio of the graphite particles $(B_a)$ which exist on the surface of the bulk mesophase artificial graphite particles $(A_a)$ and are arranged in the same direction as that of the outer peripheral surface of the bulk mesophase artificial graphite particles $(A_a)$ (the number of the graphite particles $(B_a)$ arranged in one particle of the composite carbon material/the graphite particles $(B_a)$ in one particle of the composite carbon material $\times$ 100) is typically 50% or greater in one particle of the composite carbon material, preferably 60% or greater, and still more preferably 70% or greater. In addition, the ratio is typically 100% or less.

In addition, as another aspect of the composite carbon material for a non-aqueous secondary battery of the invention, there is provided a carbon material including composite carbon particles which have a core-shell structure with graphite particles $(A_b)$ set as core particles and which are capable of absorbing and releasing lithium ions.

In the composite carbon material according to the aspect, on a backscattered electron image obtained by observing a particle cross-section with a scanning electron microscope (SEM) at an acceleration voltage 10 kV, a relationship between a major axis and a minor axis of the particle cross-section that is not compressed, and an average particle size d50 satisfies the following Expression (B1). In addition, when randomly selecting 30 composite carbon particles having an aspect ratio of 3 or less (composite carbon particles having a core-shell structure with a graphite particle $(A_b)$ set as a core particle and being capable of absorbing and releasing lithium ions), the number of the composite carbon particles, which exist in the 30 particles and in which a void cross-sectional area and a cross-sectional area of the core particles are in a specific range, are preferably 10 or greater, more preferably 15 or greater, and still more preferably 20 or greater. In the case where the number of particles is excessively small, deterioration of filling properties, and deterioration of charging and discharging efficiency and discharging load characteristics tend to occur.

$$\text{Expression (B1)} \quad R/2 \leq (A_b+B_b)/2 \leq 2R$$

(in Expression (B1), $A_b$ represents a major axis ($\mu$m), $B_b$ represents a minor axis ($\mu$m), and R represents an average particle size d50 ($\mu$m))

Furthermore, when three-dimensionally observing particles, the major axis and the minor axis are respectively defined as the longest diameter A (major axis) of the particles and the longest diameter $B_b$ (minor axis) among diameters perpendicular to the major axis.

In addition, as an aspect of the composite carbon material of the invention, on a backscattered electron image obtained by observing a particle cross-section with a scanning electron microscope (SEM) at an acceleration voltage 10 kV, an average value of the sums of void cross-sectional areas, which are calculated by the following Condition (B1), is 15% or greater, preferably 20% or greater, more preferably 23% or greater, and still more preferably 25% or greater. The average value is typically 100% or less, preferably 70% or less, more preferably 50% or less, and still more preferably 40% or less. In the case where the average value of the sums of the void cross-sectional areas is excessively small, breakage of the composite carbon particles during pressing and an excessive side reaction with an electrolytic solution due to the breakage occur, and capacity and charging and discharging efficiency decrease. On the other hand, in the case where the void cross-sectional area of a void being in contact with the core particles is excessively large, the strength of the composite carbon particles decreases, and thus the core particles and the shell layer are separated from each other and are pulverized due to kneading and the like when preparing an electrode. As a result, discharging capacity, charging and discharging efficiency, and discharging load characteristics tend to deteriorate.

Condition (B1)

Among the composite carbon particles (composite carbon particles which have a core-shell structure with graphite particles $(A_b)$ set as a core particle and which are capable of absorbing and releasing lithium ions) contained in the composite carbon material, 20 particles, in which the ratio of the area occupied by a core particle in a cross-sectional area of a composite carbon particle is 15% to 70%, are randomly selected. In the respective particles, the sums of cross-sectional areas of voids, of which a cross-sectional area is 3% or greater of the cross-sectional area of the core particles and which are in contact with the core particles, are respectively calculated. An average value of 10 particles, which remain after excluding five particles exhibiting a greater value of the sum of the void cross-sectional areas, and five particles exhibiting a smaller value of the sum of the void cross-sectional areas, is set as the average value of the sums of the void cross-sectional areas.

As an aspect of the composite carbon material for a non-aqueous secondary battery of the invention, when performing an ultrasonic treatment by the following method, a volume-based average particle size of the composite carbon material varies by 0.8 $\mu$m or greater before and after the ultrasonic treatment.

(Ultrasonic Treatment Method)

A dispersion obtained by uniformly dispersing 100 mg of carbon material in 30 ml of water is put into a columnar polypropylene container in which the bottom has a radius of 2 cm, a columnar chip, which has a radius of 3 mm, of 20 kHz ultrasonic homogenizer, is immersed in the dispersion to a depth of 2 cm or greater, and the dispersion is irradiated with ultrasonic waves for 10 minutes at an output of 15 W while maintaining the dispersion at 10°C to 40°C.

In addition, as an aspect of the composite carbon material for a non-aqueous secondary battery of the invention, a plurality of graphite particles ($A_d$) capable of absorbing and releasing lithium ions are composited, and a mode diameter in a pore distribution obtained by a mercury intrusion method with respect to a powder is preferably 0.1 to 2 $\mu$m, and a volume-based average particle size (d50) is preferably 5 to 40 $\mu$m. Furthermore, the compositing here represents that the composite carbon material for a non-aqueous secondary battery includes at least two or greater graphite particles ($A_d$). When the composite carbon material for a non-aqueous secondary battery includes a plurality of the graphite particles ($A_d$), a fine pore is likely to be formed in particles of the composite carbon material for a non-aqueous secondary battery, and thus an effect of the invention tends to be more easily exhibited.

The composite carbon material for a non-aqueous secondary battery of the invention satisfies at least one of the above-described aspects.

Hereinafter, description will be given of components which constitute the composite carbon material for a non-aqueous secondary battery of the invention.

<Graphite Particles (A)>

In this specification, graphite particles including graphite particles ($A_a$) to ($A_e$) are described as graphite particles (A).

Examples of the graphite particle (A) include natural graphite, artificial graphite, and the like. Among these, the artificial graphite particles, particularly, bulk mesophase artificial graphite particles are preferable from the viewpoint that the bulk mesophase artificial graphite particles have a structure having fewer defects in a graphite surface, and having fewer voids closely clogged on an inner side of the particles, and thus the bulk mesophase artificial graphite particles have characteristics in which cycle characteristics, high-temperature storage characteristics, and stability are more excellent in comparison to natural graphite.

Here, the bulk mesophase artificial graphite particles represent artificial graphite particles which are manufactured by graphitizing coke, which is obtained by subjecting a pitch raw material such as coal-tar pitch and petroleum pitch to a heat treatment, at a predetermined temperature. More specifically, when the pitch raw material such as the coal-tar pitch and the petroleum pitch is subjected to a high-temperature treatment, thermal decomposition and a polycondensation reaction occurs. According to this, microspheres which are called mesophase are generated, and a bulk mesophase that becomes a large matrix through aggregation of the microspheres is called a bulk mesophase. The bulk mesophase artificial graphite is a general term of materials obtained by graphitizing the bulk mesophase.

Among a plurality of kinds of the bulk mesophase artificial graphite, artificial graphite particles obtained by graphitizing mosaic coke in which growth of an optical anisotropic structure - a constituent - is not great, or artificial graphite particles obtained by graphitizing needle coke in which the optical anisotropic structure greatly grows are preferable. The artificial graphite particles obtained by graphitizing needle coke in which the optical anisotropic structure greatly grows are more preferable.

On the other hand, among the plurality of kinds of artificial graphite, a mesocarbon microbead is not preferable from the viewpoint that discharging capacity is low, compressibility is deficient, and a separation process such as solvent extraction is complicated, and thus productivity is low. The mesocarbon microbead is obtained by separating a mesophase microsphere, which is generated in a carbonization process of the pitch raw material such as the coal-tar pitch and the petroleum pitch, from the pitch matrix.

Examples of a difference between the bulk mesophase artificial graphite particles and the mesocarbon microbead include unevenness of a cross-section, and anisotropy of a crystal structure observed with a polarization microscope.

With regard to the difference in the unevenness of the cross-section, since the bulk mesophase artificial graphite particles are used by pulverizing a large matrix, and thus unevenness due to the pulverization is confirmed on a particle surface. On the other hand, the mesocarbon microbead is obtained by separating the mesophase microsphere from the pitch matrix. Typically, the mesocarbon microbead is not subjected to a pulverization process when being manufactured, and thus a surface thereof is smooth.

With regard to the difference in the anisotropy of the crystal structure observed with the polarization microscope, the bulk mesophase artificial graphite particles are aggregates of the mesophase carbon, and thus the bulk mesophase artificial graphite particles have a structure in which a plurality of optically anisotropic lamination regions (referred to as anisotropic domains in the invention) are aggregated in a layered shape having the same orientation direction. On the other hand, in the mesocarbon microbead, the whole particles have substantially the same orientation direction. That is, the mesocarbon microbead is a particle that is constituted by one anisotropic domain, and the bulk mesophase artificial graphite particles are aggregates of a number of anisotropic domains.

<Physical Properties of Graphite Particles (A)>

• Average Particle Size d50

In this specification, the average particle size (also described as a volume-based average particle size) d50 represents a median diameter (d50) in a volume-based particle size distribution obtained through laser diffraction and scattering method particle size distribution measurement.

In an embodiment (for example, the invention A, the invention B, and the invention C, but there is no limitation thereto) of the invention, the average particle size d50 of the graphite particles (A) is preferably 1 to 60 $\mu$m, more preferably 3 to 30 $\mu$m, and still more preferably 5 to 15 $\mu$m. When the average particle size d50 is in the above-described range, a tap density becomes high. Accordingly, when manufacturing an electrode, a filling density of an active material increases, and thus it is easy to obtain a high-capacity battery. In addition, when manufacturing an electrode through application, coating unevenness is less likely to occur.

In addition, in an arbitrary embodiment (for example, invention D, but there is no limitation thereto) of the invention, the average particle size d50 of the graphite particles (A) is preferably 1 $\mu$m or greater, more preferably 1.5 $\mu$m or greater, still more preferably 1.7 $\mu$m. or greater, and particularly preferably 2 $\mu$m or greater. In addition, the average particle size d50 is preferably 20 $\mu$m or less, more preferably 10 $\mu$m or less, still more preferably 7 $\mu$m or less, particularly preferably 5 $\mu$m or less, and most preferably 4 $\mu$m or less. When the average particle size d50 is in the above-described range, a dense void structure can be provided in the composite carbon particles, and thus it is easy to obtain a non-aqueous secondary battery that has high capacity, and excellent charging and discharging load characteristics and low-temperature input and output. In addition, an increase in a slurry viscosity and coating unevenness during electrode coating are less likely to occur.

As the volume-based particle size distribution, a value, which is measured with a laser diffraction type particle size distribution meter (for example, LA-700, manufactured by Horiba, Ltd.), can be used. The measurement is performed in a state in which 2% by volume of aqueous solution (approximately 1 ml) of polyoxyethylene(20)sorbitan monolaurate that is a surfactant is mixed in a graphite negative electrode material, and a value is used, which is obtained with ion-exchanged water being a dispersion medium. The average particle size (median diameter) is measured from a volume-based particle size distribution 50% particle size (d50).

• Minimum Particle Size (dmin), Maximum Particle Size (dmax)

In an embodiment (for example, the invention A, the invention B, and the invention C, but there is no limitation thereto) of the invention, the minimum particle size (dmin) of the graphite particles (A) is preferably 3.5 $\mu$m or greater, and more preferably 4.0 $\mu$m or greater. In addition, the maximum particle size (dmax) of the graphite particles (A) is preferably 150.0 $\mu$m or less, and more preferably 140.0 $\mu$m or less. When the minimum particle size (dmin) is in the above-described range, the amount of fine powders is not great, and it is possible to suppress an increase in a specific surface area. Accordingly, an increase in irreversible capacity tends to be suppressed. In addition, when the maximum particle size (dmax) is in the above-described range, the amount of rough powders is not great, and it is easy to obtain a flat surface when manufacturing an electrode. Accordingly, it is possible to obtain excellent battery characteristics.

In addition, in an arbitrary embodiment (for example, invention D, but there is no limitation thereto) of the invention, the minimum particle size (dmin) of the graphite particles (A) is preferably 0.1 $\mu$m or greater, and more preferably 0.2 $\mu$m or greater. In addition, the maximum particle size (dmax) is typically 100 $\mu$m or less, preferably 50 $\mu$m or less, and more preferably 30 $\mu$m or less. When the minimum particle size (dmin) and the maximum particle size (dmax) are in the above-described ranges, it is possible to introduce a pore structure having an appropriate diameter into the composite carbon material particles, and thus good charging and discharging load characteristics and low-temperature input and output tend to be exhibited.

As is the case with the volume-based average particle size, the minimum particle size (dmin) and the maximum particle size (dmax) can be measured from a volume-based particle size distribution obtained through the laser diffraction and scattering particle size distribution measurement by using the laser diffraction type particle size distribution meter.

• Tap Density

In an embodiment (for example, the invention A, the invention B, and the invention C, but there is no limitation thereto) of the invention, the tap density of the graphite particles (A) is preferably 0.90 to 1.60 g/cm$^3$, and more preferably 1.00 to 1.50 g/cm$^3$. When the tap density is in the above-described range, a filling density of an active material is improved, and thus it is possible to obtain a high-capacity battery.

In addition, in an arbitrary embodiment (for example, the invention D, but there is no limitation thereto) of the invention, the tap density of the graphite particles (A) is preferably 0.40 to 1.50 g/cm$^3$, and more preferably 0.60 to 1.00 g/cm$^3$. When the tap density is in the above-described range, a filling density of an active material is improved, and thus it is possible to obtain a high-capacity battery.

With regard to the tap density, a graphite material is dropped into a tapping cell of 20 cm$^3$ by using a sieve having an aperture of 300 $\mu$m to fully fill the cell, and then tapping is performed 1000 times in a stroke length of 10 mm by using a powder density measuring device (for example, a tap denser manufactured by Seishin Enterprise Co., Ltd.). A value obtained by measuring tapping density at that time can be used as the tap density.

• Interplanar Spacing d$_{002}$

In the graphite particles (A), an interplanar spacing d$_{002}$ of a (002) plane, which is measured by X-ray diffraction, is preferably 0.36 nm or less, more preferably 0.345 nm or less, and still more preferably 0.341 nm or less.

When the interplanar spacing d$_{002}$ is in the above-described range, that is, in the case where crystallinity becomes high, when an electrode is manufactured, discharging capacity per unit weight in an active material increases. On the other hand, as a theoretical limit, the lower limit of the interplanar spacing d$_{002}$ is typically 0.3354 nm or greater.

In addition, in the graphite particles (A), a crystallite size Lc in a c-axis direction, which is measured by X-ray diffraction, is preferably 10 nm or greater, and more preferably 20 nm or greater. When the crystallite size Lc is in the above-described range, when manufacturing an electrode by using the composite carbon material of the invention, discharging capacity per weight of an active material increases.

As the interplanar spacing d$_{002}$ and the crystallite size Lc which are respectively measured by the X-ray diffraction, values, which are measured in accordance with "Gakushin" method of the Carbon Society of Japan, can be used. In addition, in the "Gakushin" method, value greater than 100 nm (1000 A) are described as ">1000 (Å)" without discrimination.

<Graphite Particles (B)>

In this specification, graphite particles including graphite particles (B$_a$) to (B$_e$) are described as graphite particles (B).

In the invention, the graphite particles (B) also include carbonaceous substances in which the degree of graphitization is low in addition to natural graphite and artificial graphite. Among these, graphite is preferable from the viewpoint that the graphite is commercially and easily available and has charging and discharging capacity as high as 372 mAh/g in theoretical, and an effect of improving charging and discharging characteristics at a high current density is greater in comparison to a case of using another negative electrode active material. As the graphite, graphite in which impurities are less is preferable, and the graphite can be used after being subjected to various known purification treatments as necessary. In addition, the natural graphite is more preferable from the viewpoint of good charging and discharging characteristics at high capacity and a high current density.

The natural graphite is classified into squamous graphite (flake graphite), scale-like graphite (crystalline graphite), bulk graphite (vein graphite), and soil graphite (amorphous graphite) (refer to a paragraph of graphite "Encyclopedia of Powder Process Industry and Technology" (issued in 1974 by Sangyo Gijutu Senta), and "HANDBOOK OF CARBON, GRAPHITE, DIAMOND AND FULLERENES" (issued by NoyesPubLications)) in accordance with properties. The degree of graphitization of the scale-like graphite or the bulk graphite is the highest as 100%, and the degree of graphitization of the squamous graphite is as high as 99.9%, and thus these kinds of graphite are appropriate in the invention. Among these, graphite in which impurities are less is preferable, and the graphite can be used after being subjected to various known purification treatments as necessary.

A producing area of the natural graphite is Madagascar, China, Brazil, Ukraine, Canada, and the like, and a producing area of the scale-like graphite is mainly Sri Lanka. A main producing area of the soil graphite is the Korean peninsula, China, Mexico, and the like. Examples of the natural graphite include scale-like natural graphite, squamous natural graphite, bulk natural graphite, highly purified squamous graphite, and the like.

Examples of the artificial graphite include graphite obtained by baking organic materials such as coal-tar pitch, coal-based heavy oil, atmospheric residue oil, petroleum-based heavy oil, aromatic hydrocarbon, nitrogen-containing cyclic compound, sulfur-containing cyclic compound, polyphenylene, polyvinyl chloride, polyvinyl alcohol, polyacrylonitrile, polyvinyl butyral, natural polymers, polyphenylene sulfide, polyphenylene oxide, a furfuryl alcohol resin, a phenol- formaldehyde resin, and an imide resin, and by graphitizing the resultant material.

A baking temperature may be set to a range of 2500°C to 3200°C, and a silicon-containing compound, a boron- containing compound, and the like may be used as a graphitization catalyst during the baking.

In addition, the graphite particles (B) may include amorphous carbon, a graphite substance in which the degree of graphitization is low, other metals, and oxides thereof. Here, examples of the other metals include metals such as Sn, Si, Al, and Bi which can be alloyed with Li.

Typically, the amorphous carbon can be obtained by baking an organic material at a temperature lower than 2500°C. Examples of the organic material include coal-based heavy oil such as coal-tar pitch and dry distillation liquefied oil; straight heavy oil such as atmospheric residue oil and vacuum residue oil; petroleum-based heavy oil such as cracked heavy oil of ethylene tar and the like to be produced as a side product during thermal decomposition of crude oil, naphtha, and the like; aromatic hydrocarbon such as acenaphthylene, decacyclene, and anthracene; nitrogen-containing cyclic compounds such as phenazine and acridine; sulfur-containing cyclic compounds such as thiophene; aliphatic cyclic compounds such as adamantane; polyphenylene such as biphenyl and terphenyl; polyvinyl esters such as polyvinyl chloride, polyvinyl acetate, and polyvinyl butyral; thermoplastic polymers such as polyvinyl alcohol; and the like.

In accordance with the degree of graphitization of the carbonaceous substance particles, the baking temperature can be set to 600°C or higher, preferably 900°C or higher, and more preferably 950°C or higher. The baking temperature can be typically lower than 2500°C, preferably 2000°C or lower, and more preferably 1400°C or lower. In addition, in the baking, acids such as phosphoric acid, boric acid, and hydrochloric acid, and alkalis such as sodium hydroxide can be mixed in the organic material.

<Physical Properties of Graphite Particles (B)>

• Aspect Ratio

The aspect ratio of the graphite particles (B) is preferably 5 or greater, more preferably 7 or greater, still more preferably 10 or greater, and particularly preferably 15 or greater. In addition, the aspect ratio is typically 1000 or less, preferably 500 or less, more preferably 100 or less, and still more preferably 50 or less. When the aspect ratio is in the above-described range, it is possible to manufacture a composite carbon material for a non-aqueous secondary battery which is excellent in input and output characteristics.

In an embodiment (for example, the invention A and the invention B, but there is no limitation thereto) of the invention, it is important that the graphite crystal layered structure of the graphite particles (B) is arranged in the same direction as that of the outer peripheral surface of the graphite particles (A) at least at a part of the surface of the graphite particles (A). When the aspect ratio is in the above-described range, the graphite particles (B) are likely to be oriented in the same direction, and thus the graphite particles (B) is less likely to be peeled-off from the surface of the graphite particles (A). That is, it is possible to prevent a decrease in diffusibility of an electrolytic solution due to a situation in which the graphite particles (B) are peeled-off from the surface of the graphite particles (A) and are oriented in an electrode.

In the invention A and the invention D, in three-dimensional observation of carbon material particles, when the longest diameter is set as a diameter A (major axis) and the longest diameter among diameters perpendicular to the diameter A is defined as a diameter B (minor axis), the aspect ratio is expressed as A/B. The observation of the carbon material particles is performed with a scanning electron microscope capable of performing enlargement observation. Arbitrary 50 carbon material particles, which are fixed to an end surface of a metal having a thickness of 50 $\mu$m, are selected. Then, A and B are measured with respect to each of the carbon material particles by rotating and inclining a stage to which a sample is fixed, and an average value of A/B is obtained.

With regard to the aspect ratio in the invention B, a resin-embedded negative electrode material or a negative electrode is polished in a direction perpendicular to a flat plate, and a cross-section is photographed. With respect to 20 particles in a region that is randomly selected, when the longest diameter of the particles in observation is set as a diameter A (major axis) and the longest diameter among diameters perpendicular to the diameter A is set as a diameter B (minor axis), A/B is obtained. An average value of A/B with respect to the 20 particles is set as the aspect ratio.

• Average Particle Size d50

In an embodiment (for example, the invention A, the invention B, and the invention C, but there is no limitation thereto) of the invention, it is preferable that the average particle size d50 of the graphite particles (B) is smaller than the average particle size d50 of the graphite particles (A). Specifically, the average particle size d50 is preferably 1 $\mu$m or greater, more preferably 2 $\mu$m or greater, and particularly preferably 3 $\mu$m or greater. The average particle size d50 is preferably 100 $\mu$m or less, more preferably 80 $\mu$m or less, still more preferably 50 $\mu$m or less, still more preferably 35 $\mu$m or less, particularly preferably 20 $\mu$m or less, and most preferably 10 $\mu$m or less. When the average particle size d50 is in the above-described range, it is possible to prevent charging and discharging efficiency, an increase in the irreversible capacity, deterioration of the input and output characteristics, and deterioration of the cycle characteristics. On the other hand, when the average particle size d50 of the graphite particles (B) is equal to or greater than the average particle size d50 of the graphite particles (A), the graphite particles (B) are less likely to exist at the periphery of the graphite particles (A), and the graphite particles (B) are less likely to adhere to the surface of the graphite particles (A), and thus the graphite particles (B) that independently exist tends to increase.

In addition, in one embodiment (for example, the invention D, but there is no limitation thereto) of the invention, it is preferable that the average particle size d50 of the graphite particles (B) is smaller than the average particle size d50 of the graphite particles (A). Specifically, the average particle size d50 is preferably 1 $\mu$m or greater, more preferably 2 $\mu$m or greater, and particularly preferably 3 $\mu$m or greater. The average particle size d50 is preferably 40 $\mu$m or less, more preferably 20 $\mu$m or less, still more preferably 10 $\mu$m or less, still more preferably 8 $\mu$m or less, and particularly preferably 7 $\mu$m or less. When the average particle size d50 is in the above-described range, it is possible to prevent a decrease in the charging and discharging efficiency, the charging and discharging load characteristics, the low-temperature input and output characteristics, and the cycle characteristics.

• Ash Content

The ash content in the graphite particles (B) is preferably 1% by mass or less on the basis of the total mass of the carbon materials, more preferably 0.5% by mass or less, and still more preferably 0.1% by mass or less. In addition, the lower limit of the ash content is preferably at least 1 ppm.

When the ash content is contained in the above-described range, in the case of a non-aqueous secondary battery, it is possible to suppress deterioration of battery performance due to a reaction between the carbon material and the electrolytic solution during charging and discharging to a negligible extent. In addition, there is no necessity for a lot of time and energy, and a facility for prevention of pollution in manufacturing of the carbon material, and thus it is possible to suppress an increase in the cost.

• Interplanar spacing d$_{002}$

In the graphite particles (B), an interplanar spacing d$_{002}$ of a (002) plane, which is measured in accordance with an X-ray wide angle diffraction method, is typically 0.337 nm or less, and preferably 0.336 nm or less. The crystallite size Lc is typically 90 nm or greater, and preferably 95 nm or greater. The interplanar spacing d$_{002}$ and the crystallite size Lc are values representing crystallinity of a negative electrode material bulk. As the value of the interplanar spacing d$_{002}$ of a (002) plane is smaller and the crystallite size Lc is larger, a negative electrode material has high crystallinity, and the amount of lithium that enters between graphite layers approximates to a theoretical value, and thus capacity increases. When the crystallinity is low, in the case of using high-crystallinity graphite in an electrode, excellent battery characteristics (high capacity and low irreversible capacity) are not exhibited. Particularly, with regard to the interplanar spacing d$_{002}$ and the crystallite size Lc, it is preferable that the ranges are combined. The X-ray diffraction is measured by the following method. A material is prepared by adding an X-ray standard high-purity silicon powder to carbon powder in an amount of approximately 15% by mass on the basis of the total amount, and by mixing the carbon powder and the silicon powder. A CuK$\alpha$-ray, which is made to be monochromatic with a graphite monochromer, is set as a ray source, and a wide angle X-ray diffraction curve is measured by a reflection-type diffractometer method. Then, the interplanar spacing d$_{002}$ and the crystallite size Lc are obtained by using the "Gakushin" method.

• Tap Density

A filling structure of the graphite particles (B) depends on a size and a shape of particles, a force of interaction between particles, and the like. However, in this specification, a tap density is also applicable as an index for quantitatively determining the filling structure. According to an examination made by the present inventors, in graphite particles having approximately the same true density and volume average particle size, when the shape is a spherical shape and a particle surface is flat, it is confirmed that the tap density exhibits a high value. That is, so as to increase the tap density, it is important to maintain smoothness by making the shape of the particles be rounded and be close to a spherical shape, and by removing a fine split and a loss of the particle surface. When the particle shape is close to the spherical shape and the particle surface is flat, filling properties of powders are greatly improved. The tap density of the graphite particles (B) (for example, squamous graphite) before the graphite particles (B) are composited into the composite carbon particles is typically 0.1 $g/cm^3$ or greater, preferably 0.15 $g/cm^3$ or greater, more preferably 0.2 $g/cm^3$ or greater, and still more preferably 0.3 $g/cm^3$ or greater.

• Raman R Value

In one embodiment (for example, the invention A, but there is no limitation thereto) of the invention, argon ion laser Raman spectrum of the graphite particles (B) is used as an index indicating properties of a particle surface. The Raman R value, which is a ratio of the peak intensity in the vicinity of 1360 $cm^{-1}$ to the peak intensity in the vicinity of 1580 $cm^{-1}$ in the argon ion laser Raman spectrum of the graphite particles (B), is typically 0.05 to 0.9, preferably 0.05 to 0.7, and more preferably 0.05 to 0.5.

In addition, in an embodiment (for example, the invention C and the invention D, but there is no limitation thereto) of the invention, the Raman R value of the graphite particles (B) is typically 0.01 to 0.9, preferably 0.01 to 0.7, and more preferably 0.01 to 0.5.

The Raman R value is an index indicating crystallinity of carbon particles in the vicinity of a surface thereof (up to approximately 100 Å from the particle surface). The smaller the Raman R value is, the higher the crystallinity is, or the less crystal state disturbance is. The Raman spectrum is measured by the following method. Specifically, particles to be measured are naturally dropped into a Raman spectrometer measurement cell to fill the measurement cell with a sample. Measurement is performed in a state in which the measurement cell is rotated in a plane perpendicular to laser light while irradiating the inside of the measurement cell with argon ion laser light. Furthermore, a wavelength of the argon ion laser light is set to 514.5 nm.

• Specific Surface Area (SA)

The lower limit of a specific surface area of the graphite particles (B) in accordance with a BET method is typically 0.3 $m^2/g$ or greater, preferably 1 $m^2/g$ or greater, more preferably 3 $m^2/g$ or greater, and still more preferably 5 $m^2/g$ or greater. On the other hand, the upper limit of the specific surface is typically 50 $m^2/g$ or less, preferably 30 $m^2/g$ or less, more preferably 20 $m^2/g$ or less, and still more preferably 15 $m^2/g$ or less. When the specific surface area is in the above-described range, accepting properties of Li ions become better, and the charging and discharging load characteristics and the low-temperature input and output characteristics become better. In addition, an increase in irreversible capacity is suppressed, and thus it is possible to prevent a decrease in battery capacity.

<Composite Carbon Particles>

From an aspect of an embodiment of the invention, it is preferable that the composite carbon particles have a core-shell structure with the graphite particles (A) set as core particles, and are capable of absorbing and releasing lithium ions.

• Shell Layer

In this embodiment, it is preferable that a shell layer of composite carbon particles (for example, the invention B, but there is no limitation thereto) is a composite particle layer including a plurality of graphite particles ($B_b$) having an aspect ratio of 5 or greater.

When the graphite particles ($B_b$) exist in the shell layer, it is considered that it is possible to suppress orientation in an electrode and a decrease in diffusibility of an electrolytic solution which are problematic in the case of adding graphite particles having a high aspect ratio alone, and thus high low-temperature input and output characteristics can be provided. In addition, it is considered that the graphite particles ($B_a$) having an aspect ratio of 5 or greater can come into contact with an electrolytic solution with efficiency, and intercalation and deintercalation of Li ions can be effectively performed, and thus excellent low-temperature input and output characteristics can be provided.

Furthermore, "including the plurality of graphite particles ($B_b$)" stated here represents that the shell layer includes at least two or greater graphite particles ($B_b$). It is preferable that the shell layer includes the graphite particles ($B_b$) in the amount of 1% by mass or greater with respect to the graphite particles ($A_b$), more preferably 3% by mass or greater with respect to the graphite particles ($A_b$), still more preferably 5% by mass or greater with respect to the graphite particles ($A_b$), and particularly preferably 10% by mass or greater with respect to the graphite particles ($A_b$). When the graphite particles ($B_b$) are included in the above-described range, exposure of the core particles is suppressed, and thus the effect of the invention tends to be easily exhibited.

In addition, the shell layer may include artificial graphite particles (C) or amorphous carbon which has the average particle size d50 smaller than that of the graphite particles ($A_b$), a graphite substance in which the degree of graphitization is small, carbon fine particles, other metals, and oxides thereof in addition to the graphite particles ($B_b$) having an aspect ratio of 5 or greater. Here, examples of the other metals include metals such as Sn, Si, Al, and Bi which can be alloyed with Li.

Among these, it is preferable that the shell layer contains the artificial graphite particles (C) having the average particle size d50 smaller than that of the graphite particles ($A_b$). The artificial graphite particles (C) contained in the shell layer may be a fine powder that is generated from a precursor of the graphite particles ($A_b$) during a compositing process, may be adjusted to include a fine powder simultaneously with adjustment of squamous graphite particle size, or may be separately added and mixed at appropriate timing.

When the shell layer contains the artificial graphite particles (C), an electrolytic solution uniformly spreads to the surface of the graphite particles ($B_b$) adhered to the graphite particles ($A_b$), and the surface of graphite particles ($A_b$) in an effective and efficient manner, and thus it is possible to efficiently use Li-ion absorbing and releasing sites. Accordingly, good low-temperature input and output characteristics and cycle characteristics tend to be exhibited.

Typically, the amorphous carbon can be obtained by baking an organic material at a temperature lower than 2500°C. Examples of the organic material include coal-based heavy oil such as coal-tar pitch and dry distillation liquefied oil; straight heavy oil such as atmospheric residue oil and vacuum residue oil; petroleum-based heavy oil such as cracked heavy oil of ethylene tar and the like to be produced as a side product during thermal decomposition of crude oil, naphtha, and the like; aromatic hydrocarbon such as acenaphthylene, decacyclene, and anthracene; nitrogen-containing cyclic compounds such as phenazine and acridine; sulfur-containing cyclic compounds such as thiophene; aliphatic cyclic compounds such as adamantane; polyphenylene such as biphenyl and terphenyl; polyvinyl esters such as polyvinyl chloride, polyvinyl acetate, and polyvinyl butyral; thermoplastic polymers such as polyvinyl alcohol; and the like.

In accordance with the degree of graphitization of the carbonaceous substance particles, the baking temperature can be set to 600°C or higher, preferably 900°C or higher, and more preferably 950°C or higher. The baking temperature can be typically lower than 2500°C, preferably 2000°C or lower, and more preferably 1400°C or lower. In addition, in the baking, acids such as phosphoric acid, boric acid, and hydrochloric acid, and alkalis such as sodium hydroxide can be mixed in the organic material.

Examples of the carbon fine particles include carbon black such as acetylene black, Ketjen black, and furnace black.

• Cross-Sectional Area of Core Particles

With regard to the composite carbon particles of this embodiment (for example, the invention B, but there is no limitation thereto), on a backscattered electron image obtained by observing a particle cross-section of the composite carbon particles with a scanning electron microscope (SEM) at an acceleration voltage 10 kV, the ratio of the area occupied by the core particle in the cross-sectional area of the composite carbon particle is 15% or greater of, preferably 20% or greater, more preferably 23% or greater, and still more preferably 25% or greater. On the other hand, the ratio of occupied by the core particle in the cross-sectional area of a composite carbon particle is 70% or less , preferably 60% or less, still more preferably 50% or less, and still more preferably 40% or less. In the case where the cross-sectional area of the core particles is excessively great, the composite carbon particles cannot be appropriately deformed. Accordingly, the composite carbon particles are broken during electrode pressing, and thus the charging and discharging efficiency decreases. On the other hand, when the cross-sectional area of the core particles is excessively small, the composite carbon particles are excessively deformed and collapsed during electrode pressing. Accordingly, a Li-ion diffusion path is clogged, and thus the discharging load characteristics and the cycle characteristics tend to deteriorate.

A method of measuring the cross-sectional area of the core particles will be described later.

• Void Cross-sectional Area of Void That is in Contact with Core Particle

With regard to the composite carbon particles of this embodiment (for example, the invention B, but there is no limitation thereto), on a backscattered electron image obtained by observing a particle cross-section of the composite carbon particles with a scanning electron microscope (SEM) at an acceleration voltage 10 kV, at least one void, of which a cross-sectional area is 3% or greater of the cross-sectional area of the core particles and which is in contact with the core particles, is formed on an inner side in comparison to the shell layer.

The void cross-sectional area of a void being in contact with the core particles is 3% or greater of the cross-sectional area of the core particles in terms of an area ratio, preferably 7% or greater, more preferably 10% or greater, and still more preferably 12% or greater. The void cross-sectional area is typically 70% or less of the cross-sectional area of the core particles, preferably 50% or less, more preferably 35% or less, and still more preferably 25% or less.

In the case where the void cross-sectional area of a void being in contact with the core particles is excessively small, breakage of the composite carbon particles during pressing and an excessive side reaction with an electrolytic solution due to the breakage occur, and capacity and charging and discharging efficiency decrease. On the other hand, in the case where the void cross-sectional area of a void being in contact with the core particles is excessively large, the strength of the composite carbon particles decreases, and thus the core particles and the shell layer are separated from each other and are pulverized due to kneading and the like when preparing an electrode. As a result, discharging capacity, charging and discharging efficiency, and discharging load characteristics tend to deteriorate.

A method of measuring the void cross-sectional area of a void being in contact with the core particle will be described later.

• Sum of Void Cross-Sectional Area of Void That is in Contact with Core Particles

In the composite carbon particles of this embodiment (for example, the invention B, but there is no limitation thereto), the sum of the void cross-sectional area of a void being in contact with the core particles is 15% or greater of a cross-sectional area of the core particles in terms of an area ratio, preferably 20% or greater, more preferably 23% or greater, and still more preferably 25% or greater. In addition, the sum of the void cross-sectional area of a void is typically 100% or less of the cross-sectional area of the core particles, preferably 70% or less, more preferably 50% or less, and still more preferably 40% or less.

In the case where the sum of the void cross-sectional area of a void being in contact with the core particle is excessively small, breakage of the composite carbon particles during pressing and an excessive side reaction with an electrolytic solution due to the breakage occur, and capacity and charging and discharging efficiency decrease. On the other hand, in the case where the sum of the void cross-sectional area of a void being in contact with the core particle is excessively large, the strength of the composite carbon particles decreases, and thus the core particles and the shell layer are separated from each other and are pulverized due to kneading and the like when preparing an electrode. As a result, discharging capacity, charging and discharging efficiency, and discharging load characteristics tend to deteriorate.

In the composite carbon particles of this embodiment (for example, the invention B, but there is no limitation thereto), the cross-sectional area of the core particles, and the void cross-sectional area can be calculated as follows.

(a) Acquisition of Image of Cross-Section of Composite Carbon Particles

As an image of a cross-section of the composite carbon particles, a backscattered electron image, which is obtained using a scanning electron microscope (SEM) at an acceleration voltage of 10 kV, is used. A method of obtaining the particle cross-sectional image is not particularly limited. For example, an electrode plate including the composite carbon particles, an applied film including the composite carbon particles, or a resin thin piece in which the composite carbon particles are embedded in a resin and the like, or the like is prepared, and is cut by a focused ion beam (FIB) or through ion milling to extract a particle cross-section. Then, a cross-sectional image of the composite carbon particles is acquired by using the SEM.

An image capturing magnification is typically 500 or greater times, preferably 1000 or greater times, and more preferably 2000 or greater times. In addition, the image capturing magnification is typically 10000 or less times. In the above-described range, it is possible to acquire a whole image of one particle among the composite carbon particles. A resolution is 200 dpi (ppi) or greater, and preferably 256 dpi (ppi) or greater. In addition, in evaluation, it is preferable that the number of pixels is set to 800 pixels or greater.

(b) Acquisition of Cross-Sectional Area of Core Particles and Void Cross-Sectional Area

In this embodiment (for example, the invention B, but there is no limitation thereto), the cross-sectional area of the core particles and the void cross-sectional area in the composite carbon particles can be calculated from the SEM image of the cross-section, which is acquired by the above-described method, of the composite carbon particles, by using image processing software and the like. Specifically, boundaries between respective regions of the composite particles, the core particles, the void, and the shell layer are distinguished, and cross-sectional areas of respective portions are calculated to obtain the cross-sectional area of the core particles and the void cross-sectional area. With regard to a method of distinguishing the boundaries between the respective regions, execution in a freehand manner or approximation to a polygon may be possible as long as the boundaries are well divided. Although not particularly limited, it is necessary to distinguish a boundary between particles and the other regions without omission of a region of interest (ROI) indicating a particle shape. In the case where a boundary is in a complicated shape not a straight line, for example, the boundary may be distinguished in any number at equal intervals, and a region may be approximated to a polygon. A method of obtaining a boundary, which does not deviate from circularity measured by a flow-type particle image analyzer (for example, FPIA2000 manufactured by Sysmex Corporation). Here, the "does not deviate from" state here represents that a ratio of measured circularity $R_1$ to the entirety of circularity R is set to satisfy a relationship $|R_1/R| > 0.9$. On the other hand, the entirety of circularity state here is actually measured by the flow-type particle image analyzer.

The circularity is defined as $4 \times \pi/(\text{peripheral length})^2$, but this area is an area of an inner side which also includes a void at the inside of particles and is surrounded by ROI.

In addition, binarization processing may be performed as necessary so that the void region and the carbon particle region other than the void region are clearly divided. In the case where an image of a gray scale of 8 bit is set as a target at this time, the binarization processing represents processing in which the image is divided into two parts in accordance with luminance, and the divided two images are set to two values (division into 0 and 255 in the case of 8 bit, and the like). The binarization may be executed with any image processing software. When performing discrimination with a threshold value, various methods are possible for the algorithm, and examples thereof include a mode method, an ISO data method, and the like. Among these, an appropriate method may be used. In addition, it is necessary to give an attention so that a lot of voids do not exist at the boundary of particles. In addition, in the image, a surface may be rough or a cross-section may be inclined in accordance with working accuracy, or luminance of the void region and the luminance of the carbon particle region may be close to each other in accordance with setting of contrast, brightness, and the like. This image may exhibit a void distribution different to an original void distribution when performing binarization, and thus it is preferable to exclude the image from an analysis target. However, the image may be a representative cross-section. Accordingly, in a SEM image that is difficult to be subjected to the binarization, it is necessary to recapture the image, or adjustment of brightness or contrast without performing analysis.

• Aspect Ratio

In the composite carbon particles in this embodiment (for example, the invention B, but there is no limitation thereto), an aspect ratio in a powder state thereof is theoretically 1 or greater, preferably 1.1 or greater, and more preferably 1.2 or greater. In addition, the aspect ratio is preferably 3 or less, more preferably 2.8 or less, and still more preferably 2.5 or less.

When the aspect ratio is in the above-described range, striping is less likely to occur in slurry (negative electrode forming material) including a carbon material when manufacturing an electrode plate, and thus a uniform application surface is obtained. Accordingly, there is a tendency that deterioration of high-current density charging and discharging characteristics of a non-aqueous secondary battery is avoided.

<Composite Carbon Material for Non-aqueous Secondary Battery>

According to an aspect of an embodiment of the invention, the composite carbon material for a non-aqueous secondary battery is a composite carbon material which contains at least bulk mesophase artificial graphite particles ($A_a$) and graphite particles ($B_a$) having an aspect ratio of 5 or greater, and is capable of absorbing and releasing lithium ions. A graphite crystal layered structure of the graphite particles ($B_a$) is arranged in the same direction as that of an outer peripheral surface of the bulk mesophase artificial graphite particles ($A_a$) at a part of a surface of the bulk mesophase artificial graphite particles ($A_a$), and an average circularity is preferably 0.9 or greater.

From an aspect of an embodiment of the invention, the composite carbon material for a non-aqueous secondary battery is preferably a carbon material including composite carbon particles which have a core-shell structure with graphite particles ($A_b$) set as core particles and which are capable of absorbing and releasing lithium ions.

According to an aspect of the composite carbon material for a non-aqueous secondary battery, on a backscattered electron image obtained by observing a particle cross-section with a scanning electron microscope (SEM) at an acceleration voltage 10 kV, a relationship between a major axis and a minor axis of the particle cross-section that is not compressed, and an average particle size d50 satisfies the following Expression (B1). In addition, when randomly selecting 30 composite carbon particles having an aspect ratio of 3 or less (composite carbon particles which have a core-shell structure with a graphite particle ($A_b$) set as a core particle and which are capable of absorbing and releasing lithium ions), the number of the composite carbon particles, which exist in the 30 particles and in which a void cross-sectional area and a cross-sectional area of the core particles are in a specific range, are preferably 10 or greater, more preferably 15 or greater, and still more preferably 20 or greater. In the case where the number of particles is excessively small, deterioration of filling properties, and deterioration of charging and discharging efficiency and discharging load characteristics tend to occur.

$$\text{Expression (B1)} \quad R/2 \leq (A_b + B_b)/2 \leq 2R$$

(in Expression (B1), $A_b$ represents a major axis ($\mu$m), $B_b$ represents a minor axis ($\mu$m), and R represents an average particle size d50 ($\mu$m))

Furthermore, when three-dimensionally observing particles, the major axis and the minor axis are respectively defined as the longest diameter $A_b$ (major axis) of the particles and the longest diameter $B_b$ (minor axis) among diameters perpendicular to the major axis.

In the composite carbon material for a non-aqueous secondary battery according to an aspect of an embodiment of the invention, on a backscattered electron image obtained by observing a particle cross-section with a scanning electron microscope (SEM) at an acceleration voltage 10 kV, an average value of the sums of void cross-sectional areas, which are calculated by the following Condition (B1), is 15% or greater, preferably 20% or greater, more preferably 23% or greater, still more preferably 25% or greater, and still more preferably 25% or greater. The average value is typically 100% or less, preferably 70% or less, more preferably 50% or less, and still more preferably 40% or less. In the case where the average value of the sums of the void cross-sectional areas is excessively small, breakage of the composite carbon particles during pressing and an excessive side reaction with an electrolytic solution due to the breakage occur, and capacity and charging and discharging efficiency decrease. On the other hand, in the case where the void cross-sectional area of a void being in contact with the core particle is excessively large, the strength of the composite carbon particles decreases, and thus the core particles and the shell layer are separated from each other and are pulverized due to kneading and the like when preparing an electrode. As a result, discharging capacity, charging and discharging efficiency, and discharging load characteristics tend to deteriorate.

Condition (B1)

Among the composite carbon particles (composite carbon particles which have a core-shell structure with a graphite particle ($A_b$) set as a core particle and which are capable of absorbing and releasing lithium ions) contained in the composite carbon material, 20 particles, in which the ratio of the area occupied by the core particle in the cross-sectional area of the composite carbon particle is 15% to 70%, are randomly selected. In the respective particles, the sums of cross-sectional areas of voids, of which a cross-sectional area is 3% or greater of the cross-sectional area of the core particles and which are in contact with the core particle, are respectively calculated. An average value of 10 particles, which remain after excluding five particles exhibiting a greater value of the sum of the void cross-sectional areas, and five particles exhibiting a smaller value of the sum of the void cross-sectional areas, is set as the average value of the sums of the void cross-sectional areas.

In the composite carbon material for a non-aqueous secondary battery according to an aspect of an embodiment of the invention, when performing an ultrasonic treatment by the following method, it is preferable that a volume-based average particle size of the composite carbon material varies by 0.8 $\mu$m or greater before and after the ultrasonic treatment.

(Ultrasonic Treatment Method)

A dispersion obtained by uniformly dispersing 100 mg of carbon material in 30 ml of water is put into a columnar polypropylene container in which the bottom has a radius of 2 cm, a columnar chip, which has a radius of 3 mm, of 20 kHz ultrasonic homogenizer, is immersed in the dispersion to a depth of 2 cm or greater, and the dispersion is irradiated with ultrasonic waves for 10 minutes at an output of 15 W while maintaining the dispersion at 10°C to 40°C.

Although not particularly limited, as the columnar polypropylene container having a radius of 2 cm in the ultrasonic treatment, for example, an Ai-Boy wide-inlet bottle of 50 mL (manufactured by As One Corporation), a wide-inlet bottle PP of 50 mL (manufactured by TGK.), and the like can be used.

An ultrasonic treatment apparatus is not limited as long as the ultrasonic treatment apparatus is an ultrasonic homogenizer of 20 kHz and a columnar chip having a radius of 3 mm can be immersed in a dispersion to a depth of 2 cm or greater. For example, VC-130 manufactured by Sonics & Materials, Inc. can be used.

In this embodiment (for example, the invention C, but there is no limitation thereto), a variation amount of a volume-based average particle size (average particle size d50) after the ultrasonic treatment is preferably 0.8 $\mu$m or greater, more preferably 1.0 $\mu$m or greater, still more preferably 1.5 $\mu$m or greater, still more preferably 2 $\mu$m or greater, particularly preferably 3 $\mu$m or greater, and most preferably 4 $\mu$m or greater. The variation amount is preferably 20 $\mu$m or less, more preferably 15 $\mu$m or less, still more preferably 12 $\mu$m or less, and particularly preferably 10 $\mu$m or less. In the case where the variation amount is excessively small, a void in particles decreases, and diffusion of Li ions into particles is poor, and thus deterioration of output characteristics is caused. In the case where the variation amount is excessively great, the strength of an electrode plate becomes weak, and this may lead to deterioration of productivity when manufacturing a battery. A method of measuring the volume-based average particle size before and after the ultrasonic treatment will be described later.

• Volume-Based Mode Diameter

In this embodiment (for example, the invention C, but there is no limitation thereto), a volume-based mode diameter (also referred to as "mode diameter") of the composite carbon material is preferably 1 $\mu$m or greater, more preferably 3 $\mu$m or greater, still more preferably 5 $\mu$m or greater, still more preferably 8 $\mu$m or greater, particularly preferably 10 $\mu$m or greater, and most preferably 12 $\mu$m or greater. In addition, the average particle size d50 is preferably 50 $\mu$m or less, more preferably 40 $\mu$m or less, still more preferably 35 $\mu$m or less, still more preferably 31 $\mu$m or less, and particularly preferably 30 $\mu$m or less. In the above-described range, it is possible to suppress an increase in irreversible capacity, and productivity tends not to deteriorate due to stripping and the like during application of slurry.

In addition, in this specification, the average particle size d50 and the mode diameter are defined as follows. 0.01 g of carbon material is suspended in 10 mL of 0.2% by mass aqueous solution of polyoxyethylene sorbitan monolaurate (for example, Tween 20 (registered trademark) that is a surfactant, the resultant material is set as a measurement sample. The measurement sample is put into a commercially available laser diffraction/scattering type particle size distribution measuring device (for example, LA-920 manufactured by Horiba, Ltd.). The measurement sample is irradiated with ultrasonic waves of 28 kHz at an output 60 W for one minute. The average particle size d50 and the mode diameter are defined as values measured as a volume-based median diameter and a mode diameter in the measuring device.

• Volume-Based Average Particle Size (Average Particle Size d50 after Ultrasonic Treatment)

In this embodiment (for example, the invention C, but there is no limitation thereto), the volume-based average particle size of the composite carbon material after the ultrasonic treatment is typically 1 $\mu$m or greater, preferably 3 $\mu$m or greater, more preferably 5 $\mu$m or greater, still more preferably 8 $\mu$m or greater, and still more preferably 9 $\mu$m or greater. In addition, the volume-based average particle size is typically 50 $\mu$m or less, preferably 40 $\mu$m or less, more preferably 35 $\mu$m or less, still more preferably 30 $\mu$m or less, and particularly preferably 25 $\mu$m or less. In the above-described range, it is possible to suppress an increase in irreversible capacity, and productivity tends not to deteriorate due to stripping and the like during application of slurry.

• Volume-Based Mode Diameter after Ultrasonic Treatment

In this embodiment (for example, the invention C, but there is no limitation thereto), the volume-based mode diameter of the composite carbon material after the ultrasonic treatment is typically 1 $\mu$m or greater, preferably 3 $\mu$m or greater, more preferably 5 $\mu$m or greater, still more preferably 8 $\mu$m or greater, and still more preferably 9 $\mu$m or greater. In addition, the volume-based mode diameter is typically 50 $\mu$m or less, preferably 40 $\mu$m or less, more preferably 35 $\mu$m or less, still more preferably 30 $\mu$m or less, and particularly preferably 25 $\mu$m or less. In the above-described range, it is possible to suppress an increase in irreversible capacity, and productivity tends not to deteriorate due to stripping and the like during application of slurry.

In addition, in this specification, the volume-based particle size and the volume-based mode diameter after the ultrasonic treatment are defined as follows. The carbon material is diluted to 1 mg/mL by using 10 mL of 0.2% by mass aqueous solution of polyoxyethylene sorbitan monolaurate (for example, Tween 20 (registered trademark) that is a surfactant, the resultant material is set as a measurement sample. The measurement sample is put into a commercially available laser diffraction/scattering type particle size distribution measuring device (for example, LA-920 manufactured by Horiba, Ltd.). The measurement sample is irradiated with ultrasonic waves of 28 kHz at an output 60 W for one minute. The volume-based particle size and the volume-based mode diameter are defined as values measured as a volume-based median diameter and a mode diameter in the measuring device.

• Variation of Volume-Based Mode Diameter after Ultrasonic Treatment

In this embodiment (for example, the invention C, but there is no limitation thereto), a variation amount of the volume-based mode diameter of the composite carbon material after the ultrasonic treatment is 0.5 $\mu$m or greater, preferably 1.0 $\mu$m or greater, more preferably 1.3 $\mu$m or greater, still more preferably 1.6 $\mu$m or greater, still more preferably 2.0 $\mu$m or greater, particularly preferably 3 $\mu$m or greater, and most preferably 4 $\mu$m or greater. In addition, the variation amount is typically 20 $\mu$m or less, preferably 15 $\mu$m or less, more preferably 12 $\mu$m or less, still more preferably 10 $\mu$m or less, and particularly preferably 8 $\mu$m or less. In the case where the variation amount is excessively small, a void in particles decreases, and diffusion of Li ions into particles is poor, and thus deterioration of output characteristics is caused. In the case where the variation amount is excessively great, the strength of an electrode plate becomes weak, and this may lead to deterioration of productivity when manufacturing a battery.

Other physical properties of the composite carbon material for a non-aqueous secondary battery (also referred to as composite carbon material) according to this embodiment are as follows.

• Average Circularity

Average circularity of the composite carbon material of the invention is typically 0.88 or greater, preferably 0.9 or greater, more preferably 0.91 or greater, and still more preferably 0.92 or greater. On the other hand, the average circularity is typically 1 or less, preferably 0.99 or less, more preferably 0.98 or less, and still more preferably 0.97 or less. When the average circularity is in the above-described range, there is a tendency that it is possible to suppress deterioration of high-current density charging and discharging characteristics of a non-aqueous secondary battery.

When the average circularity is in the above-described range, the degree of variation of Li ion diffusion decreases, and migration of an electrolytic solution in a void between particles becomes smooth, and thus carbon materials can appropriately come into contact with each other. Accordingly, good rapid charging and discharging characteristics and cycle characteristics tend to be exhibited. Furthermore, the circularity is defined by the following expression. When the circularity is 1, a theoretical true sphere is obtained.

$$\text{Circularity} = \text{(peripheral length of an equivalent circle having the same area as that of a particle projection shape)/(actual peripheral length of the particle projection shape)}$$

A measured peripheral length of a circle (equivalent circle) having the same area as that of a particle projection shape is set as a numerator, a measured peripheral length of the particle projection shape is set as a denominator, and a ratio thereof is obtained. Then, average of the ratio is calculated and is set as average circularity. As a value of the circularity, for example, the following value obtained by a flow-type particle image analyzer (for example, FPIA manufactured by Sysmex Corporation) is used. Approximately 0.2 g of sample (carbon material) is dispersed in 0.2% by mass aqueous solution (approximately 50 mL) of Polyoxyethylene(20) sorbitan monolaurate that is a surfactant, and the resultant dispersion is irradiated with ultrasonic waves of 28 kHz at an output 60 W for one minute. Then, a detection range is set to 0.6 to 400 $\mu$m, and values, which are measured with respect to particles having a particle size in a range of 1.5 to 40 $\mu$m, are used as the value of the circularity.

• Volume-Based Average Particle Size (Average Particle Size d50)

A volume-based average particle size (also referred to as "average particle size d50") of the composite carbon material of the invention is typically 1 $\mu$m or greater, preferably 3 $\mu$m or greater, more preferably 5 $\mu$m or greater, still more preferably 8 $\mu$m or greater, still more preferably 10 $\mu$m or greater, particularly preferably 12 $\mu$m or greater, particularly still more preferably 13 $\mu$m or greater, and most preferably 15 $\mu$m or greater. In addition, the average particle size d50 is preferably 50 $\mu$m or less, more preferably 40 $\mu$m or less, still more preferably 35 $\mu$m or less, still more preferably 31 $\mu$m or less, particularly preferably 30 $\mu$m or less, and most preferably 25 $\mu$m or less. When the average particle size d50 is excessively small, there is a tendency that irreversible capacity of a non-aqueous secondary battery obtained by using the carbon material increase, and a loss of initial battery capacity is caused. On the other hand, when the average particle size d50 is excessively great, a process problem such as stripping may occur during application of slurry, and deterioration of high-current density charging and discharging characteristics and deterioration of low-temperature input and output characteristics may be caused.

In addition, in this specification, the average particle size d50 is defined as follows. 0.01 g of carbon material is suspended in 10 mL of 0.2% by mass aqueous solution of polyoxyethylene sorbitan monolaurate (for example, Tween 20 (registered trademark) that is a surfactant, the resultant material is set as a measurement sample. The measurement sample is put into a commercially available laser diffraction/scattering type particle size distribution measuring device (for example, LA-920 manufactured by Horiba, Ltd.). The measurement sample is irradiated with ultrasonic waves of 28 kHz at an output 60 W for one minute. The average particle size d50 is defined as a value measured as a volume-based median diameter in the measuring device.

• Integrated Pore Volume of Pores Having Pore Diameter in Range of 0.01 to 1 $\mu$m

In the composite carbon material of the invention, an integrated pore volume of pores having a pore diameter in a range of 0.01 to 1 $\mu$m is a value that is measured by using a mercury intrusion method (mercury porosimetry). The integrated pore volume is typically 0.001 mL/g or greater, preferably 0.01 mL/g or greater, more preferably 0.03 mL/g or greater, still more preferably 0.05 mL/g or greater, particularly preferably 0.07 mL/g or greater, and most preferably 0.10 mL/g or greater. In addition, the integrated pore volume is preferably 0.3 mL/g or less, more preferably 0.25 mL/g or less, still more preferably 0.2 mL/g or less, and particularly preferably 0.18 mL/g or less.

When the integrated pore volume of pores having a pore diameter in a range of 0.01 to 1 $\mu$m is less than 0.07 mL/g, an electrolytic solution cannot intrude into particles, and it is difficult to efficiently use Li-ion absorbing and releasing sites in particles. Accordingly, intercalation and deintercalation of lithium ions cannot smoothly progress in rapid charging and discharging, and thus low-temperature input and output characteristics tend to deteriorate. On the other hand, when the integrated pore volume is in the above-described range, an electrolytic solution can uniformly spread into particles in a smooth and efficient manner. Accordingly, it is possible to effectively use Li-ion absorbing and releasing sites located not only at the outer periphery of particles but also at the inside of the particles during charging and discharging. As a result, good low-temperature input and output characteristics tend to be exhibited.

• Total Pore Volume

In the composite carbon material of the invention, the total pore volume is a value measured by using a mercury intrusion method (mercury porosimetry). The total pore volume is typically 0.01 mL/g or greater, preferably 0.1 mL/g or greater, more preferably 0.3 mL/g or greater, still more preferably 0.5 mL/g or greater, particularly preferably 0.6 mL/g or greater, and most preferably 0.7 mL/g or greater. In addition, the integrated pore volume is preferably 10 mL/g or less, more preferably 5 mL/g or less, still more preferably 2 mL/g or less, and particularly preferably 1 mL/g or less.

When the total pore volume is in the above-described range, when manufacturing an electrode plate, an excessive amount of binder is not necessary, and it is easy to obtain an effect of dispersing a thickening agent or the binder during manufacturing an electrode plate.

As described above, the pore distribution mode diameter and the pore volume in the invention are values measured by using the mercury intrusion method (mercury porosimetry), and as an apparatus for the mercury porosimetry, a mercury porosimeter (autopore 9520, manufactured by Micromeritics Instrument Corporation) can be used. Approximately 0.2 g of sample (carbon material) is weighed, and is enclosed in a powder cell. Then, the sample is degassed at room temperature in vacuo (50 $\mu$mHg or less) for 10 minutes as a pretreatment.

Continuously, a pressure is reduced to 4 psia (approximately 28 kPa), and mercury is put into the cell. Then, a pressure is raised to 40000 psia (approximately 280 MPa) from 4 psia (approximately 28 kPa) step by step, and then the pressure is reduced to 25 psia (approximately 170 kPa).

The number of steps during pressure rising is set to 80 points or greater. In each step, the amount of mercury that is intruded is measured after equilibrium time for 10 seconds. A pore distribution is calculated by using Washburn expression from a mercury intrusion curve that is obtained as described above.

Furthermore, calculation is performed in a state in which surface tension ($\gamma$) of mercury is set to 485 dyne/cm and a contact angle ($\psi$) is set to 140°. An average pore diameter is set as a pore diameter when an accumulated pore volume reaches 50%.

• Particle Number Frequency of 3 $\mu$m or Less

When irradiating the composite carbon material of the invention with ultrasonic waves of 28 kHz at an output of 60 W for five minutes, a particle number frequency of a particle size of 3 $\mu$m or less is preferably 1% or greater, and more preferably 10% or greater. In addition, the particle number frequency is preferably 60% or less, more preferably 55% or less, still more preferably 50% or less, particularly preferably 40% or less, and most preferably 30% or less.

When the particle number frequency is in the above-described range, in slurry kneading, electrode rolling, charging and discharging, and the like, particle collapsing and fine powder peeling-off are less likely to occur, and thus low-temperature input and output characteristics and cycle characteristics tend to be better.

As the particle number frequency of a particle size of 3 $\mu$m or less during irradiation with ultrasonic waves of 28 kHz at an output of 60 W for five minutes, the following value is used. Specifically, 0.2 g of carbon material is mixed in 50 mL of 0.2% by volume aqueous solution of polyoxyethylene sorbitan monolaurate (for example, Tween 20 (registered trademark)) that is a surfactant, irradiation of ultrasonic waves of 28 kHz is performed at an output of 60 W for predetermined time by using a flow-type particle image analyzer (for example, FPIA-2000 manufactured by Sysmex Corporation). Then, a detection range is set to 0.6 to 400 $\mu$m, and a value obtained by measuring the number of particles is used as the particle number frequency.

• Tap Density

A tap density of the composite carbon material of the invention is typically 0.5 g/cm$^3$ or greater, preferably 0.7

g/cm$^3$ or greater, more preferably 0.8 g/cm$^3$ or greater, still more preferably 0.85 g/cm$^3$ or greater, particularly preferably 0.9 g/cm$^3$ or greater, and most preferably 0.95 g/cm$^3$ or greater. The tap density is preferably 1.6 g/cm$^3$ or less, more preferably 1.4 g/cm$^3$ or less, still more preferably 1.3 g/cm$^3$ or less, still more preferably 1.2 g/cm$^3$ or less, and particularly preferably 1.1 g/cm$^3$ or less.

When the tap density is in the above-described range, stripping and the like are suppressed when manufacturing an electrode plate, and thus productivity becomes better. As a result, high-speed charging and discharging characteristics becomes excellent. In addition, a carbon density in particles is less likely to rise, and thus rolling properties are also better. Accordingly, there is a tendency that it is easy to form a high-density negative electrode sheet.

The tap density is defined as a density obtained by using a powder density measuring device. Specifically, the composite carbon material of the invention is dropped into a cylindrical tap cell having a diameter of 1.6 cm and a volume capacity 20 cm$^3$ after passing through a sieve having an aperture of 300 $\mu$m to fully fill the cell, and then tapping is performed 1000 times in a stroke length of 10 mm, and a density obtained from the volume and the mass of a sample at that time is defined as the tap density.

• Bulk density

A bulk density of the composite carbon material of the invention is preferably 0.3 g/cm$^3$ or greater, more preferably 0.31 g/cm$^3$ or greater, still more preferably 0.32 g/cm$^3$ or greater, and particularly preferably 0.33 g/cm$^3$ or greater. The bulk density is preferably 1.3 g/cm$^3$ or less, more preferably 1.2 g/cm$^3$ or less, particularly preferably 1.1 g/cm$^3$ or less, and most preferably 1 g/cm$^3$ or less.

When the bulk density is in the above-described range, stripping and the like are suppressed when manufacturing an electrode plate, and thus productivity becomes better. As a result, high-speed charging and discharging characteristics are excellent. In addition, an appropriate pore is formed, and thus an electrolytic solution can smoothly migrate, and thus good charging and discharging load characteristics and low-temperature input and output characteristics tend to be exhibited.

The bulk density is defined as a density obtained by using a powder density measuring device. Specifically, the composite carbon material of the invention is dropped into a cylindrical tap cell having a diameter of 1.6 cm and a volume capacity 20 cm$^3$ after passing through a sieve having an aperture of 300 $\mu$m to fully fill the cell. A density obtained from the volume and the mass of a sample at that time is defined as the bulk density.

• X-Ray Parameter

In the composite carbon material of the invention, d value (interlayer distance) of a lattice plane (002 plane), which is obtained through X-ray diffraction in accordance with "Gakushin" method, is preferably equal to or greater than 0.335 nm and less than 0.360 nm. Here, the d value is more preferably 0.345 nm or less, still more preferably 0.341 nm or less, and particularly preferably 0.338 nm or less. When the d002 value is in the above-described range, crystallinity of graphite is high, and thus an increase in initial irreversible capacity tends to be suppressed. Here, 0.3354 nm is a theoretical value of graphite.

In addition, in the carbon material, a crystallite size (Lc), which is obtained through X-ray diffraction in accordance with "Gakushin" method, is preferably in a range of 10 nm or greater, more preferably 20 nm or greater, still more preferably 30 nm or greater, still more preferably 50 nm or greater, particularly preferably 100 nm or greater, particularly still more preferably 500 nm or greater, and most preferably 1000 nm or greater. In the above-described range, crystallinity of particles is not too low, and thus in the case of a non-aqueous secondary battery, reversible capacity is less likely to decrease. In addition, the lower limit of Lc is a theoretical value of graphite.

• Ash Content

The ash content that is contained in the composite carbon material of the invention is preferably 1% by mass or less on the basis of the total mass of the carbon material, more preferably 0.5% by mass or less, and still more preferably 0.1% by mass or less. In addition, the lower limit of the ash content is preferably 1 ppm or greater.

When the ash content is contained in the above-described range, in the case of a non-aqueous secondary battery, in the case of a non-aqueous secondary battery, it is possible to suppress deterioration of battery performance due to a reaction between the carbon material and the electrolytic solution during charging and discharging to a negligible extent. In addition, there is no necessity for a lot of time and energy and a facility for prevention of pollution in manufacturing of the carbon material, and thus it is also possible to suppress an increase in the cost.

• BET Specific Surface Area (SA)

In the composite carbon material of the invention, a specific surface area (SA) measured in accordance with a BET method is preferably 0.1 $m^2$/g or greater, more preferably 0.3 $m^2$/g or greater, still more preferably 0.7 $m^2$/g or greater, still more preferably 1 $m^2$/g or greater, particularly preferably 2 $m^2$/g or greater, and most preferably 3 $m^2$/g or greater. In addition, the specific surface area is 30 $m^2$/g or less, more preferably 20 $m^2$/g or less, still more preferably 17 $m^2$/g or less, particularly preferably 15 $m^2$/g or less, and most preferably 10 $m^2$/g or less.

When the specific surface area is in the above-described range, it is possible to sufficiently secure a site through which Li gets in and out, high-speed charging and discharging characteristics and output characteristics are excellent, and it is possible to appropriately suppress activity of an active material with respect to an electrolytic solution. Accordingly, initial irreversible capacity does not increase, and thus a high-capacity battery can be manufactured.

In the case of forming a negative electrode by using the carbon material, it is possible to suppress an increase in reactivity with the electrolytic solution, and it is possible to generation of a gas. Accordingly, it is possible to provide a preferred non-aqueous secondary battery.

The BET specific surface is defined as a value obtained by using a surface area measuring device (for example, a specific surface area measuring device "Gemini 2360" manufactured by Shimadzu Corporation). Specifically, preliminary reduced pressure drying is performed with respect to a carbon material sample under a flow of nitrogen at 100°C for three hours, and then the carbon material sample is cooled down to a liquid nitrogen temperature. A value, which is measured by a nitrogen adsorption BET six-point method in accordance with a gas flowing method by using a nitrogen-helium mixed gas that is accurately adjusted so that a value of a relative pressure of nitrogen with respect to the atmospheric pressure becomes 0.3, is defined as the BET specific surface area.

• Amount of Surface Functional Group O/C Value (%)

X-ray photoelectron spectrometry (XPS) is performed by using an X-ray photoelectron spectrometer (for example, ESCA manufactured by ULVAC-PHI, Incorporated). A measurement target (here, the graphite material) is put on a sample stage in a state in which a surface of the measurement target is flat, and spectrums of C1s (280 to 300 eV) and O1s (525 to 545 eV) is measured through multiplex measurement in a state in which K$\alpha$-ray of aluminum is set as an X-ray source. Charging correction is performed by setting a peak top of C1s that is obtained to 284.3 eV, and peak areas of spectrums of C1s and O1s are obtained and are additionally multiplied by a device sensitivity coefficient to calculate a surface atom concentration of each of C and O. An atom concentration ratio O/C (atom concentration of O/atom concentration of C) $\times$ 100 between O and C is defined as the amount of a surface functional group O/C value of the composite carbon material.

In the composite carbon material of the invention, the O/C value, which is obtained from XPS, is preferably 0.01 or greater, more preferably 0.1 or greater, still more preferably 0.3 or greater, particularly preferably 0.5 greater, and most preferably 0.7 or greater. The O/C value is preferably 8 or less, more preferably 4 or less, still more preferably 3.5 or less, particularly preferably 3 or less, and most preferably 2.5 or less. When the amount of surface functional groups O/C value is in the above-described range, desolvation reactivity between Li ions and an electrolytic solvent on a surface of a negative electrode active material is promoted, and rapid charging and discharging characteristics becomes better, and reactivity with the electrolytic solution is suppressed. As a result, charging and discharging efficiency tends to be better.

• True Density

In the composite carbon material of the invention, a true density is preferably 1.9 g/$cm^3$ or greater, more preferably 2 g/$cm^3$ or greater, still more preferably 2.1 g/$cm^3$ or greater, and particularly preferably 2.2 g/$cm^3$ or greater. The upper limit of the true density is 2.26 g/$cm^3$ or greater. The upper limit is a theoretical value of graphite. When the true density is in the above-described range, there is a tendency that the crystallinity of carbon does not excessively decrease, and in the case of a non-aqueous secondary battery, it is possible to suppress an increase in initial irreversible capacity.

• Aspect Ratio

In the composite carbon material of the invention, an aspect ratio in a powder state is theoretically 1 or greater, preferably 1.1 or greater, and more preferably 1.2 or greater. In addition, the aspect ratio is preferably 10 or less, more preferably 8 or less, still more preferably 5 or less, and particularly preferably 3 or less.

When the aspect ratio is in the above-described range, stripping is less likely to occur in slurry (negative electrode forming material) including the carbon material when manufacturing an electrode plate, and thus a uniform application surface is obtained. As a result, deterioration of high-current density charging and discharging characteristic of a non-aqueous secondary battery tends to be avoided.

In three-dimensional observation of carbon material particles, when the longest diameter of carbon material particles is set as a diameter A, and the shortest diameter among diameters perpendicular to the diameter A is set as a diameter B, the aspect ratio is expressed as A/B. The observation of the carbon material particles is performed with a scanning electron microscope capable of performing enlargement observation. Arbitrary 50 carbon material particles, which are fixed to an end surface of a metal having a thickness of 50 $\mu$m or less, are selected. Then, A and B are measured with respect to each of the carbon material particles by rotating and inclining a stage to which a sample is fixed, and an average value of A/B is obtained.

• Maximum Particle Size dmax

In the composite carbon material of the invention, the maximum particle size dmax is preferably 200 $\mu$m or less, more preferably 150 $\mu$m or less, still more preferably 120 $\mu$m or less, particularly preferably 100 $\mu$m or less, and most preferably 80 $\mu$m or less. When dmax is in the above-described range, occurrence of a process problem such as stripping tends to be suppressed.

In addition, in a particle size distribution obtained during measurement of the average particle size d50, the maximum particle size is defined as a value of the largest particle size obtained by measuring particles.

• Raman R Value

In the composite carbon material of the invention, the Raman R value is preferably 0.001 or greater, more preferably 0.01 or greater, still more preferably 0.02 or greater, and particularly preferably 0.03 or greater. In addition, the Raman R value is typically 1 or less, preferably 0.8 or less, more preferably 0.7 or less, still more preferably 0.6 or less, particularly preferably 0.5 or less, and most preferably 0.4 or less.

Furthermore, the intensity $I_A$ of a peak $P_A$ in the vicinity of 1580 cm$^{-1}$ to the intensity $I_B$ of a peak $P_B$ in the vicinity of 1360 cm$^{-1}$ in a Raman spectrum obtained by Raman spectrometry are measured, and the Raman R value is defined as a value calculated as intensity ratio ($I_B/I_A$).

Furthermore, in this specification, the "vicinity of 1580 cm$^{-1}$" represents a range of 1580 to 1620 cm$^{-1}$, and the "vicinity of 1360 cm$^{-1}$" represents a range of 1350 to 1370 cm$^{-1}$.

When the Raman R value is in the above-described range, crystallinity of a surface of the carbon material particles is less likely to increase, and in a high density, a crystal is less likely to orient in a direction parallel to a negative electrode plate, and thus deterioration of load characteristics tends to be avoided. In addition, a crystal in a particle surface is less likely to be disturbed, and an increase in reactivity between a negative electrode and an electrolytic solution is suppressed. Accordingly, there is a tendency that it is possible to avoid a decrease in charging and discharging efficiency of a non-aqueous secondary battery and an increase in generation of a gas.

The Raman spectrum can be measured with a Raman spectrometer. Specifically, particles to be measured are naturally dropped into a measurement cell to fill the measurement cell with a sample. Measurement is performed in a state in which the measurement cell is rotated in a plane perpendicular to laser light while irradiating the inside of the measurement cell with argon ion laser light. Measurement conditions are as follows.
Wavelength of argon ion laser light: 514.5 nm
Laser power on sample: 25 mW
Resolution: 4 cm$^{-1}$
Measurement range: 1100 era$^{-1}$ to 1730 cm$^{-1}$
Measurement of peak intensity, measurement of peak full width at half maximum: background processing, smoothing processing (convolution 5 points in accordance with simple average)

• DBP Oil Adsorption

In the composite carbon material of the invention, a DBP (dibutyl phthalate) oil adsorption is preferably 85 ml/100g or less, more preferably 70 ml/100g or less, still more preferably 65 ml/100g or less, and particularly preferably 60 ml/100g or less. In addition, the DBP oil adsorption is preferably 20 ml/100g or greater, more preferably 30 ml/100g or greater, and still more preferably 40 ml/100g or greater.

When the DBP oil adsorption is in the above-described range, a progress state of spheroidization of the carbon material is sufficient, stripping and the like are less likely to occur during application of slurry including the composite carbon material, and a pore structure also exists in particles. Accordingly, a decrease in a reaction surface tends to be avoided.

In addition, the DBP oil adsorption is defined as a measurement value when putting-into of 40 g of measurement material (carbon material) is carried out, a dropping velocity is set to 4 ml/min, the number of revolutions is set to 125 rpm, and setting torque is set to 500 N·m in conformity to JIS K6217. For example, absorption meter E type manufactured by Brabender can be used in the measurement.

• Average Particle Size d10

In the composite carbon material of the invention, a particle size (d10), which corresponds to accumulation 10% from a small particle side among particle sizes measured on the basis of a volume, is preferably 30 μm or less, more preferably 20 μm or less, and still more preferably 17 μm or less. In addition, the particle size (d10) is preferably 1 μm or greater, more preferably 3 μm or greater, and still more preferably 5 μm or greater.
When the average particle size d1D is in the above-described range, particle aggregation tendency is not excessive strong, and it is possible to avoid occurrence a process problem such as an increase in slurry viscosity, a decrease in electrode strength and a decrease in initial charging and discharging efficiency in a non-aqueous secondary battery. In addition, there is a tendency that deterioration of high-current density charging and discharging characteristics and deterioration of low-temperature input and output characteristic are also avoided.
"d10" is defined as a value that corresponds to 10% of integration from a small particle size side with small particle frequency (%) in a particle size distribution obtained during measurement of the average particle size d50.

• Average Particle Size d90

In the composite carbon material of the invention, a particle size (d90), which corresponds to accumulation 90% from a small particle side among particle sizes measured on the basis of a volume, is preferably 100 μm or less, more preferably 70 μm or less, still more preferably 60 m or less, still more preferably 50 μm or less, particularly preferably 45 μm or less, and most preferably 42 μm or less. In addition, the particle size (d90) is preferably 20 μm or greater, more preferably 26 μm or greater, still more preferably 30 μm or greater, and particularly preferably 34 μm or greater.
When "d90" is in the above-described range, it is possible to avoid a decrease in electrode strength and a decrease in initial charging and discharging efficiency in a non-aqueous secondary battery, and there is a tendency that it is also possible to avid occurrence of a process problem such as stripping during application of slurry, deterioration of high-current density charging and discharging characteristics, and deterioration of low-temperature input and output characteristics.
"d90" is defined as a value that corresponds to 90% of integration from a small particle size side with small particle frequency% in the particle size distribution obtained during measurement of the average particle size d50.

• d90/d10

In one embodiment (for example, the invention C, but there is no limitation thereto) of the composite carbon material for a non-aqueous secondary battery of the invention, d90/d10 is typically 2 or greater, preferably 2.2 or greater, still more preferably 2.5 or greater, and particularly preferably 3.0 or greater. In addition, d90/d10 is typically 10 or less, preferably 7 or less, still more preferably 6 or less, and still more preferably 5 or less. When d90/d100 is in the above-described range, small particles enter a void between large particles, and thus filling properties of the carbon material for a non-aqueous secondary battery are improved. In addition, it is possible to make an inter-particle pore, which is a relatively great pore, small, and it is possible to reduce a volume of the inter-particle pore. Accordingly, it is possible to make a mode diameter in a pore distribution, which is obtained by the mercury intrusion method with respect to a powder, small. As a result, there is a tendency that high capacity, and excellent charging and discharging load characteristics and input and output characteristics are exhibited.
"d90/d10" of the composite carbon material for a non-aqueous secondary battery of the invention is defined as a value obtained by dividing d90 measured by the method by d10 measured by the method.

• Particle Number Frequency of Particle Size of 5 μm or less

When irradiating the composite carbon material of the invention with ultrasonic waves of 28 kHz at an output of 60 W for one minute, a particle number frequency of a particle size of 5 μm or less is typically 80% or less, preferably 40% or less, more preferably 35% or less, still more preferably 30% or less, and particularly preferably 25% or less.
When the particle number frequency is in the above-described range, in slurry kneading, electrode rolling, charging and discharging, and the like, particle collapsing and fine powder peeling-off are less likely to occur, and thus low-temperature input and output characteristics and cycle characteristics tend to be better.
As the particle number frequency of a particle size of 5 μm or less during irradiation with ultrasonic waves of 28 kHz at an output of 60 W for five minutes, the following value is used. Specifically, 0.2 g of carbon material is mixed in 50 mL of 0.2% by volume aqueous solution of polyoxyethylene sorbitan monolaurate (for example, Tween 20 (registered trademark) that is a surfactant, irradiation of ultrasonic waves of 28 kHz is performed at an output of 60 W for predetermined time by using a flow-type particle image analyzer (for example, FPIA-2000 manufactured by Sysmex Corporation). Then, a detection range is set to 0.6 to 400 $\mu$m, and a value obtained by measuring the number of particles is used as the particle number frequency.

From an aspect of an embodiment of the invention, in the composite carbon material for a non-aqueous secondary battery, a plurality of graphite particles ($A_d$) capable of absorbing and releasing lithium ions are composited, and a mode diameter in a pore distribution, which is obtained by a mercury intrusion method with respect to a powder, is preferably 0.1 to 2 $\mu$m, and a volume-based average particle size (d50) is preferably 5 to 40 $\mu$m. Furthermore, the compositing here represents that the composite carbon material for a non-aqueous secondary battery includes at least two or greater graphite particles ($A_d$). When the composite carbon material for a non-aqueous secondary battery includes the plurality of the graphite particles ($A_d$), a fine pore is likely to be formed in particles of the composite carbon material for a non-aqueous secondary battery, and thus an effect of the invention tends to be more easily exhibited. Hereinafter, other preferred physical properties in this embodiment will be described. The above-described physical properties are applicable to physical properties which are not described below.

• Volume-Based Average Particle Size

In this embodiment (for example, the invention D, but there is no limitation thereto), the volume-based average particle size (also referred to "average particle size d50") is 5 $\mu$m or greater, preferably 6 $\mu$m or greater, more preferably 7 $\mu$m or greater, and particularly preferably 8 $\mu$m or greater. In addition, the volume-based average particle size is 40 $\mu$m or less, preferably 30 $\mu$m or less, more preferably 20 $\mu$m or less, particularly preferably 17 $\mu$m or less, and most preferably 14 $\mu$m or less. When the average particle size d50 is excessively small, aggregation is likely to occur between composite particles, and thus there is a tendency that a process problem such as an increase in slurry viscosity and a decrease in electrode strength occurs. On the other hand, when the average particle size d50 is excessively great, a process problem such as stripping may occur during application of slurry, and deterioration of high-current density charging and discharging characteristics and deterioration of low-temperature input and output characteristics may be caused.

• Particle Size Ratio Between Average Particle Size d50 and Graphite Particle (A)

In this embodiment (for example, the invention D, but there is no limitation thereto), the average particle size d50 is typically 1.5 or greater times the average particle size d50 of the graphite particles (A), preferably 2 or greater times, more preferably 2.5 or greater times, and still more preferably 3 or greater times. The average particle size d50 is typically 15 or less times the average particle size d50 of the graphite particles (A), preferably 12 or less times, more preferably 10 or less times, and still more preferably 8 or less times.

In the above above-described range, it is possible to suppress a process problem such as aggregation of particles and an increase in slurry viscosity, and cutting-off of a conduction path, and thus there is a tendency that electrode strength and initial charging and discharging efficiency in a non-aqueous secondary battery become better.

• Pore Distribution Mode Diameter

In a pore distribution obtained by a mercury intrusion method with respect to a powder of this embodiment (for example, the invention D, but there is no limitation thereto), a mode diameter (particle size corresponding to a mode of the distribution) is preferably 0.1 $\mu$m or greater, more preferably 0.5 $\mu$m or greater, still more preferably 0.7 $\mu$m or greater, and particularly preferably 0.9 $\mu$m or greater. In addition, the mode diameter is preferably 2.0 $\mu$m or less, more preferably 1.8 $\mu$m or less, still more preferably 1.5 $\mu$m or less, and particularly preferably 1.3 $\mu$m or less. When the pore distribution mode diameter is excessively greater than the above-described range, a lot of larges pores exist between particles and a few small pores exist in the particles. Accordingly, an electrolytic solution is less likely to intrude to Li-ion absorbing and releasing sites at the inside of the composite carbon material, and thus low-temperature input and output characteristics tend to deteriorate. On the other hand, when the pore distribution mode diameter is excessively smaller than the above-described range, a lot of pores exist in particles, but the diameter of the pores is small. Accordingly, the electrolytic solution is less likely to intrude to the Li-ion absorbing and releasing sites at the inside of the composite carbon material particles, and thus charging and discharging load characteristics and low-temperature input and output characteristics tend to deteriorate. In addition, it is difficult to mitigate volume expansion and contraction during charging and discharging, and thus electrode expansion tends to increase.

• Pore Volume of Pore Diameter of 0.1 to 2 $\mu$m

In a pore distribution obtained by a mercury intrusion method with respect to a powder of this embodiment (for example, the invention D, but there is no limitation thereto), an integrated pore volume of a pore diameter of 0.1 to 2 $\mu$m is typically 0.2 ml/g or greater, preferably 0.3 ml/g or greater, more preferably 0.35 ml/g or greater, still more preferably 0.4 ml/g or greater, particularly preferably 0.45 ml/g or greater, and most preferably 0.47 ml/g or greater. In addition, the integrated pore volume is preferably 1 ml/g or less, more preferably 0.8 ml/g or less, still more preferably 0.7 ml/g or less, and particularly preferably 0.6 ml/g or less.

When the integrated pore volume of a pore diameter of 0.1 to 2 $\mu$m is in the above-described range, an appropriate void is provided. Accordingly, an electrolytic solution can smoothly migrate into particles, and thus charging and discharging load characteristics and low-temperature input and output characteristics are improved, and filling properties of particles increase. As a result, high capacity can be realized. As described above, the pore distribution mode diameter and the pore volume in the invention are values measured by using the mercury intrusion method (mercury porosimetry), and as a measurement method thereof, the above-described method is used.

• Tap Density

In this embodiment (for example, the invention D, but there is no limitation thereto), a tap density is preferably 0.6 g/cm$^3$ or greater, more preferably 0.63 g/cm$^3$ or greater, still more preferably 0.66 g/cm$^3$ or greater, and particularly preferably 0.7 g/cm$^3$ or greater. The tap density is 1.4 g/cm$^3$ or less, preferably 1.3 g/cm$^3$ or less, more preferably 1.2 g/cm$^3$ or less, particularly preferably 1.1 g/cm$^3$ or less, and most preferably 1 g/cm$^3$ or less.

When the tap density is in the above-described range, stripping and the like are suppressed when manufacturing an electrode plate, and thus productivity becomes better. As a result, high-speed charging and discharging characteristics becomes excellent. In addition, appropriate pores are provided, an electrolytic solution can smoothly migrate, and thus there is a tendency that excellent charging and discharging load characteristics and low-temperature input and output characteristics are exhibited.

• Average Diameter d10

In this embodiment (for example, the invention D, but there is no limitation thereto), an average particle size d10 (particle size corresponding to accumulation 10% from a small particle side among particle sizes measured on the basis of a volume), which is obtained by a laser diffraction and scattering method, is typically 2 $\mu$m or greater, preferably 3 $\mu$m or greater, more preferably 3.5 $\mu$m or greater, and still more preferably 4 $\mu$m or greater. In addition the average particle size d10 is typically 30 $\mu$m or less, preferably 15 $\mu$m or less, more preferably 10 $\mu$m or less, still more preferably 7 $\mu$m or less, and particularly preferably 6 $\mu$m or less. In the above-described range, it is possible to suppress a process problem such as aggregation of particles and an increase in slurry viscosity, and cutting-off of a conduction path, and thus there is a tendency that electrode strength and initial charging and discharging efficiency in a non-aqueous secondary battery become better.

The average particle size d10 is defined as a value that corresponds to 10% of integration from a small particle size side with small volume frequency (%) of particles in a particle size distribution obtained by the same method during measurement of the average particle size d50.

• Average Particle Size d90

In this embodiment (for example, the invention D, but there is no limitation thereto), an average particle size d90 (particle size corresponding to accumulation 90% from a small particle side among particle sizes measured on the basis of a volume), which is obtained by a laser diffraction and scattering method, is typically 10 $\mu$m or greater, preferably 15 $\mu$m or greater, and more preferably 18 $\mu$m or greater. In addition, the average particle size d90 is typically 100 $\mu$m or less, preferably 50 $\mu$m or less, more preferably 40 $\mu$m or less, and still more preferably 30 $\mu$m or less.

In the above-described range, there is tendency that it is possible to suppress occurrence of a process problem such as stripping during application of slurry, and deterioration of high-current density charging and discharging characteristics and low-temperature input and output characteristics of a battery.

The average particle size d90 is defined as a value that corresponds to 90% of integration from a small particle size side with small volume frequency (%) of particles in the particle size distribution obtained by the same method during measurement of the average particle size d50.

• d90/d10

In this embodiment (for example, the invention D, but there is no limitation thereto), d90/d10 is typically 3.5 or greater, preferably 4 or greater, and more preferably 4.5 or greater. d90/d10 is typically 10 or less, preferably 7 or less, and more preferably 6 or less. When d90/d10 is in the above-described range, small particles enter a void between large particles, and thus filling properties of the carbon material for a non-aqueous secondary battery are improved. In addition, it is possible to make an inter-particle pore, which is a relatively great pore, small, and it is possible to reduce a volume of the inter-particle pore. Accordingly, it is possible to make a mode diameter in a pore distribution, which is obtained by the mercury intrusion method with respect to a powder, small. As a result, there is a tendency that high capacity, and excellent charging and discharging load characteristics and low-temperature input and output characteristics are exhibited. d90/d10 of the composite carbon material for a non-aqueous secondary battery of the invention is defined as a value obtained by dividing d90 measured by the method by d10 measured by the method.

<Manufacturing Method>

The invention provides a new method of manufacturing the composite carbon material. As an embodiment of the method of manufacturing the composite carbon material of the invention, specifically, there is provided a manufacturing method including a granulation process of granulating a raw material carbon material through application of any mechanical energy among at least an impact force, a compressive force, a frictional force, and a shear force. The negative electrode material includes at least bulk mesophase artificial graphite ($A_e$) and/or a precursor thereof, and graphite particles ($B_e$) and/or a precursor thereof, and the process of granulating the raw material carbon material is preferably performed under the presence of a granulating agent that is a liquid in the granulation process. According to this method, it is possible to appropriately manufacture a composite carbon material that satisfies various aspect of the invention A to the invention D.

As long as the granulation process is provided, a separate process may be further provided as necessary. The separate process may be executed alone or a plurality of processes may be simultaneously performed.

As an embodiment, for example, the following manufacturing method is preferable.

First process: process of manufacturing the graphite particles (A) or a precursor thereof
Second process: process of manufacturing the graphite particles (B)
Third process: process of compositing the graphite particle (A) or a precursor thereof, and the graphite particles (B)

Furthermore, in the third process, in the case of using the precursor of the graphite particles (A), it is preferable to further include "Fourth process: graphitizing a composite carbon material precursor that is obtained". In the case of using this manufacturing method, graphitization is performed after compositing the precursor of the graphite particles (A) and the graphite particles (B). According to this, a volume of the precursor of the graphite particles (A) is contracted. Accordingly, a void that comes into contact with the graphite particles (A) as a core particle is appropriately generated. As a result, battery characteristics such as filling properties, capacity, charging and discharging efficiency, and discharging load characteristics are improved. In addition, a defect of a graphite crystal, which occurs in the compositing process, is prevented from remaining in the composite carbon material after the graphitization, and a decrease in capacity and deterioration of charging and discharging efficiency are suppressed. Accordingly, the above-described manufacturing method is preferable.

• First Process: Process of Manufacturing Graphite Particles (A) or Precursor Thereof

The graphite particles (A) or a precursor thereof may be manufactured by the following process, or a commercially available product may be used. With regard to the composite carbon material of the invention, it is preferable to use bulk mesophase as the precursor of the graphite particles (A), and the bulk mesophase is more appropriately obtained by the following manufacturing method.

(Starting Material)

As a starting material of the precursor of the graphite particles (A), it is preferable to use pitch raw material. Furthermore, in this specification, the "pitch raw material" represents pitch and a material equivalent thereto which are capable of being graphitized through an appropriate treatment. As a specific example of the pitch raw material, petroleum heavy oil, coal heavy oil, straight heavy oil, cracked petroleum heavy oil, and the like, which are described in a paragraph relating to an organic compound that becomes a carbonaceous substance to be described later, can be used. Among these, the petroleum heavy oil or the coal heavy oil is more preferable from the viewpoint that uniform grain growth randomly occurs. Any one kind of the pitch raw materials may be used alone, or two or more kinds thereof may be used in any combination and ratio.

Among these, the amount of a quinoline insoluble content included in the pitch raw material is 0.000 to 20.000% by mass, preferably 0.001 to 10.000% by mass, and more preferably 0.002 to 7.000% by mass. The quinoline insoluble content represents carbon particles in a sub-micron unit, minute sludge, and the like which are included in a minute amount in the pitch raw material such as coal-tar. When the amount of the quinoline insoluble content is excessively great, an improvement of crystallinity is significantly deteriorated in the course of graphitization, and thus a significant decrease in discharging capacity after graphitization is caused. Furthermore, as a method of measuring the quinoline insoluble content, for example, a method defined in JIS K2425 can be used.

As the starting material, various thermosetting resins, thermoplastic resins, and the like may be used in combination in addition to the above-described pitch raw material as long as the effect of the invention is not inhibited.

(Heat Treatment)

A heat treatment is performed by using a selected pitch raw material as a starting material to obtain bulk mesophase (in the invention, the bulk mesophase is also referred to as "graphite crystal precursor") that is a precursor of a graphite crystal.

After pulverizing the bulk mesophase, when performing re-heat treatment such as baking, a part or the entirety of the resultant pulverized mesophase is melted, but when the amount of a volatile matter in accordance with the heat treatment is adjusted, it is possible to appropriately control a molten state. Furthermore, typical examples of the volatile matter included in the bulk mesophase include hydrogen, benzene, naphthalene, anthracene, pylene, and the like.

A temperature condition in the heat treatment is preferably 400°C to 600°C. When the heat treatment temperature is lower than 400°C, the amount of the volatile matter increases, and thus it is difficult to stably perform the pulverization of the bulk mesophase in the air. On the other hand, when the heat treatment temperature is higher than 600°C, the graphite crystal excessively grows, and a defect of the graphite crystal, which occurs during pulverization of the bulk mesophase, also remains in an artificial graphite product after graphitization. Accordingly, a side reaction with an electrolytic solution increases, and thus there is a concern that initial efficiency, storage characteristics, and cycle characteristics may deteriorate.

In addition, heat treatment time is preferably 1 to 48 hours, and more preferably 10 to 24 hours. When the heat treatment time is shorter than 1 hour, non-uniform bulk mesophase is obtained, and the non-uniform bulk mesophase is appropriate. On the other hand, when the heat treatment time is longer than 48 hours, productivity is not good, and the treatment cost increases. As a result, there is a difficulty related to manufacturing. Furthermore, the heat treatment may be performed in a manner of being divided into a plurality of times as long as the heat treatment temperature and accumulated heat treatment time of the heat treatment are in the above-described range.

When performing the heat treatment, it is preferable to perform the heat treatment under an inert gas atmosphere such as a nitrogen gas, or an atmosphere of the volatile matter that occurs from the pitch raw material.

Although not particularly limited, as an apparatus that is used in the heat treatment, for example, a reaction bath such as a shuttle furnace, a tunnel furnace, an electric furnace, and an autoclave, coker (coke manufacturing heat treatment bath), and the like can be used. During the heat treatment, stirring may be performed in the furnace as necessary.

The amount of the volatile matter (VM) contained in the bulk mesophase is preferably 4% by mass to 30% by mass, and more preferably 8% by mass to 20% by mass. When the volatile matter is less than 4% by mass, particles are broken for each crystal during pulverization, and are likely to be flat particles. Accordingly, the particles tend to be easily oriented when manufacturing an electrode plate. When the volatile matter is greater than 30% by mass, the amount of the volatile matter is great, and thus it is difficult to safely perform the pulverization in the air.

(Pulverization)

Next, the bulk mesophase is pulverized. When performing the pulverization in a state in which the volatile component is controlled to preferably 4% by mass to 30% by mass, and more preferably 8% by mass to 20% by mass, it is possible to reduce damage during the pulverization, and it is possible to recover a defect during graphitization after the pulverization.

Furthermore, typical pulverization represents an operation of adjusting a particle size, a particle size distribution, and the like of a material by applying a force to the material to reduce the size of the material.

The pulverization is performed so that the particle size of the bulk mesophase becomes preferably 1 to 5000 $\mu$m, more preferably 5 to 1000 $\mu$m, still more preferably 5 to 500 $\mu$m, still more preferably 5 to 200 $\mu$m, and particularly preferably 5 to 50 $\mu$m. When the particle size is less than 1 $\mu$m, a surface of the bulk mesophase comes into contact with air during or after the pulverization and is oxidized, and an improvement of crystallinity in the course of graphitization is blocked, and thus a decrease in discharging capacity after graphitization may be caused.

On the other hand, when the particle size is greater than 5000 $\mu$m, miniaturization effect due to the pulverization becomes weak, a crystal is likely to be oriented, and an orientation ratio of an active material in an electrode using the graphite material becomes low. As a result, it is difficult to suppress electrode expansion during battery charging.

The particle size represents 50% particle size (d50) that is obtained from a volume-based particle size distribution through the laser diffraction/scattering particle size distribution measurement.

An apparatus that is used in the pulverization is not particularly limited. Examples of a rough pulverizer include a jaw crusher, an impact type crusher, a cone crusher, and the like, examples of an intermediate pulverizer include roll crusher, a hammer mill, and the like, and examples of a fine pulverizer include a turbo mill, a ball mill, a vibration mill, a pin mill, a stirring mill, a jet mill, and the like.

(Baking)

The bulk mesophase, which is pulverized, may be baked. In the invention, the bulk mesophase that is baked is also referred to as a baked product of a graphite crystal precursor.

The baking is performed to completely remove a volatile matter derived from an organic material of the bulk mesophase.

A temperature when performing the baking is preferably 800°C to 1800°C, and more preferably 1000°C to 1500°C. When the temperature is lower than 800°C, it is difficult to completely remove the volatile matter. On the other hand, when the temperature is higher than 2000°C, it may cost a lot for a baking facility.

When performing the baking, retention time for which the temperature is retained in the above-described range is not particularly limited, and is typically 30 minutes to 72 hours as an example.

The baking is performed under an inert gas atmosphere such as a nitrogen gas, or a non-oxidizing atmosphere due to a gas that is generated from the bulk mesophase. In addition, in the case where a graphitization process is necessary, the graphitization can be performed directly without a baking process for simplification of a manufacturing process.

Although not particularly limited, as an apparatus that is used in the baking, for example, a shuttle furnace, a tunnel furnace, an electric furnace, a lead hammer furnace, a rotary kiln, and the like can be used.

(Graphitization)

When performing graphitization with respect to the graphite crystal precursor that is baked, it is possible to obtain preferred graphite particles (A) of the invention. The graphitization of the graphite crystal precursor may be performed in the first process, or in the fourth process after the third process.

The graphitization is performed to improve crystallinity of the graphite particles (A) so as to increase discharging capacity in battery evaluation.

A temperature when performing the graphitization is preferably 2000°C to 3200°C, and more preferably 3000°C to 3200°C. When the graphitization temperature is higher than 3200°C, there is a concern that a sublimation amount of graphite is likely to increase. In addition, when the graphitization temperature is lower than 2000°C, there is a concern that reversible capacity of a battery may decrease. As a result, it may be difficult to manufacture a high-capacity battery.

Retention time when performing the graphitization is not particularly limited. Typically, the retention time is longer than 1 minute and is equal to or shorter than 72 hours.

The graphitization is performed under an inert gas atmosphere such as an argon gas, or under a non-oxidizing atmosphere due to a gas that is generated from the graphite crystal precursor that is baked.

Although not particularly limited, as an apparatus that is used in the graphitization, for example, a direct energizing furnace, an Atchison furnace, a resistive heating furnace as an indirect energizing type, an inductive heating furnace, and the like can be used.

Furthermore, when performing the graphitization or in processes before the graphitization, that is, in processes from the heat treatment to the baking, a graphitization catalyst such as Si, B, and Ni may be incorporated to a material (the pitch raw material or the graphite crystal precursor that is subjected to the heat treatment), or the graphitization catalyst may be brought into direct contact with a surface of the material.

(Other Treatments)

In addition to the respective treatments, various treatments such as a reclassifying treatment can be performed in a range not inhibiting the effect of the invention. The reclassifying treatment is performed to remove a rough powder or a fine powder so as to adjust a particle size after the baking and the graphitization treatment to a target particle size.

Although an apparatus that is used in a classifying treatment is not particularly limited. For example, in the case of performing classification with a dry sieve, a rotation type sieve, a shaking type sieve, a gyratory sieve, a vibration type sieve, and the like can be used. In the case of dry air flow type classification, a gravity type classifier, an inertia force type classifier, a centrifugal force type classifier (classifier, cyclone, and the like), and the like can be used. In the case of performing classification with a wet sieve, a mechanical wet classifier, a water power classifier, a setting classifier, a centrifugal wet classifier, and the like can be used.

With regard to the reclassifying treatment, in the case of performing the graphitization after the baking, the graphitization may be performed after performing the reclassifying treatment after the baking, or the reclassifying treatment may be performed after performing the graphitization after the baking. The reclassifying treatment can be omitted.

• Second Process: Process of Manufacturing Graphite Particles (B)

To manufacture the composite carbon material of the invention, it is preferable that the graphite particles (B) (for example, squamous natural graphite) are pulverized and classified to adjust the average particle size d50, and a treatment for high purity is performed as necessary. In the case where the average particle size d50 of the graphite particles (B) is smaller than the average particle size d50 of the graphite particles (A), there is a tendency that it is easy to obtain composite particles in which the graphite particles (A) and the graphite particles (B) are composited in such a manner that a graphite crystal layered structure of the graphite particles (B) is arranged in the same direction as an outer peripheral surface of the graphite particles (A) at least at a part of a surface of the graphite particles (A). In addition, when the average particle size d50 of the graphite particles (B) is approximately the same as the average particle size d50 of the graphite particles (A), there is a tendency that it is easy to obtain composite particles in which the graphite particles (A) and the graphite particles (B) are uniformly dispersed.

Hereinafter, description will be separately given of a first step of the second process and a second step of the second process.

(First step of Second Process) Process of Adjusting Average Particle Size d50 of Graphite Particles
(Second Step of Second Process) Process of Highly Purifying Obtained Graphite Particles as Necessary

(First step of Second Process) Process of Adjusting Average Particle Size d50 of Graphite Particles

Examples of a method of adjusting the average particle size d50 of the graphite particles (B) include a method of pulverizing and/or classifying the squamous natural graphite. Although an apparatus used in the pulverization is not particularly limited, examples of a rough pulverizer include a shearing mill, a jaw crusher, an impact type crusher, a cone crusher, and the like, examples of an intermediate pulverizer include a roll crusher, a hammer mill, and the like, and examples of a fine pulverizer include a mechanical type pulverizer, an air flow type pulverizer, a circulation flow type pulverizer, and the like. Specific examples of the fine pulverizer include a ball mill, a vibration mill, a pin mill, a stirring mill, a jet mill, a cyclone mill, a turbo mill, and the like.

An apparatus used in a classifying treatment is not particularly limited. For example, in the case of performing classification with a dry sieve, a rotation type sieve, a shaking type sieve, a gyratory sieve, a vibration type sieve, and the like can be used. In the case of dry air flow type classification, a gravity type classifier, an inertia force type classifier, a centrifugal force type classifier (classifier, cyclone, and the like), and the like can be used. In the case of performing classification with a wet sieve, a mechanical wet classifier, a water power classifier, a setting classifier, a centrifugal wet classifier, and the like can be used.

(Second Step of Second Process) Process of Highly Purifying Obtained Graphite Particles as Necessary

The graphite particles (B) can be subjected to a purification treatment as necessary.

It is preferable to perform an acid treatment with nitric acid or hydrochloric acid from the viewpoint that it is possible to remove impurities such as a metal, a metal compound, an inorganic compound, and the like in graphite without introducing a sulfate, which can become a sulfur source with high activity, into a system.

Furthermore, in the acid treatment, acids including nitric acid or hydrochloric acid may be used, and examples of the other acids which can be used include acids obtained by appropriately mixing inorganic acids such as bromic acid, hydrofluoric acid, boric acid, and iodic acid, and organic acids such as citric acid, formic acid, acetic acid, oxalic acid, trichloroacetic acid, and trifluoroacetic acid. Concentrated hydrofluoric acid, concentrated nitric acid, and concentrated hydrochloric acid are preferable, and the concentrated nitric acid and the concentrated hydrochloric acid are more preferable. Furthermore, in this manufacturing method, graphite may be treated with sulfuric acid, but it is assumed that the sulfuric acid is used in a quantity and a concentration at which the effect and the physical properties of the invention do not deteriorate. In the case of using a plurality of acids, for example, a combination of hydrofluoric acid, nitric acid and hydrochloric acid is preferable from the viewpoint that it is possible to efficiently remove the above-described impurities.

• Third Process: Process of Compositing Graphite Particles (A) or Precursor thereof, and Graphite Particles (B)

In the manufacturing method of the invention, with regard to the compositing, for example, the graphite particles (A) and the graphite particles (B) may be composited, and a bulk mesophase carbon material (green coke obtained by subjecting a pitch raw material to a heat treatment at 400°C to 600°C or calcined coke obtained by additionally subjecting the green coke to a heat treatment at 800°C to 1800°C) that is a precursor of the graphite particles (A), and the graphite particles (B). Among these, it is preferable that the green coke and the graphite particles (B) are composited from the view point that a defect of a graphite crystal, which occurs in the compositing process, does not remain in an artificial graphite product after graphitization.

As one means for accomplishing the compositing between the graphite particles (A) or a precursor thereof and the graphite particles (B), any one mechanical energy among at least an impact force, a compressive force, a frictional force, and a shear force is applied to a raw material carbon material to granulate the raw material carbon material, and the granulation process is performed under the presence of a granulating agent that is a liquid in the granulation process.

As long as the granulation process is provided, a separate process may be further provided as necessary. The separate process may be executed alone or a plurality of processes may be simultaneously performed.

When a granulation treatment is performed by the method, a liquid bridge adhesion force occurs between the graphite particles (A) or a precursor thereof and the graphite particles (B) due to the granulating agent having specific physical properties, and thus particles can more strongly adhere to each other. Accordingly, it is possible to manufacture an excellent composite carbon material which is strong in an adhesive force and is less in peeling-off of the graphite particles (B).

Hereinafter, description will be separately given of a first step of the third process and a second step of the third process.

(First Step of Third Process) Process of Mixing Graphite Particles (A) or Precursor Thereof and/or Graphite Particles (B), and Granulating Agent

(Second Step of Third Process) Process of Granulating Obtained Mixed Product

(First Step of Third Process) Process of Mixing Graphite Particles (A) or Precursor Thereof and/or Graphite Particles (B), and Granulating Agent

It is preferable that the graphite particles (A) or a precursor thereof, and the graphite particles (B) are composited by using a granulating agent so as to obtain the composite carbon material of the invention. 1) It is preferable that the granulating agent is in a liquid state during a process of granulating the raw material carbon material. In addition, 2) in the case where the granulating agent includes an organic solvent, it is preferable to satisfy a condition in which at least one kind of the organic solvent does not have a flashing point, or when the organic solvent has the flashing point, the flashing point is 5°C or higher.

When a granulating agent satisfying the above-described requirement is included, in a process of compositing the graphite particles (A) or a precursor thereof, and the graphite particles (B) in the subsequent second step of the third process, the granulating agent forms a liquid bridge between raw material carbon materials. Accordingly, an attractive force, which occurs between the raw material carbon material due to a capillary negative pressure on an inner side of the liquid bridge and surface tension of the liquid, acts as a liquid bridge adhesion force between particles. Accordingly, the liquid bridge adhesion force between raw material carbon materials increases, and thus the raw material carbon material can more strongly adhere to each other.

In the present invention, the strength of the liquid bridge adhesion force between the precursor of the graphite particles (A) and the graphite particles (B), which occurs due to liquid bridge between the graphite particles (A) or a precursor thereof, and the graphite particles (B) by the granulating agent, is proportional to a value of $\gamma\cos\theta$ (here, $\gamma$ represents surface tension of the liquid, and $\theta$ represents a contact angle between the liquid and the particles). That is, when the graphite particles (A) or a precursor thereof and the graphite particles (B) are composited, it is preferable that the granulating agent has high wettability with the graphite particles (A) or a precursor thereof and the graphite particles (B). Specifically, it is preferable to select the granulating agent that satisfies a relationship of $\cos\theta>0$ so that the value of $\gamma\cos\theta$ is greater than 0, and it is preferable that the contact angle $\theta$ between the granulating agent and graphite, which is measured by the following measurement method, is less than 90°.

<Method of Measuring Contact Angle $\theta$ with Graphite>

1.2 $\mu$L of granulating agent is added dropwise to an HOPG surface. When spreading converges and a variation rate of the contact angle $\theta$ for one second becomes 3% or less (also referred to as a normal state), a contact angle at that time is measured by a contact angle measuring device (automatic contact angle meter DM-501, manufactured by Kyowa Interface Science Co., Ltd.). Here, in the case of using a granulating agent of which a viscosity at 25°C is 500 cP or less, a value at 25°C is set as a measurement value of the contact angle θ. In the case of using a granulating agent of which a viscosity at 25°C is greater than 500 cP, a value at a temperature raised to a temperature, at which the viscosity becomes 500 cP or less, is set as the measurement value of the contact angle θ.

In addition, the contact angle θ between the graphite particles (A) or a precursor thereof and the graphite particles (B), and the granulating agent is close to 0°, the value of γcosθ is enlarged. Accordingly, liquid bridge adhesion force between the graphite particles (A) or a precursor thereof, and the graphite particles (B) increases, and thus the graphite particles (A) or a precursor thereof and the graphite particles (B) can more strongly adhere to each other. Accordingly, the contact angle θ between the granulating agent and the graphite is more preferably 85° or less, still more preferably 80° or less, still more preferably 50° or less, still more preferably 30° or less, and particularly preferably 20° or less.

When using a granulating agent with great surface tension γ, the value of γcosθ is also enlarged, and the adhesion force of the carbon material particles is improved. Accordingly, γ is preferably 0 or greater, more preferably 15 or greater, and still more preferably 30 or greater.

The surface tension y of the granulating agent that is used in the invention is measured in accordance with Wilhelmy method by using a surface tension meter (for example, DCA-700 manufactured by Kyowa Interface Science Co., Ltd.).

In addition, a viscous force as a resistance component against elongation of the liquid bridge along with migration of particles operates, and the magnitude of the viscous force is proportional to the viscosity. Accordingly, the viscosity of the granulating agent is not particularly limited as long as the granulating agent is a liquid in the granulation process of compositing the graphite particles (A) or a precursor thereof, and the graphite particles (B), and the viscosity is preferably 1 cP or greater in the granulation process. In addition, the viscosity of the granulating agent at 25°C is preferably 1 to 100000 cP, more preferably 5 to 10000 cP, still more preferably 10 to 8000 cP, and particularly preferably 50 to 6000 cP. When the viscosity is in the above-described range, it is possible to prevent detachment of adhered particles due to an impact force such as collision with a rotor or a casing when granulating the raw material graphite.

The viscosity of the granulating agent that is used in the invention is measured by using a rheometer (for example, ARES manufactured by Rheometric Scientific Inc.). In the measurement in a state in which an appropriate amount of an object (here, the granulating agent) to be measured is input into a cup and a temperature is adjusted to a predetermined temperature. In the case where a shear stress at a shear rate of 100 s$^{-1}$ is 0.1 Pa or greater, a value obtained through measurement at a shear rate of 100 s$^{-1}$ is defined as the viscosity in this specification. In addition, in the case where the shear stress at a shear rate of 100 s$^{-1}$ is less than 0.1 Pa, a value obtained through measurement at a shear rate of 1000 s$^{-1}$ is defined as the viscosity. In addition, in the case where shear stress at a shear rate of 1000s$^{-1}$ is less than 0.1 Pa, a value obtained through measurement at a shear rate at which the shear stress becomes 0.1 Pa or greater is defined as the viscosity. Furthermore, when a spindle that is used is set to a shape appropriate for a low-viscosity fluid, the shear stress can be set to 0.1 Pa or greater.

In addition, in the case where the granulating agent, which is used in the invention, includes an organic solvent, it is preferable to satisfy a condition in which at least one kind of the organic solvent does not have a flashing point, or when the organic solvent has the flashing point, the flashing point is 5°C or higher. According to this, it is possible to prevent a risk of flashing, firing, or explosion of the organic compound which is derived from impact or heat generation when granulating the raw material carbon material in the subsequent third process. As a result, it is possible to stably perform manufacturing with efficiency.

Examples of the granulating agent that is used in the invention include coal-tar, petroleum heavy oil, synthetic oils such as paraffin-based oil including liquid paraffin and the like, olefin-based oil, naphthene-based oil, and aromatic oil, natural oils such as plant-based oils, animal-based aliphatics, esters, higher alcohols, and the like, organic compounds such as a resin binder solution in which a resin binder is dissolved in a solvent having a flashing point of 5°C or higher and preferably 21°C or higher, aqueous solvents such as water, mixtures thereof, and the like.

Examples of the organic solvent having the flashing point of 5°C or higher include aromatic hydrocarbons such as alkyl benzene including xylene, isopropyl benzene, ethyl benzene, propyl benzene, and the like, alkyl naphthalene including methyl naphthalene, ethyl naphthalene, propyl naphthalene, and the like, allyl benzene including styrene and the like, and allyl naphthalene; aliphatic hydrocarbons such as octane, nonane, and decane; ketones such as methyl isobutyl ketone, diisobutyl ketone, and cyclohexanone; esters such as propyl acetate, butyl acetate, isobutyl acetate, and amyl acetate; alcohols such as methanol, ethanol, propanol, butanol, isopropyl alcohol, isobutyl alcohol, ethylene glycol, propylene glycol, diethylene glycol, triethylene glycol, tetraethylene glycol, and glycerin; glycol derivatives such as ethylene glycol monomethyl ether, ethylene glycol monoethyl ether, ethylene glycol monobutyl ether, diethylene glycol monobutyl ether, triethylene glycol monobutyl ether, tetraethylene glycol monobutyl ether, methoxy propanol, methoxy propyl-2-acetate, methoxy methyl butanol, methoxy butyl acetate, diethylene glycol dimethyl ether, dipropylene glycol dimethyl ether, diethylene glycol ethyl methyl ether, triethylene glycol dimethyl ether, tripropylene glycol dimethyl ether, tetraethylene glycol dimethyl ether, and ethylene glycol monophenyl ether; ethers such as 1,4-dioxane; nitrogen-containing compounds such as dimethylformamide, pyridine, 2-pyrrolidone, N-methyl-2-pyrrolidone; sulfur-containing compounds such as dimethyl sulfoxide; halogen-containing compounds such as dichloromethane, chloroform, carbon tetrachloride, dichloroethane, trichloroethane, and chlorobenzene; mixtures thereof; and the like. For example, materials such as toluene having a low flashing point are not included. The organic solvent can be used as the granulating agent in a state of an elementary substance.

As the resin binder, binders which are known in the related art can be used. Examples of the resin binder that can be used include cellulose-based resin binders such as ethyl cellulose, methyl cellulose, and salts thereof; acrylic resin binders such as polymethyl acrylate, polyethyl acrylate, polybutyl acrylate, polyacrylic acid, and salts thereof; methacrylic resin binders such as polymethyl methacrylate, polyethyl methacrylate, and polybutyl methacrylate; phenol resin binders; and the like.

Among these, the coal-tar, the petroleum heavy oil, the paraffin-based oil such as the liquid paraffin, and the aromatic oils are preferable from the viewpoint that it is possible to manufacture a negative electrode material in which circularity is high and the number of fine powders is small.

As the granulating agent, it is preferable to use a granulating agent that can be efficiently removed in the following process of removing the granulating agent, and does not have an adverse effect on battery characteristics such as capacity, input and output characteristics, and storage and cycle characteristics. Specifically, a granulating agent, of which a weight reduction when being heated at 700°C in an inert atmosphere is typically 50% or greater, preferably 80% or greater, more preferably 95% or greater, still more preferably 99% or greater, and particularly preferably 99.9% or greater, can be appropriately selected.

Examples of a method of mixing the graphite particles (A) or a precursor thereof and/or the graphite particles (B), and the granulating agent include a method of mixing the graphite particles (A) or a precursor thereof, and/or the graphite particles (B), and the granulating agent by using a mixer or a kneader, a method of mixing a granulating agent obtained by dissolving an organic compound in a low-viscosity diluting solvent, the graphite particles (A) or a precursor thereof and/or the graphite particles (B), and of removing the diluting solvent. In addition, examples of the method also include a method in which the granulating agent, the graphite particles (A) or a precursor thereof, and/or the graphite particles (B) are put into a granulation apparatus, and a mixing process and a granulation process of the graphite particles (A) or a precursor thereof, and/or the graphite particles (B), and the granulating agent are simultaneously performed when compositing the graphite particles (A) or a precursor thereof, and the graphite particles (B) in the subsequent second step of the third process.

Among the methods, a compositing process, in which only the graphite particles (A) or a precursor thereof and the granulating agent are mixed with each other, and the graphite particles (B), to which the granulating agent does not adhere, is mixed with the resultant mixture, is preferable from the viewpoint that granulation of only the graphite particles (B) is suppressed, and it is possible to manufacture a desired composite carbon particles with efficiency.

The amount of the granulating agent added is preferably 0.1 parts by weight or greater on the basis of 100 parts by weight as the total amount of the graphite particles (A) or a precursor thereof, and the graphite particles (B), more preferably 1 part by weight or greater, still more preferably 3 parts by weight or greater, still more preferably 6 parts by weight or greater, still more preferably 10 parts by weight or greater, particularly preferably 12 parts by weight or greater, and most preferably 15 parts by weight or greater. The amount of the granulating agent added is preferably 1000 parts by weight or less, more preferably 100 parts by weight or less, more preferably 80 parts by weight or less, particularly preferably 50 parts by weight or less, and most preferably 30 parts by weight or less. In the above-described range, problems such as a decrease in the degree of compositing due to a decrease in an inter-particle adhesion force, and a decrease in productivity due to adhesion of the graphite particles (A) or a precursor thereof and the graphite particles (B) to the apparatus are less likely to occur.

(Second Step of Third Process) Process of Granulating Obtained Mixed Product

As an apparatus that is used in the compositing, for example, it is possible to use an apparatus that applies an impact force as a main action, and a mechanical action such as compression, friction, and a shear force, which also include an interaction between particles, to carbonaceous substance particles in a repetitive manner.

Specifically, preferred examples of the apparatus include an apparatus which includes a rotor provided with a plurality of blades in a casing, and in which the rotor rotates at a high speed to apply a mechanical action such as impact, compression, friction, and a shear force with respect to the graphite particles (A) or a precursor thereof, and the graphite particles (B), which are put into the casing and to which the granulating agent adheres, so as to perform a surface treatment. In addition, it is preferable for the apparatus to include a mechanism that circulates graphite to repetitively apply the mechanical action.

Examples of a preferred apparatus that applies the mechanical action to the graphite particles (A) or a precursor thereof, and the graphite particles (B) includes Hybdization System (manufactured by Nara Machinery Co., Ltd.), Kryptron and Kryptron Orb (manufactured by Earthtechnica Co, Ltd.), CF mill (manufactured by Ube Industries, Ltd.), Mecanofusion System (manufactured by Hosokawa Micron Corporation), Theta Composer (manufactured by Tokuju Corporation), and the like. Among these, the Hybdization System manufactured by Nara Machinery Co., Ltd. is preferable.

When performing a treatment by using the apparatus, for example, a peripheral speed of the rotor that rotates is typically 30 m/second or greater, preferably 50 m/second or greater, more preferably 60 m/second or greater, still more preferably 70 m/second or greater, and particularly preferably 80 m/second or greater. The peripheral speed is typically 100 m/second or less. In the above-described range, spheroidization can be more efficiently performed and thus the range is preferable.

In addition, the treatment of applying the mechanical action to the graphite particles (A) or a precursor thereof, and the graphite particles (B) can be performed by only allowing the graphite particles (A) or a precursor thereof and the graphite particles (B) to pass through the apparatus in a simple manner, but it is preferable to perform the treatment by circulating the graphite particles (A) or a precursor thereof and the graphite particles (B) or allowing these to reside at the inside of the apparatus for 30 seconds or longer, more preferably 1 minute or longer, still more preferably 3 minutes or longer, and particularly preferably 5 minutes or longer. In the case of simply allowing the graphite particles (A) or a precursor thereof and the graphite particles (B) to pass through the apparatus, it is preferable that passing is performed in a plurality of times in a total treatment time of 30 seconds or longer, more preferable 1 minute or longer, still more preferably 3 minutes or longer, and particularly preferably 5 minutes or longer.

• Fourth Process: Process of Graphitizing Composited Carbon Material Precursor Obtained

(Graphitization)

In a method of manufacturing the composite carbon material of an embodiment of the invention, a graphitization process may be provided as necessary. Particularly, in the case of using a precursor of the graphite particles (A) in the third process, when graphitization is performed in this process, it is possible to obtain a preferred carbon material of the invention.

The graphitization is performed to increase discharging capacity in battery evaluation, and to improve crystallinity of the composite carbon material.

A temperature when performing the graphitization is preferably 2000°C to 3300°C, and more preferably 3000°C to 3200°C. When the graphitization temperature is higher than 3300°C, there is a concern that a sublimation amount of graphite is likely to increase. In addition, when the graphitization temperature is lower than 2000°C, there is a concern that reversible capacity of a battery may decrease. As a result, it may be difficult to manufacture a high-capacity battery.

Retention time when performing the graphitization is not particularly limited. Typically, the retention time is longer than 1 minute and is equal to or shorter than 72 hours.

The graphitization is performed under an inert gas atmosphere such as an argon gas, or under a non-oxidizing atmosphere due to a gas that is generated from the graphite crystal precursor that is baked.

Although not particularly limited, as an apparatus that is used in the graphitization, for example, a direct energization furnace, an Atchison furnace, a resistive heating furnace as an indirect energization type, an inductive heating furnace, and the like can be used.

Furthermore, when performing the graphitization or in processes before the graphitization, a graphitization catalyst such as Si, B, and Ni may be incorporated to a material (the pitch raw material or the graphite crystal precursor that is subjected to the heat treatment), or the graphitization catalyst may be brought into direct contact with a surface of the material.

• Other Treatments

(Classifying Treatment)

In addition to the respective treatments, various treatments such as a reclassifying treatment can be performed in a range not inhibiting the effect of the invention. The reclassifying treatment is performed to remove a rough powder or a fine powder after the granulation so as to adjust a particle size to a target particle size.

Although an apparatus that is used in a classifying treatment is not particularly limited. For example, in the case of performing classification with a dry sieve, a rotation type sieve, a shaking type sieve, a gyratory sieve, a vibration type sieve, and the like can be used. In the case of dry air flow type classification, a gravity type classifier, an inertia force type classifier, a centrifugal force type classifier (classifier, cyclone, and the like), and the like can be used. In the case of performing classification with a wet sieve, a mechanical wet classifier, a water power classifier, a setting classifier, a centrifugal wet classifier, and the like can be used.

With regard to the reclassifying treatment, in the case of performing the graphitization after the granulation, the graphitization may be performed after performing the reclassifying treatment after the granulation, or the reclassifying treatment may be performed after performing the graphitization after the granulation. The reclassifying treatment can be omitted.

(Process of Removing Granulating Agent)

In an embodiment of the invention, a process of removing the granulating agent may be provided. Examples of the method of removing the granulating agent include a method of performing washing with a solvent, and a method of removing the granulating agent through volatilization and decomposition of the granulating agent by a heat treatment. In addition, the fourth process can also function as this process.

A heat treatment temperature is preferably 60°C or higher, more preferably 100°C or higher, still more preferably 200°C or higher, still more preferably 300°C or higher, particularly preferably 400°C or higher, and most preferably 500°C. In addition, the heat temperature is preferably 1500°C or lower, more preferably 1000°C or lower, and still more preferably 800°C or lower. In the above-described range, it is possible to sufficiently remove the granulating agent through volatilization and decomposition, and thus it is possible to improve productivity.

Heat treatment time is preferably 0.5 to 48 hours, more preferably 1 to 40 hours, still more preferably 2 to 30 hours, and particularly preferably 3 to 24 hours. In the above-described range, it is possible to sufficiently remove the granulating agent through volatilization and decomposition, and thus it is possible to improve productivity.

Examples of a heat treatment atmosphere include an active atmosphere such as an atmospheric atmosphere, and an inert atmosphere such as a nitrogen atmosphere and an argon atmosphere. In the case of performing the heat treatment at 200°C to 300°C, there is no particular limitation. However, in the case of performing the heat treatment at 300°C or higher, the inert atmosphere such as the nitrogen atmosphere and the argon atmosphere is preferable from the viewpoint of preventing oxidization of a graphite surface.

(Process of Additionally Attaching Carbonaceous Substance Having Crystallinity Lower Than Crystallinity of Composite Carbon Material to Composited Carbon Material (Composite Carbon Material))

An embodiment of the invention may include a process of additionally attaching a carbonaceous substance having crystallinity lower than that of the composite carbon material to the composited carbon material (composite carbon material). That is, the carbonaceous substance can be additionally composited to the composite carbon material. According to this process, it is possible to obtain a carbon material capable of suppressing a side reaction with an electrolytic solution, or capable of improving rapid charging and discharging properties.

Composite graphite, which is obtained by additionally attaching the carbonaceous substance having crystallinity lower than that of raw material carbon material to the composited carbon material, may be referred to as "carbonaceous composite carbon material".

The process of attaching (compositing) the carbonaceous substance to the composited carbon material is a process of carbonizing or graphitizing an organic compound by mixing the organic compound that becomes the carbonaceous substance, and the composited carbon material and by heating the resultant mixture under a non-oxidizing atmosphere, preferably, under flow of nitrogen, argon, carbon dioxide, and the like.

As a specific organic compound that becomes the carbonaceous substance, various kinds of organic compounds can be used. Examples thereof include carbon-based heavy oil such as various kinds of hard or soft coal-tar pitch and coal liquefied oil, petroleum heavy oil such as atmospheric or reduced-pressure distillation residue oil of crude oil, decomposition-based heavy oil that is a by-product when manufacturing ethylene through decomposition of naphtha, and the like.

In addition, examples of the organic compound also include heat treatment pitch such as ethylene tar pitch, FCC decant oil, and Ashland pitch which are obtained by subjecting the decomposition-based heavy oil to a heat treatment. In addition, examples of the organic compound include a vinyl-based polymer such as polyvinyl chloride, polyvinyl acetate, polyvinyl butyral, and polyvinyl alcohol, a substituted phenol resin such as 3-methylphenol formaldehyde resin, and 3,5-dimethylphenol formaldehyde resin, aromatic hydrocarbon such as acenaphthylene, decacyclene, and anthracene, a nitrogen cyclic compound such as phenazine and acridine, and a sulfur cyclic compound such as tiophene. In addition, examples of an organic compound that allows carbonization to progress at a solid phase includes a natural polymer such as cellulose, a chain vinyl resin such as polyvinylidene chloride and polyacrylonitrile, an aromatic polymer such as polyphenylene, a thermosetting resin such as furfuryl alcohol resin, phenolformaldehyde resin, and imide resin, a thermosetting resin raw material such as furfuryl alcohol, and the like. Among these, the petroleum heavy oil is preferable.

Although a heating temperature (baking temperature) is different depending on an organic compound that is used to prepare a mixture, the heating temperature is typically 800°C or higher, preferably 900°C or higher, and more preferably 950°C or higher to sufficiently perform carbonization or graphitization. The upper limit of the heating temperature is a temperature at which a carbide of the organic compound does not reach the same crystal structure as a crystal structure of squamous graphite in the mixture, and is typically 3500°C at the highest. The upper limit of the heating temperature is 3000°C, preferably 2000°C, and more preferably 1500°C.

After performing the above-described treatment, crushing and/or pulverizing treatment is performed to obtain a carbonaceous composite carbon material.

A shape of the carbonaceous composite carbon material is arbitrary, and an average particle size is typically 2 to 50 μm, preferably 5 to 35 μm, and particularly preferably 8 to 30 μm. Crushing and/or pulverization and/or classifying are performed as necessary to accomplish the above-described particle size range.

Furthermore, other processes may be added or control conditions which are not described may be added as long as the effect of this embodiment does not deteriorate.

The amount of the carbonaceous substance contained in the carbonaceous composite carbon material is typically 0.01% by mass or greater with respect to a composite carbon material that becomes a raw material, preferably 0.1% by mass or greater, more preferably 0.3% by mass or greater, still more preferably 0.7% by mass or greater, particularly preferably 1% by mass or greater, and most preferably 1.5% by mass or greater. In addition, the amount of the carbonaceous substance contained is typically 20% by mass or less, preferably 15% by mass or less, more preferably 10% by mass or less, particularly preferably 7% by mass or less, and most preferably 5% by mass or less.

When the amount of the carbonaceous substance contained in the carbonaceous composite carbon material is excessively great, in the case of performing rolling at a pressure that is sufficient to accomplish high capacity in a non-aqueous secondary battery, a carbon material is damaged, and thus material breakage occurs. Accordingly, there is a tendency that an increase in charging and discharging irreversible capacity at an initial cycle, and deterioration of initial efficiency may be caused.

On the other hand, when the amount is excessively small, there is a tendency that the effect obtained through coating is less likely to be obtained.

In addition, the amount of the carbonaceous substance contained in the carbonaceous composite carbon material can be calculated from sample mass before and after material baking on the basis of, for example, the following expression. In addition, at this time, the calculation is performed on the assumption that a variation of a mass of the composite carbon material that becomes a nucleus before and after the baking is not present.

$$\text{Amount of carbonaceous substance contained (\% by mass)} = [(w2-w1)/w1] \times 100$$

(Here, w1 represents a mass (kg) of the composite carbon material that becomes a nucleus, and w2 represents a mass (kg) of the carbonaceous composite carbon material)

<Mixing with Another Carbon Material>

In addition, a carbon material that is different from the composite carbon material or the carbonaceous composite carbon material can be mixed to improve orientation properties of an electrode plate, permeability of an electrolytic solution, a conduction path, and the like, and to improve cycle characteristics, electrode plate swelling, and the like (hereinafter, the carbon material different from the composite carbon material or the carbonaceous composite carbon material may be referred to as "additive carbon material", and a carbon material, which is obtained by mixing a carbon material different from the composite carbon material or the carbonaceous composite carbon material to the composite carbon material or the carbonaceous composite carbon material, may be referred to as "mixed carbon material".)

As the additive carbon material, for example, a material, which is selected among natural graphite, artificial graphite, coated graphite obtained by coating the carbon material with the carbonaceous substance, amorphous carbon, and a carbon material that contains metal particles or a metal compound, can be used. In addition, the composite carbon material may be mixed. Any one kind of the materials may be used alone, or two or more kinds thereof may be used in an arbitrary combination or an arbitrary composition.

As the natural graphite, for example, a highly purified carbon material, or spheroidized natural graphite can be used. Typically, the "purification" represents an operation of performing a treatment in an acid such as hydrochloric acid, sulfuric acid, nitric acid, and hydrofluoric acid, or an operation of performing a plurality of acid treatment processes in combination to melt and remove an ash content, a metal, and the like which are contained in low-purity natural graphite. Typically, in the purification, a water washing treatment and the like are performed after the acid treatment process to remove an acid content that is used in the purification process. In addition, the ash content, the metal, and the like may be volatilized and removed by performing a treatment at a high temperature of 2000°C or higher instead of the acid treatment process. In addition, the ash content, the metal, and the like may be removed by performing a treatment in a halogen gas atmosphere such as a chlorine gas when performing the high-temperature heat treatment. In addition, the methods may be used in an arbitrary combination.

A volume-based average particle size (also simply referred to as "average particle size") of the natural graphite is in a range of typically 5 $\mu$m or greater, preferably 8 $\mu$m or greater, more preferably 10 $\mu$m or greater, and particularly preferably 12 $\mu$m or greater. In addition, the average particle size is typically 60 $\mu$m or less, preferably 40 $\mu$m or less, and particularly preferably 30 $\mu$m or less. When the average particle size is in the above-described range, high-speed charging and discharging characteristics and productivity become better, and thus the range is preferable.

A BET specific surface area of the natural graphite is typically in a range of 1 $m^2$/g or greater and preferably 2 $m^2$/g or greater. In addition, the BET specific surface area is typically in a range of 30 $m^2$/g or less, and preferably 15 $m^2$/g or less. When the specific surface area is in the above-described range, high-speed charging and discharging characteristics and productivity become better, and thus the range is preferable.

In addition, a tap density of the natural graphite is typically in a range of 0.6 $g/cm^3$ or greater, preferably 0.7 $g/cm^3$ or greater, more preferably 0.8 $g/cm^3$ or greater, and still more preferably 0.85 $g/cm^3$ or greater. In addition, the tap density is typically in a range of 1.3 $g/cm^3$ or less, preferably 1.2 $g/cm^3$ or less, and more preferably 1.1 $g/cm^3$ or less. In this range, high-speed charging and discharging characteristics and productivity become better, and thus the range is preferable.

Examples of the artificial graphite include particles obtained by graphitizing a carbon material, and the like. For example, a particle that is obtained by baking and graphitizing a single graphite precursor particle in a powder state, granulated particles obtained by molding a plurality of graphite precursor particles, by baking and graphitizing the resultant molded body, and by pulverizing the graphitized molded body, and the like can be used.

A volume-based average particle size of the artificial graphite is typically in a range of 5 $\mu$m or greater and preferably 10 $\mu$m or greater. In addition, the volume-based average particle size is typically in a range of 60 $\mu$m or less, preferably 40 $\mu$m or less, and more preferably 30 $\mu$m or less. In this range, suppression of electrode plate swelling and productivity become better, and thus the range is preferable.

A BET specific surface area of the artificial graphite is typically in a range of 0.5 $m^2$/g or greater and preferably 1.0 $m^2$/g or greater. In addition, the BET specific surface area is typically in a range of 8 $m^2$/g or less, preferably 6 $m^2$/g or less, and more preferably 4 $m^2$/g or less. In this range, suppression of electrode plate swelling and productivity become better, and thus the range is preferable.

In addition, a tap density of the artificial graphite is typically in a range of 0.6 $g/cm^3$ or greater, preferably 0.7 $g/cm^3$ or greater, more preferably 0.8 $g/cm^3$ or greater, and still more preferably 0.85 $g/cm^3$ or greater. In addition, the tap density is typically in a range of 1.5 $g/cm^3$ or less, preferably 1.4 $g/cm^3$ or less, and more preferably 1.3 $g/cm^3$ or less. In this range, suppression of electrode plate swelling and productivity become better, and thus the range is preferable.

As the coated graphite obtained by coating the carbon material with the carbonaceous substance, for example, it is possible to use particles that is obtained by coating natural graphite or artificial graphite with an organic compound that is a precursor of the carbonaceous substance, and by baking and/or graphitizing the resultant particles, or particles obtained by coating natural graphite or artificial graphite with the carbonaceous substance through CVD.

A volume-based average particle size of the coated graphite is typically in a range of 5 $\mu$m or greater, preferably 8 $\mu$m or greater, more preferably 10 $\mu$m or greater, and particularly preferably 12 $\mu$m or greater. In addition, the volume-based average particle size is typically in a range of 60 $\mu$m or less, preferably 40 $\mu$m or less, and particularly preferably 30 $\mu$m or less. When the average particle size is in the above-described range, high-speed charging and discharging characteristics and productivity become better, and thus the range is preferable.

A BET specific surface area of the coated graphite is typically in a range of 1 $m^2$/g or greater, preferably 2 $m^2$/g or greater, and more preferably 2.5 $m^2$/g or greater. In addition, the BET specific surface area is typically in a range of 20 $m^2$/g or less, preferably 10 $m^2$/g or less, more preferably 8 $m^2$/g or less, and particularly preferably 5 $m^2$/g or less. When the specific surface area is in the above-described range, high-speed charging and discharging characteristics and productivity become better, and thus the range is preferable.

In addition, a tap density of the coated graphite is typically in a range of 0.6 $g/cm^3$ or greater, preferably 0.7 $g/cm^3$ or greater, more preferably 0.8 $g/cm^3$ or greater, and still more preferably 0.85 $g/cm^3$ or greater. In addition, the tap density is typically in a range of 1.3 $g/cm^3$ or less, preferably 1.2 $g/cm^3$ or less, and more preferably 1.1 $g/cm^3$ or less. When the tap density is this range, high-speed charging and discharging characteristics and productivity become better, and thus the range is preferable.

As the amorphous carbon, for example, particles obtained by baking bulk mesophase, or particles obtained by subjecting easy-graphitizable organic compound to infusibilization treatment and by baking the organic compound can be used.

A volume-based average particle size of the amorphous carbon is typically in a range of 5 $\mu$m or greater and preferably 12 $\mu$m or greater. In addition, the volume-based average particle size is typically in a range of 60 $\mu$m or less and preferably 40 $\mu$m or less. In this range, high-speed charging and discharging characteristics and productivity become better, and thus the range is preferable.

A BET specific surface area of the amorphous carbon is typically in a range of 1 $m^2$/g or greater, preferably 2

$m^2/g$ or greater, and more preferably 2.5 $m^2/g$ or greater. In addition, the BET specific surface area is typically in a range of 8 $m^2/g$ or less, preferably 6 $m^2/g$ or less, and more preferably 4 $m^2/g$ or less. When the specific surface area is in this range, high-speed charging and discharging characteristics and productivity become better, and thus the range is preferable.

In addition, a tap density of the amorphous carbon is typically in a range of 0.6 $g/cm^3$ or greater, preferably 0.7 $g/cm^3$ or greater, more preferably 0.8 $g/cm^3$ or greater, and still more preferably 0.85 $g/cm^3$ or greater. In addition, the tap density is typically in a range of 1.3 $g/cm^3$ or less, preferably 1.2 $g/cm^3$ or less, and more preferably 1.1 $g/cm^3$ or less. In this range, high-speed charging and discharging characteristics and productivity become better, and thus the range is preferable.

Examples of the carbon material that contains a metal particle or a metal compound include a material that is obtained by compositing a metal selected from the group consisting of Fe, Co, Sb, Bi, Pb, Ni, Ag, Si, Sn, Al, Zr, Cr, P, S, V, Mn, Nb, Mo, Cu, Zn, Ge, In, Ti, and the like, or a compound thereof with graphite. As the metal or the compound thereof that can be used, an alloy constituted by two or more kinds of metals may be used, or the metal particle may be an alloy particle that is formed by two or more kinds of metal elements. Among these, metals selected from the group consisting of Si, Sn, As, Sb, Al, Zn, and W, or compounds thereof are preferable. Among these, Si and SiOx are preferable. The chemical formula SiOx is obtained by using silicon dioxide ($SiO_2$) and metal silicon (Si) as a raw material, and a value of x is typically in a range of $0 < x < 2$, preferably 0.2 to 1.8, more preferably 0.4 to 1.6, and still more preferably 0.6 to 1.4. In this range, it is possible to accomplish high capacity, and it is possible to reduce irreversible capacity due to bonding between Li and oxygen.

From the viewpoint of cycle lifespan, a volume-based average particle size of the metal particles is typically 0.005 $\mu$m or greater, preferably 0.01 $\mu$m or greater, more preferably 0.02 $\mu$m or greater, and still more preferably 0.03 $\mu$m or greater. The volume-based average particle size is typically 10 $\mu$m or less, preferably 9 $\mu$m or less, and more preferably 8 $\mu$m or less. When the average particle size is in this range, volume expansion along with charging and discharging is reduced, it is possible to obtain good cycle characteristics while maintaining charging and discharging capacity.

A BET specific surface area of the metal particles is typically 0.5 to 120 $m^2/g$, and preferably 1 to 100 $m^2/g$. When the specific surface area is in this range, charging and discharging efficiency and discharging capacity of a battery are high, and getting-in and getting-out of lithium during high-speed charging and discharging is fast, and rate characteristics are excellent. Accordingly, the range is preferable.

An apparatus that is used to mix the composite carbon material or the carbonaceous composite carbon material, and the additive carbon material with each other is not particularly limited. In the case of a rotation-type mixer, for example, a cylindrical mixer, a twin-cylindrical mixer, a double conical mixer, a cubic mixer, and a rounded hoe type mixer can be used. In the case of fixed-type mixer, for example, a spiral mixer, a ribbon-type mixer, a muller type mixer, a helical flight type mixer, a pugmill type mixer, and a flowing type mixer can be used.

<Negative Electrode for Non-aqueous Secondary Battery>

The invention also relates to a negative electrode that contains the composite carbon material of the invention. With regard to the negative electrode of the invention, a basic configuration and a manufacturing method are not particularly limited. Hereinafter, the composite carbon material also includes the carbonaceous composite carbon material and the mixed carbon material unless otherwise stated. The negative electrode (hereinafter, also appropriately referred to as "electrode sheet") for a non-aqueous secondary battery, which uses the composite carbon material of the invention, or the composite carbon material manufactured by the manufacturing method of the invention, includes a current collector, and a negative electrode active material layer that is formed on the current collector. The active material layer contains at least the composite carbon material of the invention, or the composite carbon material that is manufactured by the manufacturing method of the invention. More preferably, the active material layer contains a binder.

Although not particularly limited, as the binder, it is preferable to use a binder that has an olefinic unsaturated bond in a molecular. The kind of the binder is not particularly limited, and specific examples of the binder include a styrene-butadiene rubber, a styrene-isoprene-styrene rubber, an acrylonitrile-butadiene rubber, a butadiene rubber, an ethylene-propylene-diene copolymer, and the like. When using the binder having the olefinic unsaturated bond, it is possible to reduce swelling of the active material layer with respect to an electrolytic solution. Among these, the styrene-butadiene rubber is preferable from the viewpoint of easy availability.

When using the binder having the olefinic unsaturated bond and the carbon material of the invention as an active material in combination, it is possible to increase the strength of the negative electrode plate. When the strength of the negative electrode is high, deterioration of the negative electrode due to charging and discharging is suppressed, and thus it is possible lengthen a cycle lifespan. In addition, in the negative electrode according to the invention, adhesive strength between the active material layer and the current collector is high. Accordingly, even when reducing the amount of the binder contained in the active material layer, it is considered that problem of peeling of the active material layer from the current collector when manufacturing a battery by winding the negative electrode would not arise.

As the binder having the olefinic unsaturated bond in a molecular, a binder in which a molecular weight is large, and/or in which a ratio of the unsaturated bond is large is preferable. Specifically, in the case of a binder in which a molecular weight is large, a weight-average molecular weight is preferably in a range of 10,000 or greater, and more preferably 50,000 or greater. In addition, the molecular weight is preferably in a range of 1,000,000 or less, and more preferably 300,000 or less. In addition, in the case of a binder in which a ratio of the unsaturated bond is large, the number of moles of the olefinic unsaturated bonds per 1 g of the entirety of binders is preferably in a range of $2.5 \times 10^{-7}$ moles or greater, and more preferably $8 \times 10^{-7}$ moles or greater. In addition, the number of moles is preferably in a range of $1 \times 10^{-6}$ moles or less, and more preferably $5 \times 10^{-6}$ moles or less. The binder may satisfy at least any one of a requirement related to the number of molecular weight and a requirement related to the ratio of the unsaturated bond, but it is more preferable that the binder satisfies both of the requirements. When the molecular weight of the binder having the olefinic unsaturated bond is in the above-described range, mechanical strength and flexibility are excellent.

In addition, the degree of unsaturation of the binder having the olefinic unsaturated bond is preferably 15% or greater, more preferably 20% or greater, and still more preferably 40% or greater. In addition, the degree of unsaturation is preferably 90% or less, and more preferably 80% or less. Furthermore, the degree of unsaturation represents a ratio (%) of a double bond to a repetitive unit of a polymer.

In the invention, a binder that does not have the olefinic unsaturated bond can be used in combination with the binder having the olefinic unsaturated bond in a range in which the effect of the invention is not undermined. A mixing ratio of the binder that does not have the olefinic unsaturated bond to the binder that has the olefinic unsaturated bond is preferably in a range of 150% by mass or less, and more preferably 120% by mass or less.

When using the binder that does not have the olefinic unsaturated bond in combination, it is possible to improve application properties. However, when the amount of the binder that is used in combination is excessively great, the strength of the active material layer decreases.

Examples of the binder that does not have the olefinic unsaturated bond include a polysaccharide thickener such as methyl cellulose, carboxymethyl cellulose, starch, carrageenan, pullulan, guar gum, xanthan gum, polyethers such as polyethylene oxide and polypropylene oxide, vinyl alcohols such as polyvinyl alcohol and polyvinyl butyral, polyacids such as polyacrylic acid and polymethacrylic acid or metal salts of the polymers, a fluorine-containing polymer such as polyvinylidene fluoride, alkane polymers such as polyethylene and polypropylene and copolymers thereof, and the like.

In the case where the carbon material according to the invention is used in combination with the bonder having the olefinic unsaturated bond, it is possible to further reduce a ratio of a binder that is used in the active material layer in comparison to the related art. Specifically, a mass ratio between the carbon material according to the invention and the binder (this binder may be a mixture of the binder that has the unsaturated bond and the binder that does not have the unsaturated bond as described above in some cases) is preferably in arrange of 90/10 or greater in terms of a dry mass ratio, and more preferably 95/5 or greater. The mass ratio is preferably in a range of 99.9/0.1 or less, and more preferably 99.5/0.5 or less. When the binder ratio is in the above-described range, it is possible to suppress a decrease in capacity and an increase in resistance, and the strength of an electrode plate is also excellent.

The negative electrode is formed by dispersing the above-described carbon material and binder in a dispersion medium into slurry, and by applying the slurry to the current collector. As the dispersion medium, an organic solvent such as alcohol, and water can be used. A conductive agent (conductive auxiliary agent) may be additionally added to the slurry as necessary. Examples of the conductive agent include carbon black such as acetylene black, Ketjen black, and furnace black, fine powder that has an average particle size of 1 $\mu$m or less and is constituted by Cu, Ni, or alloys thereof, and the like. It is preferable that an addition amount of the conductive agent is approximately 10% by mass or less with respect to the carbon material of the invention.

As the current collector to which the slurry is applied, a current collector that is known in the related art can be used. Specific examples of the current collector include metal thin films such as rolled copper foil, electrolytic copper foil, and stainless steel foil. The thickness of the current collector is preferably 4 $\mu$m or greater, and more preferably 6 $\mu$m or greater. The thickness of the current collector is preferably 30 $\mu$m or less, and more preferably 20 $\mu$m or less.

After applying the slurry onto the current collector, the slurry is dried at a temperature of preferably 60°C or higher and more preferably 80°C or higher, and at a temperature of preferably 200°C or lower and more preferably 195°C or lower in dried air or under an inert atmosphere to form the active material layer.

The thickness of the active material layer that is obtained by applying the slurry and by drying the slurry is preferably 5 $\mu$m or greater, more preferably 20 $\mu$m or greater, and still more preferably 30 $\mu$m or greater. In addition, the thickness of the active material layer is preferably 200 $\mu$m or less, more preferably 100 $\mu$m or less, and still more preferably 75 $\mu$m or less. When the thickness of the active material layer is in the above-described range, practicability as a negative electrode is excellent from the balance with a particle size of an active material, and thus it is possible to obtain a sufficient Li absorbing and releasing function with respect to a high-density current value.

The thickness of the active material layer may be adjusted to be the thickness in the above-described range by performing pressing after application of the slurry and drying of the slurry.

A density of the carbon material in the active material layer is different depending on a use. For use with focus given to capacity, the density is preferably 1.55 g/cm$^3$ or greater, more preferably 1.6 g/cm$^3$ or greater, and still more preferably 1.65 g/cm$^3$ or greater, and particularly preferably 1.7 g/cm$^3$ or greater. In addition, the density is preferably 1.9 g/cm$^3$ or less. When the density is in the above-described range, it is possible to sufficiently secure capacity per unit volume of a battery, and rate characteristics are also less likely to deteriorate.

For example, the density is typically 1.1 to 1.65 g/cm$^3$ in a use such as a vehicle mounting use and a power tool use with focus given to input and output characteristics. In this range, it is possible to avoid an increase in contact resistance between particles due to an excessive low density, and it is also possible to suppress deterioration of rate characteristics due to an excessive high density. In the use, the density is preferably 1.2 g/cm$^3$ or greater, and more preferably 1.25 g/cm$^3$ or greater.

In a use for a portable apparatus such as a portable phone and a PC with focus given to capacity, : typically, the density can be set to 1.45 g/cm$^3$ or greater, and can be set to 1.9 g/cm$^3$ or less. In this range, it is possible to avoid a decrease in capacity per unit volume of a battery due to an excessive low density, and it is also possible to suppress deterioration of rate characteristics due to an excessive high density. In this use, the density is preferably 1.55 g/cm$^3$ or greater, more preferably 1.65 g/cm$^3$ or greater, and particularly preferably 1.7 g/cm$^3$ or greater.

In the case of manufacturing a negative electrode for a non-aqueous secondary battery by using the above-described carbon material, a manufacturing method thereof and selection of other materials are not particularly limited. In addition, even in the case of manufacturing a lithium ion secondary battery by using the negative electrode, there is no particular limitation to selection of members such as a positive electrode and an electrolytic solution which constitute the lithium ion secondary battery and are necessary for a battery configuration. Hereinafter, description will be given of details of the negative electrode, which uses the carbon material of the invention, for the lithium ion secondary battery, and the lithium ion secondary battery as an example, but materials which may be used, a manufacturing method, and the like are not limited to the following specific examples.

<Non-aqueous Secondary Battery>

A basic configuration of the non-aqueous secondary battery, particularly, a lithium ion secondary battery is the same as that of a lithium ion secondary battery that is known in the related art. Typically, a positive electrode and a negative electrode which are capable of absorbing and releasing lithium ions, and an electrolyte are provided. The negative electrode is obtained by using the carbon material of an embodiment of the invention, or the carbon material that is manufactured by a manufacturing method of an embodiment of the invention.

The positive electrode is obtained by forming a positive electrode active material layer, which contains a positive electrode active material and a binder, on a current collector.

Examples of the positive electrode active material include a metal chalcogen compound and the like which are capable of absorbing and releasing alkali metal cations such as lithium ions during charging and discharging. Examples of the metal chalcogen compound include transition metal oxides such as oxides of vanadium, oxides of molybdenum, oxides of manganese, oxides of chromium, oxides of titanium, and oxides of tungsten, transition metal sulfides such as sulfides of vanadium, sulfides of molybdenum, sulfides of titanium, and CuS, phosphorus-sulfur compounds of transition metals such as $NiPS_3$ and $FePS_3$, selenium compounds of transition metals such as $VSe_2$ and $NbSe_3$, composite oxides of transition metals such as $Fe_{0.25}V_{0.75}S_2$ and $Na_{0.1}CrS_2$, composite sulfides of transition metals such as $LiCoS_2$ and $LiNiS_2$, and the like.

Among these, $V_2O_5$, $V_5O_{13}$, $VO_2$, $Cr_2O_S$, $MnO_2$, $TiO_2$, $MOV_2O_8$, $LiCoO_2$, $LiNiO_2$, $LiMn_2O_4$, $TiS_2$, $V_2S_5$, $Cr_{0.25}V_{0.75}S_2$, $Cr_{0.5}V_{0.5}S_2$, and the like are preferable from the viewpoint of intercalation and deintercalation of lithium ions, and $LiCoO_2$, $LiNiO_2$, $LiMn_2O_4$, and lithium transition metal composite oxides obtained by substituting a part of the transition metal with other metals are particularly preferable. The positive electrode active materials may be used alone or in combination of a plurality of kinds thereof.

The binder that binds the positive electrode active material is not particularly limited, and a known binder can be randomly selected and used. Examples of the binder include inorganic compounds such as silicate and water glass, resins, which do not have an unsaturated bond, such as Teflon (registered trademark), polyvinylidene fluoride. Among these, the resins which do not have an unsaturated bond are preferable because the resins are less likely to be decomposed during oxidation reaction. When using a resin having an unsaturated bond as the resin that binds the positive electrode active material, there is a concern that the resin is decomposed during the oxidation reaction. A weight-average molecular weight of the resins is typically in a range of 10,000 or greater, and preferably 100,000 or greater. In addition, weight-average molecular weight is typically in a range of 3,000,000 or less, and preferably 1,000,000 or less.

A conductive agent (conductive auxiliary agent) may be contained in the positive electrode active material layer to improve conductivity of the electrode. The conductive agent is not particularly limited as long as the conductive agent can apply conductivity in a state of being mixed in the active material in an appropriate amount. Typical examples thereof include carbon powders such as acetylene black, carbon black, and graphite, fiber, powders, and foil of various metals, and the like.

A positive electrode plate is formed by the same method as in manufacturing of the negative electrode. Specifically, slurry of a positive electrode active material and a binder is obtained with a solvent, and the slurry is applied onto a current collector, and the slurry is dried, thereby forming the positive electrode plate. As the current collector of the positive electrode, aluminum, nickel, stainless steel (SUS), and the like are used without limitation thereto.

Examples of the electrolyte (may be referred to as "electrolytic solution"), which can be used, include a non-aqueous electrolytic solution obtained by dissolving a lithium salt in a non-aqueous solvent, and an electrolyte in a gel shape, a rubber shape, or a solid sheet shape that is obtained by adding an organic polymer compound and the like into the non-aqueous electrolytic solution.

The non-aqueous solvent for use in the non-aqueous electrolytic solution is not particularly limited, and among known non-aqueous solvents which are suggested as a solvent of the non-aqueous electrolytic solution in the related art, an arbitrary solvent is appropriately selected and used. Examples thereof include chain carbonates such as diethyl carbonate, dimethyl carbonate, and ethyl methyl carbonate; cyclic carbonates such as ethylene carbonate, propylene carbonate, and butylene carbonate; chain ethers such as 1,2-dimethoxyethane; cyclic ethers such as tetrahydrofuran, 2-methyltetrahydrofuran, sulfolane, and 1,3-dioxolane; chain esters such as methyl formate, methyl acetate, and methyl propionate; cyclic esters such as $\gamma$-butyrolactone and $\gamma$-valerolactone; and the like.

The non-aqueous solvents may be used alone or in combination of two or more kinds thereof. In the case of a mixed solvent, a combination of a mixed solvent including the cyclic carbonate and the chain carbonate is preferable. In addition, a case where the cyclic carbonate is a mixed solvent of the ethylene carbonate and the propylene carbonate is particularly preferable from the viewpoint that high ion conductivity can be exhibited even at a low temperature, and poor low-temperature charging characteristics are improved. Among these, the propylene carbonate is preferably in a range of 2% by mass to 80% by mass with respect to the entirety of the non-aqueous solvent, more preferably in a range of 5% by mass to 70% by mass, and still-more preferably in a range of 10% by mass to 60% by mass. When the ratio of the propylene carbonate is lower than the range, ion conductivity at a low temperature decreases. When the ratio of the propylene carbonate is higher than the range, in the case of using a graphite-based electrode, the propylene carbonate, which is solvated with lithium ions, intrudes between graphite phases, and thus inter-layer peeling-off of the graphite-based negative electrode active material occurs. As a result, there is a problem that sufficient capacity is not obtained.

The lithium salt that is used in the non-aqueous electrolytic solution is not particularly limited, and from among lithium salts recognized for usefulness in the non-aqueous electrolytic solution, any lithium salt is appropriately selected and used. Examples of the lithium salt include inorganic lithium salts such as halides such as LiCl and LiBr, perhalogenates such as $LiClO_4$, $LiBrO_4$, and $LiClO_4$, and inorganic fluoride salts such as $LiPF_6$, $LiBF_4$, and $LiAsF_6$; fluorine-containing organic lithium salts such as perfluoroalkane sulfonates such as $LiCF_3SO_3$ and $LiC_4F_9SO_3$, perfluoroalkane sulfonic acid imide salts such as Li trifluoromethane sulfonyl imide $((CF_3SO_2)_2NLi)$; and the like. Among these, are $LiClO_4$, $LiPF_6$, and $LiBF_4$ are preferable.

The lithium salts may be used alone or in combination of two or more kinds thereof. A concentration of the lithium salt in the non-aqueous electrolytic solution is typically in a range of 0.5 to 2.0 mol/L.

In addition, in the case of being used in a gel shape, a rubber shape, or a solid sheet shape by containing the organic polymer compound in the above-described non-aqueous electrolytic solution, specific examples of the organic polymer compound include polyether-based polymer compounds such as polyethylene oxide and polypropylene oxide; crosslinked polymers of polyether-based polymer compounds; vinyl alcohol-based polymer compounds such as polyvinyl alcohol and polyvinyl butyral; insolubilized materials of vinylalcohol-based polymer compounds; polyepichlorohydrin; polyphosphazene; polysiloxane; vinyl-based polymer compounds such as polyvinyl pyrrolidone, polyvinylidene carbonate, and polyacrylonitrile; polymer copolymers such as poly ($\omega$-methoxy oligooxyethylene methacrylate), poly ($\omega$-methoxy oligooxyethylene methacrylate-co-methyl methacrylate), poly(hexafluoropropylene-vinylidene fluoride); and the like.

The above-described non-aqueous electrolytic solution may further contain a film forming agent. Specific examples of the film forming agent include carbonate compounds such as vinylene carbonate, vinyl ethyl carbonate, and methyl phenyl carbonate; alkene sulfides such as ethylene sulfide and propylene sulfide; sultone compounds such as 1,3-propane sultone and 1,4-butane sultone; acid anhydrides such as maleic anhydride and succinic anhydride; and the like. In addition, an over-charging preventing agent such as diphenyl ether and cyclohexyl benzene may be added.

In the case of using the additive, the amount of the additive is typically in a range of 10% by mass or less with respect to the total mass of the non-aqueous electrolytic solution, preferably 8% by mass or less, more preferably 5% by mass or less, and particularly preferably 2% by mass or less. When the amount of the additive is excessively great, there is a concern that the additive has an adverse effect on other battery characteristics, as represented by as an increase in initial irreversible capacity and deterioration of low-temperature characteristics and rate characteristics.

In addition, as the electrolyte, a polymer solid electrolyte, which is a conductor of alkali metal cations such as lithium ion, can be used. Examples of the polymer solid electrolyte include an electrolyte obtained by dissolving a lithium salt in the above-described polyether-based polymer compound, a polymer in which a terminal hydroxyl group of polyether is substituted with alkoxide, and the like.

Typically, a porous separator such as a porous film or nonwoven fabric is interposed between the positive electrode and the negative electrode to prevent short-circuiting between the electrodes. In this case, the non-aqueous electrolytic solution is used in a state of being impregnated in the porous separator. As a material of the separator, polyolefin such as polyethylene and polypropylene, polyethersulfone, and the like are used, and the polyolefin is preferable.

A shape of the non-aqueous secondary battery is not particularly limited. Examples thereof include a cylinder type in which sheet electrodes and a separator are formed in a spiral shape, a cylinder type of an inside-out structure in which pellet electrodes and a separator are combined, a coin-type in which pellet electrodes and a separator are laminated, and the like. In addition, batteries of these types may be put into an arbitrary exterior casing to be used in an arbitrary type such as a coin-type, a cylinder-type, and a square-type and in an arbitrary size.

A procedure of assembling the non-aqueous secondary battery is also not particularly limited, and the non-aqueous secondary battery may be assembled in an appropriate procedure in accordance with a battery structure, For example, the negative electrode is placed on the exterior casing, the electrolytic solution and the separator are provided on the negative electrode, the positive electrode is additionally put on the separator, and these components are fixed to each other in combination with a gasket and a sealing plate, thereby obtaining a battery.

When using the carbon material for a non-aqueous secondary battery negative electrode of the invention, it is possible to provide a non-aqueous secondary battery in which stability is excellent, an output and capacity are high, irreversible capacity is small, and cycle retention rate is excellent.

Examples

Next, specific aspects of the invention will be described in more detail with reference to experimental examples, but the invention is not limited to the examples. In addition, "composite carbon material" may also be described as "carbon material".

A first experimental example (Experimental Example A) of the invention will be described below.

<Preparation of Electrode Sheet>

An electrode plate including an active material layer having an active material layer density of $1.35\pm10.03$ g/cm$^3$ was prepared by using the graphite particles of the experimental example. Specifically, $50.00\pm0.02$ g ($0.500$ g in terms of a solid content) of 1% by mass of carboxymethyl cellulose sodium salt aqueous solution and $1.00\pm0.05$ g ($0.5$ g in terms of a solid content) of styrene-butadiene rubber aqueous dispersion having a weight-average molecular weight of 270,000 were added to $50.00\pm0.02$ g of negative electrode material. The resultant mixture was stirred for 5 minutes by using a hybrid mixer manufactured by Keyence Corporation, followed by being degassed for 30 seconds, thereby obtaining slurry.

The slurry was applied onto copper foil having a thickness of 10 $\mu$m as a current collector in a width of 10 cm so that adhesion of a negative electrode material occurs in $9.00\pm0.3$ mg/cm$^2$ by using a small-sized die coater manufactured by Itochu Machine-Technos Corporation, and roll pressing was performed by using a roller having a diameter of 20 cm to adjust a density of the active material layer to $1.35\pm0.03$ g/cm$^3$, thereby obtaining an electrode sheet.

<Press Load>

An electrode, which was prepared by the above-described method, before performing the pressing of $9.00\pm0.3$ mg/cm$^2$ per unit area was cut out in an width of 5 cm, and a load when performing roll pressing by using a roller having a diameter of 20 cm so that the density of the active material layer becomes $1.60:1:0.03$ g/cm$^3$ was set as a press load.

<Preparation of Non-aqueous Secondary Battery (2016 Coin-Type Battery)>

The electrode sheet, which was prepared by the above-described method, was punched into a disc shape having a diameter of 12.5 mm, and lithium metal foil was punched into a disc shape having a diameter of 14 mm. The electrode sheet and the lithium metal foil, which were punched, were set as counter electrodes. A separator (formed from a porous polyethylene film), to which an electrolytic solution obtained by dissolving LiPF$_6$ in a mixed solvent (volume ratio = 3 : 7) of ethylene carbonate and ethyl methyl carbonate in a concentration of 1 mol/L was impregnated, was disposed between the electrodes, thereby preparing a 2016 coin-type battery,

<Method of Measuring Discharging Capacity and Initial Efficiency>

Capacity in battery charging and discharging was measured by using the non-aqueous secondary battery (2016 coin-type battery), which was prepared by the above-described method, in accordance with the following measurement method.

Charging was performed with respect to a lithium counter electrode at a current density of 0.05 C until reaching 5 mV, and charging was additionally performed with a constant voltage of 5 mV until a current density reaches 0.005 C. After the negative electrode was doped with lithium, discharging was performed with respect to the lithium counter electrode at a current density of 0.1 C until reaching 1.5 V. A difference between charging capacity and discharging capacity was calculated as irreversible capacity. In addition, the discharging capacity of the present material/(discharging capacity + irreversible capacity of the present material) was set as initial efficiency.

<Charging Resistance>

When performing constant-current charging with a current (I) of 0.05 C at 25°C for 4 seconds by using the non-aqueous secondary battery (2016 coin-type battery) prepared by the above-described method, a battery voltage drop ($\Delta V$) after 4 seconds was measured, and a value calculated by $\Delta V/I$ was set as a resistance value in battery charging.

<d50>

"d50" was measured as follows. 0.01 g of carbon material was suspended in 10 mL of 0.2% by mass aqueous solution of polyoxyethylene sorbitan monolaurate (for example, Tween 20 (registered trademark)) as a surfactant, and the resultant material was set as a measurement sample. The measurement sample was put into a commercially available laser diffraction/scattering type particle size distribution measuring device (for example, LA-920 manufactured by Horiba, Ltd.). Then the measurement sample was irradiated with ultrasonic waves of 28 kHz at an output 60 W for one minute, and "d50" was measured as a volume-based median diameter in the measuring device.

<BET Specific Surface Area (SA)>

BET specific surface area was measured by using a surface area meter (a specific surface area measuring device "Gemini 2360" manufactured by Shimadzu Corporation) as follows. Specifically, preliminary reduced pressure drying was performed with respect to a carbon material sample under flow of nitrogen at 100°C for 3 hours, followed by cooling the carbon material sample so that the temperature thereof was lowered to a liquid nitrogen temperature. Then the BET specific surface area was measured by a nitrogen adsorption BET six-point method in accordance with a gas flowing method by using a nitrogen-helium mixed gas that was accurately adjusted so that a value of a relative pressure of nitrogen with respect to the atmospheric pressure became 0.3.

<Bulk density and Tap Density>

The composite carbon material of the invention was dropped into a cylindrical tapping cell having a diameter of 1.6 cm and volume capacity of 20 cm$^3$ to fill the cell after passing through a sieve having an aperture of 300 $\mu$m. A density, which was obtained from a volume when the cell was fully filled and a mass of the sample by using a powder density measuring device, was defined as the bulk density. In addition, tapping was performed 1000 times in a stroke length of 10 mm, and a density, which was obtained from a volume at that time and the mass of the sample, was defined as the tap density.

<Average Circularity>

Measurement of a particle size distribution in accordance with an equivalent circle diameter, and calculation of average circularity by using a flow type particle image analyzer (FPIA-2000, manufactured by Toa System Co., Ltd.). Ion-exchanged water was used as a dispersion medium, and polyoxyethylene(20)monolaurate was used as a surfactant. The equivalent circle diameter represents a diameter of a circle (equivalent circle) having the same projection area as a photographed particle image. The circularity represents a ratio when a peripheral length of the equivalent circle is set as a numerator, and a peripheral length of the photographed particle projection image was set as denominator. A value, which was obtained by averaging circularities of particles having a measured equivalent diameter in a range of 1.5 to 40 $\mu$m, was set as an average circularity.

<Aspect Ratio>

Resin-embedded material of the graphite particles (B) was polished in a direction perpendicular to a flat plate, and a cross-section was photographed. Fifty or greater particles were randomly extracted, and the longest diameter (in a direction parallel to the flat plate) and the shortest diameter (in a direction perpendicular to the flat plate) of the particles were measured through image analysis. An average of the longest diameter/the shortest diameter was set as an aspect ratio. Typically, the resin-embedded particles have a tendency that a thickness direction of the particles is arranged to be perpendicular to the flat plate, and thus it is possible to obtain the longest diameter and the shortest diameter which are specific to the particles by the above-described method.

(Experimental Example A1)

Green coke particles as precursors of the bulk mesophase artificial graphite particles (A) having d50 of 9.8 $\mu$m, d10 of 4.4 $\mu$m, and d90/d10 of 3.7, and squamous natural graphite particles as the graphite particles (B) having d50 of 5.9 $\mu$m and the aspect ratio of 8 were mixed in a ratio of 80 : 20 in terms of a mass ratio. The resultant mixture was granulated and spheroidized by using Hybdization System NHS-1 type (manufactured by Nara Machinery Co., Ltd.) at a rotor peripheral speed of 85 m/second for 5 minutes while applying impact, compression, friction, and a shear force due to a mechanical operation to the mixture.

The obtained composite graphite particle precursor was baked in an electric furnace under a nitrogen atmosphere at 1000°C for 1 hour, and was graphitized in a small-sized electric furnace at 3000°C under flow of Ar, thereby obtaining a composite carbon material in which the bulk mesophase artificial graphite particles (A) and the graphite particles (B) were composited. A cross-section of the obtained sample was observed with a SEM. From the observation, a structure, in which a graphite crystal layered structure of the graphite particles (B) was arranged in the same direction as that of an outer peripheral surface of the bulk mesophase artificial graphite particles (A) at least at a part of the surface of the bulk mesophase artificial graphite particles (A), was observed.

With respect to the obtained sample, d50, SA, a bulk density, a tap density, circularity, discharging capacity, initial efficiency, and charging resistance were measured by the above-described measurement method. Results are shown in Table A1. In addition, a SEM image of the particle cross-section is shown in Fig. 1.

(Experimental Example A4)

A carbon material was obtained by the same method as in Experimental Example A1 except that the spheroidization treatment was performed with only the green coke particles as a precursor of the bulk mesophase artificial graphite particle (A) having d50 of 9.8 $\mu$m, d10 of 4.4 $\mu$m, and d90/d10 of 3.7. The same measurement as in Experimental Example A1 was performed with respect to the obtained sample. Results are shown in Table A1.

(Experimental Example A5)

The green coke particles as a precursor of the bulk mesophase artificial graphite particle (A) having d50 of 9.8 $\mu$m, d10 of 4.4 pm, and d90/d10 of 3.7 were baked and graphitized as was by the same method as in Experimental Example A1. The same measurement as in Experimental Example A1 was performed with respect to the obtained sample. Results are shown in Table A1.

(Experimental Example A6)

As the graphite particles (B), squamous natural graphite particles having d50 of 6 $\mu$m and an aspect ratio of 8 were subjected to a spheroidization treatment with a mechanical operation at a rotor peripheral speed of 85 m/second for 5 minutes by using Hybdization System NHS-1 type (manufactured by Nara Machinery Co., Ltd.). The same measurement as in Experimental Example A1 was performed with respect to the obtained sample. Results are shown in Table A1.

(Experimental Example A2)

A composite carbon material was obtained by the same method as in Experimental Example A1 except that green coke particles as a precursor of the bulk mesophase artificial graphite particle (A) having d50 of 17.7 $\mu$m, d10 of 8.1 $\mu$m, and d90/d10 of 4.1, and as the graphite particle (B), squamous natural graphite particles having d50 of 7.2 $\mu$m and the aspect ratio of 10 were used. A cross-section of the obtained sample was observed with a SEM. From the observation, a structure, in which a graphite crystal layered structure of the graphite particles (B) was arranged in the same direction as that of an outer peripheral surface of the bulk mesophase artificial graphite particles (A) at least at a part of the surface of the bulk mesophase artificial graphite particle (A), was observed. The same measurement as in Experimental Example A1 was performed with respect to the obtained sample. Results are shown in Table A1. In addition, a SEM image of the particle cross-section is shown in Fig. 2.

(Experimental Example A3)

A composite carbon material was obtained by the same method as in Experimental Example A2 except that green coke particles as precursors of the bulk mesophase artificial graphite particles (A) having d50 of 14.8 $\mu$m, d10 of 7.1 $\mu$m, and d90/d10 of 3.6, was used. A cross-section of the obtained sample was observed with a SEM. From the observation, a structure, in which a graphite crystal layered structure of the graphite particles (B) was arranged in the same direction as that of an outer peripheral surface of the bulk mesophase artificial graphite particles (A) at least at a part of the surface of the bulk mesophase artificial graphite particles (A), was observed. With respect to the obtained sample, d50, SA, a bulk density, a tap density, circularity, discharging capacity, initial efficiency, and charging resistance were measured by the above-described measurement method. Results are shown in Table A1. In addition, a SEM image of the particle cross-section is shown in Fig. 3.

(Experimental Example A7)

A carbon material was obtained by the same method as in Experimental Example 1 except that the spheroidization treatment was performed with only the green coke particles as precursors of the bulk mesophase artificial graphite particles (A) having d50 of 17.7 $\mu$m, d10 of 8.1 $\mu$m, and d90/d10 of 4.1. The same measurement as in Experimental Example 1 was performed with respect to the obtained sample. Results are shown in Table A1.

(Experimental Example A8)

The green coke particles as precursors of the bulk mesophase artificial graphite particles (A) having d50 of 17.7 $\mu$m, d10 of 8.1 $\mu$m, and d90/dl0 of 4.1, were baked and graphitized as was by the same method as in Experimental Example A1. The same measurement as in Experimental Example A1 was performed with respect to the obtained sample. Results are shown in Table A1.

[Table 1]

Table A1

|  | d50, μm | SA, m²/g | Bulk density, g/cm³ | Tap density, g/cm³ | Average circularity | Press Load (kgf/ 5cm) | Discharging capacity, mAh/g | Initial efficiency, % | Charging resistance (Experimental Example M=100) |
|---|---|---|---|---|---|---|---|---|---|
| Experimental Example A1 | 12.2 | 5.3 | 0.42 | 0.92 | 0.93 | 690 | 339 | 91 | 80 |
| Experimental Example A4 | 9.5 | 1.2 | 0.57 | 1.27 | 0.93 | 780 | 321 | 96 | 100 |
| Experimental Example A5 | 9.4 | 1.4 | 0.52 | 1.16 | 0.89 | 880 | 332 | 96 | 99 |
| Experimental Example A6 | 10.0 | 21.0 | 0.39 | 0.89 | 0.93 | 250 | 360 | 78 | - |
| Experimental Example A2 | 20.7 | 5.6 | 0.58 | 0.92 | 0.92 | 240 | 336 | 91 | 86 |
| Experimental Example A3 | 16.3 | 4.6 | 0.49 | 0.93 | 0.91 | 420 | 334 | 90 | 87 |
| Experimental Example A7 | 12.3 | 0.9 | 0.70 | 1.42 | 0.92 | 360 | 319 | 96 | 100 |
| Experimental Example A8 | 15.7 | 0.9 | 0.72 | 1.26 | 0.89 | 590 | 332 | 96 | 99 |

In Experimental Examples A1 to A3, the graphite particles (B) and the artificial graphite particles (C) were composited in such a manner that the graphite crystal layered structure was arranged in the same direction as that of an outer peripheral surface of the artificial graphite particles (A) at least at a part of the surface of the bulk mesophase artificial graphite particles (A), and the average circularity was adjusted in a defined range. Accordingly, high capacity, high initial efficiency, and excellent low charging resistance were exhibited. On the other hand, in Experimental Examples A4, A5, A7, and A8 in which the graphite particles (B) were not composited, and in Experimental Example A6 in which the bulk mesophase artificial graphite particles (A) were not contained, a decrease in discharging capacity and initial efficiency, and an increase in charging resistance were confirmed.

Hereinafter, a second experimental example (Experimental Example B) of the invention will be described.

<Preparation of Electrode Sheet>

An electrode plate including an active material layer having an active material layer density of $1.6\pm0.03$ g/cm$^3$ and $1.7\pm0.03$ g/cm$^3$ was prepared by using graphite particles of the experimental example. Specifically, $50.00\pm0.02$ g of negative electrode material, $50.00\pm0.02$ g ($0.500$ g in terms of a solid content) of 1% by mass of carboxymethyl cellulose sodium salt aqueous solution and $1.00\pm0.05$ g ($0.5$ g in terms of a solid content) of styrene-butadiene rubber aqueous dispersion having a weight-average molecular weight of 270,000 were stirred for 5 minutes by using a hybrid mixer manufactured by Keyence Corporation, and the resultant mixture was degassed for 30 seconds, thereby obtaining slurry.

The slurry was applied onto copper foil having a thickness of 10 $\mu$m as a current collector in a width of 10 cm so that adhesion of a negative electrode material occurs in $9.00\pm0.3$ mg/cm$^2$ by using a small-sized die coater manufactured by Itochu Machine-Technos Corporation, and roll pressing was performed by using a roller having a diameter of 20 cm to adjust a density of the active material layer to $1.6\pm0.03$ g/cm$^3$ and $1.7\pm0.03$ g/cm$^3$, thereby obtaining an electrode sheet.

<Press Load>

An electrode, which was prepared by the above-described method, before performing the pressing of $9.00\pm0.3$ mg/cm$^2$ per unit area was cut out in a width of 5 cm, and a load when performing roll pressing by using a roller having a diameter of 20 cm so that the density of the active material layer became $1.60\pm0.03$ mg/cm$^3$ was set as a press load.

Preparation of Non-aqueous Secondary Battery (2016 Coin-Type Battery)>

The electrode sheet, which was prepared by the above-described method, was punched into a disc shape having a diameter of 12.5 mm, and lithium metal foil was punched into a disc shape having a diameter of 14 mm. The electrode sheet and the lithium metal foil, which were punched, were set as counter electrodes. A separator (formed from a porous polyethylene film), to which an electrolytic solution obtained by dissolving LiPF$_6$ in a mixed solvent (volume ratio = 3 : 7) of ethylene carbonate and ethyl methyl carbonate in a concentration of 1 mol/L was impregnated, was disposed between the electrodes, thereby preparing 2016 coin-type battery.

<Method of Measuring Discharging Capacity, Initial Efficiency, and Discharging Load Characteristics>

Capacity during battery charging and discharging was measured by using the non-aqueous secondary battery (2016 coin-type battery) using an electrode sheet having the density of the active material layer of $1.6\pm0.03$ g/cm$^3$, which was prepared by the above-described method, in accordance with the following measurement method.

Charging was performed with respect to a lithium counter electrode at a current density of 0.05 C until reaching 5 mV, and charging was additionally performed with a constant voltage of 5 mV until a current density reaches 0.005 C. After the negative electrode was doped with lithium, discharging was performed with respect to the lithium counter electrode at a current density of 0.1 C until reaching 1.5 V. A difference between charging capacity and discharging capacity was calculated as irreversible capacity. In addition, the discharging capacity of the present material/(discharging capacity + irreversible capacity of the present material) was set as initial efficiency.

In addition, discharging was performed with respect to a lithium counter electrode with a current density of 0.2 C and 2.0 C until reaching 1.5 V, represented by [discharging capacity in discharging with 2.0 C]/[discharging capacity in discharging with 0.2 C] $\times$ 100 (%).

<Method of Measuring Electrode Expansion Rate during Battery Charging>

An electrode expansion rate during battery charging was measured by using the non-aqueous secondary battery (2016 coin-type battery) using an electrode sheet having the density of the active material layer of $1.7\pm0.03$ g/cm$^3$, which was prepared by the above-described method, in accordance with the following measurement method.

A charging and discharging cycle, in which charging is performed with respect to a lithium counter electrode at a current density of 0.16 mA/cm$^2$ until reaching 5 mV, and charging was additionally performed with a constant voltage of 5 mV until a current value reaches 0.02 mA, and after doping the negative electrode with lithium, discharging is performed with respect to the lithium counter electrode at a current density of 0.33 mA/cm$^2$ until reaching 1.5 V, was repeated for three cycles. The coin battery in a discharged state was disassembled in an argon atmosphere to extract the electrode, and an electrode thickness at this time was measured. An electrode expansion rate d(%) during discharging was calculated in accordance with the following Expression (I).

```
Expression (I)    d(%) = (electrode thickness in a discharged state - copper foil thickness)/(electrode thickness

in a dry state - copper foil thickness) × 100
```

<Method of Preparing of Non-aqueous Secondary Battery (Laminated Battery)>

The electrode sheet, which was prepared by the above-described method, was cut out into 4 cm × 3 cm as a negative electrode, and a positive electrode formed from NMC was cut out to have the same area. In addition, a separator (formed from porous polyethylene film) was disposed between the negative electrode and the positive electrode, and the positive electrode, the negative electrode, and the separator were combined. 200 μL of electrolytic solution, which is obtained by dissolving LiPF$_6$ in a mixed solvent (volume ratio = 3 : 3 : 4) of ethylene carbonate, ethyl methyl carbonate, and dimethyl carbonate in a concentration of 1.2 mol/L, was injected to the resultant combined body, thereby preparing a laminated battery.

<Low-Temperature Output Characteristics>

Low-temperature output characteristics were measured by using the electrode sheet in which the density of the active material layer is $1.6\pm0.03$ g/cm$^3$ and the laminated non-aqueous electrolyte secondary battery prepared by a method of manufacturing the non-aqueous electrolyte secondary battery in accordance with the following measurement method.

The non-aqueous electrolyte secondary battery not having gone through any charging and discharging cycle was subjected to initial charging and discharging cycles at 25°C that included: three cycles in a voltage range of 4.1 to 3.0 V at a current value of 0.2 C ("1C" stands for a current value required to discharge the rated capacity for 1 hour in one hour. The same definition applies hereafter.); and two cycles in a voltage range of 4.2 to 3.0 V at a current value of 0.2 C (in charging, constant-voltage charging was additionally performed with 4.2 V for 2.5 hours).

In addition, after charging with a current value of 0.2 C up to SOC 50%, constant-current discharging was performed for 2 seconds under a low-temperature environment of -30°C with respective current values of 1/8 C, 1/4 C, 1/2 C, 1.5 C, and 2 C, and a battery voltage drop after 2 seconds in discharging under each condition was measured. When a charging upper limit voltage is set to 3 V, a current value I capable being flowed for 2 seconds was calculated from the measurement value. A value, which is calculated by an expression of 3 × I (W), was set as low-temperature output characteristics of each battery.

<d50>

Measurement was performed by the same method as in the first experimental example.

<BET Specific Surface Area (SA)>

Measurement was performed by the same method as in the first experimental example.

<Tap Density>

Measurement was performed by the same method as in the first experimental example.

<Average Circularity>

Measurement was performed by the same method as in the first experimental example.

<Aspect Ratio

A resin-embedded material of the graphite particles (B) was polished in a direction perpendicular to a flat plate, a cross-sectional is photographed. With respect to 20 particles in a region that is randomly selected, when the longest diameter (breadth) of the particles in observation was set as a ($\mu$m) and the longest diameter among diameters perpendicular to the a ($\mu$m) was set as b ($\mu$m), and a/b was obtained. An average value of a/b with respect to the 20 particles was set as the aspect ratio.

<Calculation of Cross-Sectional Area of Core Particles and Void Cross-Sectional Area in Composite Carbon Material>

A cross-sectional area of core particles and a void cross-sectional area in the composite carbon material of the invention were calculated as follows. The electrode sheet, which was prepared by the above-described method, in a non-pressed state was used, and an electrode cross-section was processed with a cross-section polisher (IB-09020CP, manufactured by JEOL Ltd.) With regard to the electrode cross-section that was processed, a backscattered electron image of a particle cross-section was observed at an acceleration voltage of 10 kV by using a scanning electron microscope (SEM: SU-70, manufactured by Hitachi High-Technologies Corporation). With respect to the obtained scattered electron image, a cross-sectional area of the composite carbon particles, a cross-sectional area of the core particles, and a cross-sectional area of a void being in contact with the core particles were measured by using image analysis software (ImageJ) .

(Experimental Example B1)

To 100 g of green coke particles which are precursors of the graphite particles (A) having d50 of 17.7$\mu$m, 20 g of liquid paraffin (manufactured by Wako Pure Chemical Industries, Ltd., first grade, physical properties at 25°C: viscosity = 95 cP, a contact angle = 13.2°, surface tension = 31.7 mN/m, and rcosθ = 30.9) as a granulating agent was added, followed by mixing by stirring. The resultant mixture was crushed and mixed by using a hammer mill (MF10, manufactured by IKA Works, Inc.) at the number of revolutions of 3000 rpm. As the graphite particles (B), 25 g of a squamous natural graphite particle having d50 of 8.9 $\mu$m, SA of 11.4 m$^2$/g, a tap density of 0.42 g/cm$^3$, and an aspect ratio of 8, was added to the obtained green coke particles to which the granulating agent was attached, followed by mixing by stirring. 120 g of the obtained mixture was granulated by using Hybdization System NHS-1 type (manufactured by Nara Machinery Co., Ltd.) at a rotor peripheral speed of 85 m/second for 5 minutes while applying impact, compression, friction, and a shear force due to a mechanical operation to the mixture. The obtained composite graphite particle precursor was baked in an electric furnace under a nitrogen atmosphere at 1000°C for 1 hour, and was additionally graphitized in an electric furnace under flow of Ar at 3000°C. Then, classification was performed to obtain a composite carbon material in which the graphite particles (A) and the graphite particles (B) were composited.

A cross-section of the obtained sample was observed with a SEM, and it was observed that the sample has a core-shell structure provided with a shell layer including the graphite particles (B) at the periphery of the graphite particles (A) as the core particles, and a void, which was in contact with the core particles and of which a cross-sectional area was 3% or greater of the cross-sectional area of the core particles, was formed.

With respect to the obtained sample, d50, SA, Tap, circularity, charging and discharging efficiency, discharging capacity, a press load, discharging load characteristics, an electrode expansion rate, and low-temperature output characteristic were measured in accordance with the above-described measurement method. In addition, a cross-section was observed with the SEM, a cross-sectional area of the composite particles, a cross-sectional area of the core particles, and a void cross-sectional area were measured, and the number of composite particles, which satisfy claim 1, among 30 particles, and an average value of the sums of pore cross-sectional areas were calculated. Results are shown in Tables B1 and B2. In addition, a SEM image of the particle cross-section is shown in Fig. 4.

(Experimental Example B2)

To 100 g of green coke particles as precursors of the graphite particles (A) having d50 of 17.7 $\mu$m, 15 g of liquid paraffin (manufactured by Wako Pure Chemical Industries, Ltd., first grade, physical properties at 25°C: viscosity = 95 cP, a contact angle = 13.2°, surface tension = 31.7 mN/m, and rcosθ = 30.9) as a granulating agent was added, followed by mixing by stirring. The obtained sample was crushed and mixed by using a hammer mill (MF10, manufactured by IKA Works, Inc.) at the number of revolutions of 3000 rpm, thereby obtaining a mixture (D) in which the granulating agent was attached to the green coke particles.

To 100 g of squamous natural graphite particles having d50 of 8.9 $\mu$m, SA of 11.4 m$^2$/g, a tap density of 0.42 g/cm$^3$, and an aspect ratio of 8, as the graphite particles (B), 15 g of liquid paraffin (manufactured by Wako Pure Chemical Industries, Ltd., first grade, physical properties at 25°C: viscosity = 95 cP, a contact angle = 13.2°, surface tension = 31.7 mN/m, and rcos$\theta$ = 30.9) as a granulating agent was added, followed by mixing by stirring. The resultant mixture was crushed and mixed by using a hammer mill (MF10, manufactured by IKA Works, Inc.) at the number of revolutions of 3000 rpm, thereby obtaining a mixture (E) in which the granulating agent is attached to the graphite particles (B).

120 g of mixed sample, which was obtained by stirring and mixing 96 g of the obtained mixture (D) and 24 g of the obtained mixture (E) was granulated, baked, graphitized, and classified by the same method as in Experimental Example B1, thereby obtaining a composite carbon material in which the graphite particles (A) and the graphite particles (B) are composited.

A cross-section of the obtained sample was observed with a SEM, and it was observed that the sample has a core-shell structure provided with a shell layer including the graphite particles (B) at the periphery of the graphite particles (A) as the core particles, and a void, which was in contact with the core particles and of which a cross-sectional area is 3% or greater of the cross-sectional area of the core particles, was formed.

The same measurement as in Experimental Example 1 was performed with respect to the obtained sample. Results are shown in Tables B1 and B2. In addition, a SEM image of the particle cross-section is shown in Fig. 5.

(Experimental Example B3)

A carbon material was obtained by the same method as in Experimental Example B1 except that the spheroidization treatment was performed with only the green coke particles as precursors of the graphite particles (A) having d50 of 19.5 $\mu$m. The same measurement as in Experimental Example B1 was performed with respect to the obtained sample. Results are shown in Tables B1 and B2.

(Experimental Example B4)

The green coke particles as precursors of the graphite particles (A) having d50 of 19.5 $\mu$m, were baked, graphitized, and classified as was by the same method as in Experimental Example B1. The same measurement as in Experimental Example B1 was performed with respect to the obtained sample. Results are shown in Tables B1 and B2.

(Experimental Example B5)

The green coke particles as precursors of the graphite particles (A) having d50 of 17.7 $\mu$m, were baked in advance in an electric furnace under a nitrogen atmosphere at 1000°C for 1 hour, thereby obtaining calcined coke particles. To 100 g of the obtained calcined coke particles, 20 g of liquid paraffin (manufactured by Wako Pure Chemical Industries, Ltd., first grade, physical properties at 25°C: viscosity = 95 cP, a contact angle = 13.2°, surface tension = 31.7 mN/m, and rcos$\theta$ = 30.9) as a granulating agent was added, followed by mixing by stirring. The resultant mixture was crushed and mixed by using a hammer mill (MF10, manufactured by IKA Works, Inc.) at the number of revolutions of 3000 rpm. As the graphite particles (B), 25 g of squamous natural graphite particles having d50 of 8.9 $\mu$m, SA of 11.4 m$^2$/g, a tap density of 0.42 g/cm$^3$, and an aspect ratio of 8, was added to the obtained calcined coke particles to which the granulating agent was attached, followed by mixing by stirring. The obtained mixture was granulated by the same method as in Experimental Example B1, and the obtained composite graphite particle precursor was baked in an electric furnace under a nitrogen atmosphere at 700°C for 1 hour to remove the granulating agent, and was additionally graphitized in an electric furnace under flow of Ar at 3000°C. Then, classification was performed to obtain a composite carbon material in which the graphite particles (A) and the graphite particles (B) were composited.

A cross-section of the obtained sample was observed with a SEM, and it was observed that the sample had a core-shell structure provided with a shell layer including the graphite particles (B) at the periphery of the graphite particles (A) as the core particles. However, a void, which was in contact with the core particles and of which a cross-sectional area was 3% or greater of the cross-sectional area of the core particles, was not observed.

The same measurement as in Experimental Example B1 was performed with respect to the obtained sample. Results are shown in Tables B1 and B2.

(Experimental Example B6)

The green coke particles as a precursor of the graphite particle (A) having d50 of 17.7 $\mu$m were baked in advance in an electric furnace under a nitrogen atmosphere at 1000°C for 1 hour, and were additionally graphitized in an electric furnace under flow of Ar at 3000°C, thereby obtaining artificial graphite particles. 20 g of liquid paraffin (manufactured by Wako Pure Chemical Industries, Ltd., first grade, physical properties at 25°C: viscosity = 95 cP, a contact angle = 13.2°, surface tension = 31.7 mN/m, and $r\cos\theta$ = 30.9) as a granulating agent was added to 100 g of obtained artificial graphite particles, followed by mixing by stirring. The resultant mixture was crushed and mixed by using a hammer mill (MF10, manufactured by IKA Works, Inc.) at the number of revolutions of 3000 rpm. As the graphite particle (B), 25 g of squamous natural graphite particles having d50 of 8.9 $\mu$m, SA of 11.4 m$^2$/g, a tap density of 0.42 g/cm$^3$, and an aspect ratio of 8, were added to the obtained artificial graphite particles to which the granulating agent was attached, and the resultant mixture was stirred and mixed. The obtained mixture was granulated by the same method as in Experimental Example B1, and the obtained composite graphite particle precursor was baked in an electric furnace under a nitrogen atmosphere at 700°C for 1 hour to remove the granulating agent, followed by classification, thereby obtaining a composite carbon material in which the graphite particle (A) and the graphite particles (B) were composited.

A cross-section of the obtained sample was observed with a SEM, and it was observed that the sample had a core-shell structure provided with a shell layer including the graphite particles (B) at the periphery of the graphite particle (A) as a core particle. However, a void, which was in contact with the core particle and of which a cross-sectional area was 3% or greater of the cross-sectional area of the core particle, was not observed.

The same measurement as in Experimental Example B1 was performed with respect to the obtained sample. Results are shown in Tables B1 and B2.

In addition, a SEM image of the particle cross-section is shown in Fig. 6.

(Experimental Example B7)

12 g of liquid paraffin (manufactured by Wako Pure Chemical Industries, Ltd., first grade, physical properties at 25°C: viscosity = 95 cP, a contact angle = 13.2°, surface tension = 31.7 mN/m, and $r\cos\theta$ = 30.9) as a granulating agent was added to 100 g of squamous natural graphite particles having d50 of 8.9 $\mu$m, SA of 11.4 m$^2$/g, a tap density of 0.42 g/cm$^3$, and an aspect ratio of 8, followed by mixing by stirring. The resultant mixture was crushed and mixed by using a hammer mill (MF10, manufactured by IKA Works, Inc.) at the number of revolutions of 3000 rpm. 100 g of the obtained mixture was granulated by using Hybdization System NHS-1 type (manufactured by Nara Machinery Co., Ltd.) at a rotor peripheral speed of 85 m/second for 5 minutes while applying impact, compression, friction, and a shear force due to a mechanical operation to the mixture. The obtained composite graphite particle precursor was baked in an electric furnace under a nitrogen atmosphere at 700°C for 1 hour to remove the granulating agent. Then, classification was performed to obtain granulated carbon particles (F).

With respect to a mixture obtained by mixing 20 g of granulated carbon particles (F) which were obtained, and 80 g of the obtained carbon material in Experimental Example B3, the same measurement as in Experimental Example B1 was performed. Results are shown in Tables B1 and B2.

[Table 2]

Table 81

| | d50, $\mu$m | SA, m$^2$/g | Tap, g/cm$^3$ | Avenge circularity . | Presence or absence of composite particles satisfying \<B1\> | Number of composite particles satisfying \<B1\> in 30 particles | Average value of sums of void cross-sectional areas, % |
|---|---|---|---|---|---|---|---|
| **Experimental Example B1** | 21.5 | 4.9 | 0.96 | 0.92 | **Present** | 22 | 33.1 |
| **Experimental Example B2** | 19.9 | 5.0 | 0.93 | 0.91 | **Present** | 15 | 20.6 |
| **Experimental Example 83** | 16.3 | 0.6 | 1.56 | 0.92 | **Absent** | - | - |
| **Experimental Example B4** | 18.1 | 0.8 | 1.25 | 0.89 | **Absent** | - | - |
| **Experimental Example B5** | 20.5 | 5.9 | 0.94 | 0.92 | **Absent** | - | <15 |

(continued)

|  | d50, $\mu$m | SA, $m^2/g$ | Tap, $g/cm^3$ | Avenge circularity . | Presence or absence of composite particles satisfying <B1> | Number of composite particles satisfying <B1> in 30 particles | Average value of sums of void cross-sectional areas, % |
|---|---|---|---|---|---|---|---|
| Experimental Example B6 | 20.0 | 7.1 | 0.93 | 0.92 | Absent | - | <15 |
| Experimental Example B7 | 20.2 | 4.8 | 1.02 |  | Absent | - | - |

[Table 3]

Table B2

|  | Charging and discharging efficiency, % | Discharging capacity, mAh/g | Press Load, kgf/5cm | Discharging load characteristics, % | Electrode expansionrate, % | output characteristics, (Experimental Example B3=100) |
|---|---|---|---|---|---|---|
| Experimental ExampleB1 | 91.7 | 354 | 600 | 86 | 9.6 | 218 |
| Experimental ExampleB2 | 91.7 | 355 | 640 | 85 | - | 206 |
| Experimental ExampleB3 | 96.8 | 347 | 740 | 84 | 11.4 | 100 |
| Experimental ExampleB4 | 96.3 | 354 | 650 | 74 | - | 137 |
| Experimental ExampleB5 | 89.9 | 355 | - | - | - | - |
| Experimental ExampleB6 | 89.7 | 355 | - | - | - | - |
| Experimental Example87 | 88.5 | 353 | 700 | 61 | 13.8 | 340 |

In Experimental Examples B1 and B2, a plurality of the graphite particle (B) having an aspect ratio of 5 or greater are composited at the periphery of the graphite particle (A) to form the core-shell structure, and the core cross-sectional area and the void cross-sectional area are adjusted in a defined range. Accordingly, characteristics such as capacity, charging and discharging efficiency, an electrode expansion rate, filling properties, discharging load characteristics, and low-temperature output characteristic were excellent.

On the other hand, in Experimental Examples B3 and B4 in which the graphite particle (B) was not composited, discharging capacity, filling properties, discharging load characteristics, an electrode expansion rate, and low-temperature output characteristics were not sufficient. In addition, in Experimental Example B7 in which the graphite particle (A) was not contained, charging and discharging efficiency, discharging capacity, filling properties, discharging load characteristics, and an electrode expansion rates were not sufficient. In addition, in Experimental Examples B5 and B6 in which the pore cross-sectional area was out of the defined range of <B1>, it was confirmed that charging and discharging efficiency was not sufficient.

A third experimental example (Experimental Example C) of the invention will be described below.

<Preparation of Electrode Sheet>

An electrode plate including an active material layer having an active material layer density of $1.35 \pm 0.03$ g/cm$^3$ or $1.60 \pm 0.03$ g/cm$^3$ was prepared by using graphite particles of the experimental example. Specifically, $50.00 \pm 0.02$ g (0.500 g in terms of a solid content) of 1% by mass of carboxymethyl cellulose sodium salt aqueous solution and $1.00 \pm 0.05$ g (0.5 g in terms of a solid content) of styrene-butadiene rubber aqueous dispersion having a weight-average molecular weight of 270,000 were added to $50.00 \pm 0.02$ g of negative electrode material. The resultant mixture was stirred for 5 minutes by using a hybrid mixer manufactured by Keyence Corporation, and the resultant mixture was degassed for 30 seconds, thereby obtaining slurry.

The slurry was applied onto copper foil having a thickness of 10 $\mu$m as a current collector in a width of 10 cm so that adhesion of a negative electrode material occurs in $6.00 \pm 0.3$ mg/cm$^2$ or $9.00 \pm 0.3$ mg/cm$^2$ by using a small-sized die coater manufactured by Itochu Machine-Technos Corporation. The copper coil was cut out in a width of 5 cm, and roll pressing was performed by using a roller having a diameter of 20 cm to adjust a density of the active material layer to be $1.35 \pm 0.03$ g/cm$^3$ or $1.60 \pm 0.03$ g/cm$^3$, thereby obtaining an electrode sheet.

<Preparation of Non-aqueous Secondary Battery (2016 Coin-Type Battery)>

The electrode sheet, which was prepared by the above-described method, was punched into a disc shape having a diameter of 12.5 mm, and lithium metal foil was punched into a disc shape having a diameter of 14 mm. The electrode sheet and the lithium metal foil, which were punched, were set as counter electrodes. A separator (formed from a porous polyethylene film), to which an electrolytic solution obtained by dissolving LiPF$_6$ in a mixed solvent (volume ratio = 3 : 7) of ethylene carbonate and ethyl methyl carbonate in a concentration of 1 mol/L, is impregnated was disposed between the electrodes, thereby preparing 2016 coin-type battery.

<Method of Preparing of Non-aqueous Secondary Battery (Laminated Battery)>

The electrode sheet, which was prepared by the above-described method, was cut out into 4 cm $\times$ 3 cm as a negative electrode, and a positive electrode formed from NMC was cut out to have the same size. In addition, a separator (formed from porous polyethylene film) was disposed between the negative electrode and the positive electrode, and the positive electrode, the negative electrode, and the separator were combined. 250 $\mu$L of electrolytic solution, which is obtained by dissolving LiPF$_6$ in a mixed solvent (volume ratio = 3 : 3 : 4) of ethylene carbonate, ethyl methyl carbonate, and dimethyl carbonate in a concentration of 1.2 mol/L, was injected to the resultant combined body, thereby preparing a laminated battery.

<Method of Measuring Discharging Capacity>

Capacity in battery charging and discharging was measured by using the non-aqueous secondary battery (2016 coin-type battery), which was prepared by the above-described method, in accordance with the following measurement method.

Charging was performed with respect to a lithium counter electrode at a current density of 0.05 C until reaching 5 mV, and charging was additionally performed with a constant voltage of 5 mV until a current density reaches 0.005 C. After the negative electrode was doped with lithium, discharging was performed with respect to the lithium counter electrode at a current density of 0.1 C until reaching 1.5 V. Subsequently, second charging and discharging was performed at the same current density, and discharging capacity at the second cycle was set as discharging capacity of the present material.

<Room-Temperature Output Characteristics>

Room-temperature output characteristics were measured by using the non-aqueous electrolyte secondary battery (laminated battery), which was prepared by the above-described method, in accordance with the following measurement method.

The non-aqueous electrolyte secondary battery not having gone through any charging and discharging cycle was subjected to initial charging and discharging cycles at 25°C that included: three cycles in a voltage range of 4.1 to 3.0 V at a current value of 0.2 C ("1C" stands for a current value required to fully discharge the one-hour rated capacity in one hour. The same definition applies hereafter.); and two cycles in a voltage range of 4.2 to 3.0 V at a current value of 0.2 C (in charging, constant-voltage charging was additionally performed with 4.2 V for 2.5 hours).

In addition, after charging with a current value of 0.2 C up to SOC 50%, constant-current discharging was performed for 2 seconds under an environment of 25°C with respective current values of 1/8 C, 1/4 C, 1/2 C, 1.5 C, and 2 C, and a battery voltage drop after 2 seconds in discharging under each condition was measured. When a charging upper limit voltage is set to 3 V, a current value I capable being flowed for 2 seconds was calculated from the measurement value. A value, which is calculated by an expression of $3 \times I$ (W), was set as room-temperature output characteristics of each battery.

<Low-Temperature Output Characteristics>

Low-temperature output characteristics were measured by using the laminated non-aqueous electrolyte secondary battery (laminated battery) prepared by the above-described method in accordance with the following measurement method.

The non-aqueous electrolyte secondary battery not having gone through any charging and discharging cycle was subjected to initial charging and discharging cycles at 25°C that included: three cycles in a voltage range of 4.1 to 3.0 V at a current value of 0.2 C ("1C" stands for a current value required to fully discharge the one-hour rated capacity in one hour. The same definition applies hereafter.); and two cycles in a voltage range of 4.2 to 3.0 V at a current value of 0.2 C (in charging, constant-voltage charging was additionally performed with 4.2 V for 2.5 hours).

In addition, after charging with a current value of 0.2 C up to SOC 50%, constant-current discharging was performed for 2 seconds under a low-temperature environment of -30°C with respective current values of 1/8 C, 1/4 C, 1/2 C, 1.5 C, and 2 C, and a battery voltage drop after 2 seconds in discharging under each condition was measured. When a charging upper limit voltage is set to 3 V, a current value I capable being flowed for 2 seconds was calculated from the measurement value. A value, which is calculated by an expression of $3 \times I$ (W), was set as low-temperature output characteristics of each battery.

<Cycle Characteristics>

Cycle characteristics were measured by using the non-aqueous electrolyte secondary battery (laminated battery), which was prepared by the above-described method, in accordance with the following measurement method.

The non-aqueous electrolyte secondary battery not having gone through any charging and discharging cycle was subjected to initial charging and discharging cycles at 25°C that included: three cycles in a voltage range of 4.1 to 3.0 V at a current value of 0.2 C; and two cycles in a voltage range of 4.2 to 3.0 V at a current value of 0.2 C (in charging, constant-voltage charging was additionally performed with 4.2 V for 2.5 hours).

In addition, charging and discharging was performed for 100 cycles at 45°C in a voltage range of 4.2 to 3.0 V and with a current value of 1.0 C, and a value, which is obtained by dividing discharging capacity at the 100th cycle by discharging capacity at the 1st cycle was calculated as a cycle retention rate (%).

<Press Load>

An electrode, which was prepared by the above-described method, before performing the pressing of $9.00 \pm 0.3$ mg/cm$^2$ per unit area was cut out in a width of 5 cm, and a load when performing roll pressing by using a roller having a diameter of 20 cm so that the density of the active material layer becomes $1.60 \pm 0.03$ mg/cm$^3$ was set as a press load.

<d10, d50, d90, and Mode Diameter>

d10, d50, d90, and a mode diameter were measured as follows. 0.01 g of carbon material was suspended in 10 mL of 0.2% by mass aqueous solution of polyoxyethylene sorbitan monolaurate (Tween 20 (registered trademark))

that is a surfactant, and the resultant material was set as a measurement sample. The measurement sample was put into a commercially available laser diffraction/scattering type particle size distribution measuring device (for example, LA-920 manufactured by Horiba, Ltd.). The measurement sample was irradiated with ultrasonic waves of 28 kHz at an output 60 W for one minute. Then, d10, d50, d90, and a mode diameter were measured as volume-based d10, d90, median-diameter, and mode diameter in the measuring device.

<Ultrasonic Treatment>

0.10 g of carbon material was suspended in 30 mL of 0.2% by mass aqueous solution of polyoxyethylene sorbitan monolaurate (Tween 20 (registered trademark)) as a surfactant, and the resultant material was put into a columnar polypropylene container in which the bottom has a radius of 2 cm (for example, Ai-Boy wide-inlet bottle of 50 mL). A columnar chip, which has a radius of 3 mm, of an ultrasonic homogenizer (for example, VC-130 manufactured by Sonics & Materials, Inc.) of 20 kHz, was immersed in the dispersion to a depth of 2 cm or greater, and the dispersion was irradiated with ultrasonic waves for 10 minutes at an output of 15 W while maintaining the dispersion at 10°C to 40°C. The dispersion after the treatment was diluted by using 10 mL of 0.2% by mass of aqueous solution Tween 20 so that the carbon material becomes 1 mg/mL. The resultant material was put into a commercially available laser diffraction/scattering type particle size distribution measuring device (for example, LA-920 manufactured by Horiba, Ltd.). The measurement sample was irradiated with ultrasonic waves of 28 kHz at an output 60 W for one minute. Then, volume-based median diameter and mode diameter were measured with the measuring apparatus.

<Tap Density (Tap)>

The carbon material of the invention was dropped into a cylindrical tapping cell having a diameter of 1.6 cm and volume capacity of 20 cm$^3$ to fill the cell after passing through a sieve having an aperture of 300 $\mu$m. Then, tapping was performed 1000 times in a stroke length of 10 mm, and a density, which was obtained from a volume at that time and the mass of the sample by using a powder density measuring device, was defined as the tap density.

<Specific Surface Area (SA)>

The BET specific surface area was defined as a value obtained by using a surface area meter (for example, a specific surface area measuring device "Gemini 2360" manufactured by Shimadzu Corporation). Specifically, preliminary reduced pressure drying was performed with respect to a carbon material sample under a flow of nitrogen at 100°C for 3 hours, and then the carbon material sample was cooled down to a liquid nitrogen temperature. A value, which was measured by a nitrogen adsorption BET six-point method in accordance with a gas flowing method by using a nitrogen-helium mixed gas that was accurately adjusted so that a value of a relative pressure of nitrogen with respect to the atmospheric pressure became 0.3, was defined as the BET specific surface area.

(Experimental Example C1)

Green coke particles as a precursor of the bulk mesophase artificial graphite particle (A) having d50 of 17.7 $\mu$m, d10 of 8.1 $\mu$m, and d90/d10 of 4.1, and squamous natural graphite particles as the graphite particles (B) having d50 of 8.8 $\mu$m, d10 of 3.3 $\mu$m, and d90/d10 of 4.9 were mixed in a ratio of 80 : 20 in terms of a mass ratio to obtain 100 g of mixed carbon material. As the granulating agent, 15 g of paraffin-based oil (liquid paraffin, manufactured by Wako Pure Chemical Industries, Ltd., first grade, physical properties at 25°C: viscosity = 95 cP, a contact angle = 13.2°, surface tension = 31.7 mN/m, and rcosθ = 30.9) was added to the mixed carbon material. The resultant mixture was spheroidized by using Hybdization System NHS-1 type (manufactured by Nara Machinery Co., Ltd.) at a rotor peripheral speed of 85 m/second for 5 minutes while applying impact, compression, friction, and a shear force due to a mechanical operation to the mixture. The obtained composite graphite particle precursor was baked in an electric furnace under a nitrogen atmosphere at 1000°C for 1 hour, and was additionally graphitized in an electric furnace under a flow of Ar at 3000°C to obtain a composite carbon material in which the bulk mesophase artificial graphite particles (A) and the graphite particles (B) were composited. d50, d90, d10, d90/d10, a mode diameter, Tap, SA, d50 and a mode diameter after an ultrasonic treatment, discharging capacity characteristics, output characteristics, cycle characteristics, and a press load were measured by the above-described measurement method. Results are shown in Tables C1 to C3.

(Experimental Example C3)

Green coke particles as a precursor of the bulk mesophase artificial graphite particle (A) having d50 of 32.3 $\mu$m, d10 of 11.2 $\mu$m, and d90/d10 of 5.8 were spheroidized by using Hybdization System NHS-1 type (manufactured by Nara Machinery Co., Ltd.) at a rotor peripheral speed of 85 m/second for 5 minutes while applying impact, compression, friction, and a shear force due to a mechanical operation to the green coke particles, followed by mixing with squamous natural graphite particles as the graphite particles (B) having d50 of 8.8 $\mu$m, d10 of 3.3 $\mu$m, and d90/d10 of 4.9 in a ratio of 80 : 20 in terms of a mass ratio to obtain a mixed carbon material. The same measurement as in Experimental Example C1 was performed with respect to the obtained sample. Results are shown in Table C1 to C3.

(Experimental Example C4)

Green coke particles as precursors of the bulk mesophase artificial graphite particles (A) having d50 of 32.3 $\mu$m, d10 of 11.2 $\mu$m, and d90/d10 of 5.8 were spheroidized by using Hybdization System NHS-1 type (manufactured by Nara Machinery Co., Ltd.) at a rotor peripheral speed of 85 m/second for 5 minutes while applying impact, compression, friction, and a shear force due to a mechanical operation to the green coke particles. The same measurement as in Experimental Example C1 was performed with respect to the obtained sample. Results are shown in Tables C1 to C3.

[Table 4]

**Table C1**

| | d50 ($\mu$m) | d90 ($\mu$m) | d10 ($\mu$m) | d90/d10 | Mode diameter ($\mu$m) | Tap (g/cm$^3$) | SA (m$^2$/g) |
|---|---|---|---|---|---|---|---|
| Experimental Example C1 | 21.2 | 35.6 | 11.1 | 3.2 | 21.4 | 0.96 | 4.9 |
| Experimental Example C3 | 11.5 | 28.1 | 4.6 | 6.1 | 10.9 | 1.08 | 2.8 |
| Experimental Example C4 | 15.3 | 39.4 | 6.2 | 6.4 | 14.2 | 1.56 | 0.6 |

[Table 5]

**Table C2**

| | d50 after ultrasonic treatment | Mode diameter after ultrasonic treatment | Variation of d50 after ultrasonic treatment | Variation of mode diameter after ultrasonic treatment |
|---|---|---|---|---|
| Experimental Example C1 | 11.6 | 14.1 | 9.6 | 7.3 |
| Experimental Example C3 | 11.3 | 10.9 | 0.3 | 0.0 |
| Experimental Example C4 | 15.0 | 14.2 | 0.3 | 0.0 |

[Table 6]

**Table C3**

| | Discharging capacity (mAh/g) | Room-temperature output characteristics (Experimental) Example C3=100) | Low-temperature output characteristics (Experimental Example C3=100) | Cycle retention rate (%) | Press Load (kgf/ 5cm) |
|---|---|---|---|---|---|
| Experimental Example C1 | 353 | 124 | 106 | 95.6% | 606 |
| Experimental Example C3 | 355 | 100 | 100 | 98.4% | 1006 |
| Experimental Example C4 | 346 | 76 | - | 78.0% | - |

Experimental Example C1 relates to composite particles of the bulk mesophase artificial graphite particles and the squamous natural graphite particles. Accordingly, as shown in Fig. 7, a particle size distribution varied due to the ultrasonic treatment, and d50 decreased by 9.6 $\mu$m, and the mode diameter decreased by 7.3 $\mu$m. Accordingly, room-temperature output characteristics and low-temperature output characteristics of Experimental Example C1 are more excellent in comparison to Experimental Example C3 that is blended without being composited. In addition, in Experimental Example C1, the squamous natural graphite particles and the bulk mesophase artificial graphite particles with low binding properties were composited, and thus particle deformation during pressing increases, and a press load is small. In addition, Experimental Example C1 is also excellent in cycle characteristics. On the other hand, Experimental Example C3 is excellent in cycle characteristics, but is poor in room-temperature output, characteristics and low-temperature output characteristics, and a press load is great. As a result, Experimental Example C3 is poor in balance of characteristics.

Room-temperature output characteristics and cycle characteristics of Experimental Example C1 were more excellent in comparison to Experimental Example C4 that is constituted by only the bulk mesophase artificial graphite particles.

(Experimental Example C2)

The obtained composite carbon material in Experimental Example C1 and coal-tar pitch as an amorphous carbon precursor were mixed, followed by baking in an inert gas at 720°C and was additionally subjected to a heat treatment at 1300°C. Then, the resultant baked product was crushed and classified to obtain a double-layer structure carbon material in which the carbon material and the amorphous carbon were composited. From a baking yield ratio, it was confirmed that in the double-layer structure graphite particles which were obtained, a mass ratio (granulated graphite particles : amorphous carbon) between granulated graphite particles and a carbonaceous substance having crystallinity lower than that of raw material graphite is 1 : 0.03. The same measurement as in Experimental Example C1 was performed with respect to the obtained sample, and results are shown in Tables C4 to C6.

(Experimental Example C5)

Squamous natural graphite having d50 of 100 $\mu$m was spheroidized by using Hybdization System NHS-1 type (manufactured by Nara Machinery Co., Ltd.) at a rotor peripheral speed of 85 m/second for 3 minutes in accordance with a mechanical operation. It was confirmed that in the obtained sample, a lot of squamous graphite were present in a state of not adhering to a base material and in a state of not being embedded, and a lot of squamous graphite fine powders generated during the spheroidization treatment were present. The sample was classified to remove the squamous graphite fine powder, thereby obtaining a spheroidized graphite having d50 of 23 $\mu$m. The obtained spheroidized natural graphite and coal-tar pitch as an amorphous carbon precursor were mixed. The resultant mixture was subjected to a heat treatment in an inert gas at 720°C, and was additionally subjected to a heat treatment in an inert gas at 1300°C. Then, a baked product was crushed and classified to obtain a double-layer structure carbon material in which graphite particles and amorphous carbon were composited. From a baking yield ratio, it was confirmed that in the obtained double-layer structure carbon material, a mass ratio (spheroidized graphite particles : amorphous carbon) between spheroidized graphite particles and the amorphous carbon was 1 : 0.03. The same measurement as in Experimental Example C1 was performed with respect to the obtained sample, and results are shown in Tables C4 to C6.

[Table 7]

**Table C4**

|  | d50 (μm) | d90 (μm) | d10 (μm) | d90/d10 | Mode diameter (μm) | Tap (g/cm³) | SA (m²/g) |
|---|---|---|---|---|---|---|---|
| **Experimental ExampleC2** | 18.7 | 33.7 | 9.1 | 3.7 | 18.7 | 1.05 | 3.3 |
| **Experimental ExampleC5** | 23.1 | 37.4 | 14.5 | 2.6 | 24.2 | 1.14 | 2.6 |

[Table 8]

Table C5

|  | d50 after ultrasonic treatment | Mode diameter after ultrasonic treatment | Variation of d50 after ultrasonic treatment | Variation of mode diameter after ultrasonic treatment |
|---|---|---|---|---|
| **Experimental Example C2** | 15.6 | 16.3 | 3.1 | 2.4 |
| **Experimental Example C5** | 23.0 | 24.2 | 0.1 | 0.0 |

[Table 9]

Table C6

|  | Discharging capacity (mAh/g) | Room-temperatureoutput characteristics (Experimental Example C5=100) | Low-temperature output characteristics (Experimental Example C5=100) | Cycle retention rate (%) |
|---|---|---|---|---|
| **Experimental Example C2** | 350 | 105 | 112 | 97.6% |
| **Experimental Example C5** | 365 | 100 | 100 | 96.3% |

In Experimental Example C2, composite particles of the bulk mesophase artificial graphite particles and the squamous natural graphite particles were coated with amorphous carbon. Accordingly, room-temperature output characteristics, low-temperature output characteristics, and cycle characteristics are more excellent in comparison to the natural graphite particles, which are spheroidized without compositing artificial graphite, coated with amorphous carbon in Experimental Example C5.

Hereinafter, a fourth experimental example (Experimental Example D) of the invention will be described.

<Preparation of Electrode Sheet>

An electrode sheet was obtained by the same method as in the first experimental example.

<Preparation of Non-aqueous Secondary Battery (2016 Coin-Type Battery)>

A 2016 coin-type battery was prepared by the same method as in the first experimental example.

<Method of Measuring Discharging Capacity and Discharging Load Characteristics>

Capacity in battery charging and discharging was measured by using the non-aqueous secondary battery (2016 coin-type battery) using the electrode sheet prepared by the above-described method, which was prepared by the above-described method, in accordance with the following measurement method.

Charging was performed with respect to a lithium counter electrode at a current density of 0.05 C until reaching 5 mV, and charging was additionally performed with a constant voltage of 5 mV until a current density reaches 0.005 C. After the negative electrode was doped with lithium, discharging was performed with respect to the lithium counter electrode at a current density of 0.1 C until reaching 1.5 V. Discharging capacity at this time was set as the discharging capacity in the invention.

In addition, discharging was performed with respect to the lithium counter electrode at a current density of 0.2 C and 3.0 C until reaching 1.5 V, and [discharging capacity in discharging with 3.0 C]/[discharging capacity in discharging with 0.2 C] $\times$ 100 (%) was set as the discharging load characteristics.

<Method of Preparing of Non-aqueous Secondary Battery (Laminated Battery)>

The electrode sheet, which was prepared by the above-described method, was cut out into 4 cm $\times$ 3 cm as a negative electrode, and a positive electrode formed from NMC was cut out to have the same area. In addition, a separator (formed from porous polyethylene film) was disposed between the negative electrode and the positive electrode, and the positive electrode, the negative electrode, and the separator were combined. 225 $\mu$L of electrolytic solution, which is obtained by dissolving $LiPF_6$ in a mixed solvent (volume ratio = 3 : 3 : 4) of ethylene carbonate, ethyl methyl carbonate, and dimethyl carbonate in a concentration of 1.2 mol/L, was injected to the resultant combined body, thereby preparing a laminated battery.

<Low-Temperature Output Characteristics>

Low-temperature output characteristics were measured by using the electrode sheet prepared by the above-described method, and the laminated non-aqueous electrolyte secondary battery prepared by the method of manufacturing a non-aqueous electrolyte secondary battery in accordance with the following measurement method.

The non-aqueous electrolyte secondary battery not having gone through any charging and discharging cycle was subjected to initial charging and discharging cycles at 25°C that included: three cycles in a voltage range of 4.1 to 3.0 V at a current value of 0.2 C ("1C" stands for a current value required to fully discharge the one-hour rated capacity in one hour. The same definition applies hereafter.); and two cycles in a voltage range of 4.2 to 3.0 V at a current value of 0.2 C (in charging, constant-voltage charging was additionally performed with 4.2 V for 2.5 hours).

In addition, after charging with a current value of 0.2 C up to SOC 50%, constant-current discharging was performed for 2 seconds under a low-temperature environment of -30°C with respective current values of 1/8 C, 1/4 C, 1/2 C, 1.5 C, and 2 C, and a battery voltage drop after 2 seconds in discharging under each condition was measured. When a charging upper limit voltage is set to 3 V, a current value I capable being flowed for 2 seconds was calculated from the measurement value. A value, which is calculated by an expression of 3 $\times$ I (W), was set as low-temperature output characteristics of each battery.

<d50, d90, d10, d90/d10>

0.01 g of carbon material is suspended in 10 mL of 0.2% by mass aqueous solution of polyoxyethylene sorbitan monolaurate (for example, Tween 20 (registered trademark)) that is a surfactant, the resultant material was set as a measurement sample. The measurement sample was put into a commercially available laser diffraction/scattering type particle size distribution measuring device (for example, LA-920 manufactured by Horiba, Ltd.). The measurement sample was irradiated with ultrasonic waves of 28 kHz at an output 60 W for one minute. Volume-based d50, d90, and d10 in the measurement apparatus were measured, and d90/d10 was calculated.

<BET Specific Surface Area (SA)>

Measurement was performed by the same method as in the first experimental example.

<Bulk density and Tap Density>

Measurement was performed by the same method as in the first experimental example.

<Pore Distribution Mode Diameter and Pore Volume of 0.1 to 2 $\mu$m>

In measurement by a mercury intrusion method, a mercury porosimeter (autopore 9520, manufactured by Micromeritics Instrument Corporation) was used. Approximately 0.2 g of sample (negative electrode material) was weighed and was sealed in a powder cell, and a degassing pretreatment was performed at room temperature in vacuo (50 $\mu$mHg or less) for 10 minutes. Then, a pressure was reduced to 4 psia step by step so as to introduce mercury, and the pressure was raised from 4 psia to 40,000 psia step by step and was additionally reduced to 25 psia. A pore distribution was calculated by using Washburn expression from the obtained mercury intrusion curve. Furthermore, the calculation was performed in a state in which surface tension of mercury is set to 485 dyne/cm and a contact angle is set to 140°. From the obtained pore distribution, a pore distribution mode diameter, and a pore volume of pores having a pore diameter in a range of 0.1 to 2 $\mu$m were calculated.

(Experimental Example D1)

To 100 g of green coke particles as a precursor of the graphite particle (A) having d50 of 3.3 $\mu$m, 20 g of liquid paraffin (manufactured by Wako Pure Chemical Industries, Ltd., first grade, physical properties at 25°C: viscosity = 95 cP, a contact angle = 13.2°, surface tension = 31.7 mN/m, and rcos$\theta$ = 30.9) as a granulating agent was added, followed by mixing by stirred. The obtained mixture was crushed and mixed by using a hammer mill (MF10, manufactured by IKA Works, Inc.) at the number of revolutions of 3000 rpm. 120 g of obtained green coke particles to which the granulating agent was attached was granulated by using Hybdization System NHS-1 type (manufactured by Nara Machinery Co., Ltd.) at a rotor peripheral speed of 85 m/second for 5 minutes while applying impact, compression, friction, and a shear force due to a mechanical operation to the green coke particles. The obtained composite graphite particle precursor was baked in an electric furnace under a nitrogen atmosphere at 1000°C for 1 hour, and was additionally graphitized in an electric furnace under a flow of Ar at 3000°C. Then, classification was performed to obtain a composite carbon material for a secondary battery in which a plurality of the graphite particles (A) was composited. With respect to the obtained sample, d50, SA, Tap, a pore distribution mode diameter, a pore volume of pores of 0.1 to 2 $\mu$m, discharging capacity, discharging load characteristics, and low-temperature output characteristics were measured by the above-described measurement method. Results are shown in Tables D1 and D2.

(Experimental Example D2)

To 100 g of green coke particles as a precursor of the graphite particle (A) having d50 of 3.3 $\mu$m, 20 g of liquid paraffin (manufactured by Wako Pure Chemical Industries, Ltd., first grade, physical properties at 25°C: viscosity = 95 cP, a contact angle = 13.2°, surface tension = 31.7 mN/m, and rcos$\theta$ = 30.9) as a granulating agent was added, followed by mixing by stirring. The obtained mixture was crushed and mixed by using a hammer mill (MF10, manufactured by IKA Works, Inc.) at the number of revolutions of 3000 rpm. As the natural graphite particles (B), 25 g of squamous natural graphite particles, in which d50 is 8.9 $\mu$m, SA is 11.4 $m^2$/g, a tap density is 0.42 g/$cm^3$, and an aspect ratio is 8, was added to the obtained green coke particles to which the granulating agent was attached, and the resultant mixture was stirred and mixed. 120 g of the obtained mixture was granulated by using Hybdization System NHS-1 type (manufactured by Nara Machinery Co., Ltd.) at a rotor peripheral speed of 85 m/second for 5 minutes while applying impact, compression, friction, and a shear force due to a mechanical operation to the mixture. The obtained composite graphite particle precursor was baked in an electric furnace under a nitrogen atmosphere at 1000°C for 1 hour, and was additionally graphitized in an electric furnace under a flow of Ar at 3000°C. Then, classification was performed to obtain a carbon material for a non-aqueous secondary battery in which a plurality of the graphite particles (A) and the natural graphite particles (B) were composited. With respect to the obtained sample, d50, SA, Tap, a pore distribution mode diameter, a pore volume of pores of 0.1 to 2 $\mu$m, discharging capacity, discharging load characteristics, and low-temperature output characteristics were measured by the above-described measurement method. Results are shown in Tables D1 and D2. In addition, a SEM image of the particle cross-section is shown in Fig. 8. A pore distribution view is shown in Fig. 9.

(Experimental Example D3)

The green coke particles as a precursor of the graphite particle (A) having d50 of 3.3 $\mu$m, were baked, graphitized, and classified as is by the same method as in Experimental Example D1. The same measurement as in Experimental Example D1 was performed with respect to the obtained sample. Results are shown in Table D1.

(Experimental Example D4)

A carbon material was obtained by the same method as in Experimental Example D1 except that the spheroidization treatment was performed with only the green coke particles as a precursor of the graphite particle (A) having d50 of 19.5 $\mu$m. The same measurement as in Experimental Example D1 was performed with respect to the obtained sample. Results are shown in Tables D1 and D2.

[Table 10]

| | d50, $\mu$m | d90, $\mu$m | d10, $\mu$m | d90/d10 | SA, $m^2/g$ | Bulk density, $g/cm^3$ | Tap density, $g/cm^3$ | Pore distribution mode diameter, $\mu$m | Pore volume of pores of 0.1 to 2 $\mu$m, ml/g |
|---|---|---|---|---|---|---|---|---|---|
| Experimental Example D1 | 12.0 | 24.3 | 4.6 | 5.2 | 5.1 | 0.40 | 0.78 | 1.1 | 0.49 |
| Experimental Example D2 | 10.3 | 19.6 | 4.2 | 4.7 | 5.9 | 0.34 | 0.72 | 1.1 | 0.49 |
| Experimental Example D3 | 3.8 | 8.7 | 1.8 | 4.8 | 4.5 | 0.27 | 0.77 | 0.6 | 0.38 |
| Experimental Example D4 | 16.3 | 40.3 | 6.4 | 6.3 | 0.6 | 0.93 | 1.56 | 4.3 | <0.10 |

[Table 11]

Table D2

| | Discharging capacity, mAh/g | Discharging load characteristics, % | Low-temperature output characteristics, (Experimental ExampleD3=100) |
|---|---|---|---|
| Experimental ExempleD1 | 334 | 98.4 | 106 |
| Experimental ExampleD2 | 335 | 98.0 | 101 |
| Experimental ExampleD3 | 337 | 96.3 | 100 |
| Experimental ExampleD4 | 352 | 79.4 | 29 |

In Experimental Examples D1 and D2, a granulating agent pore distribution mode diameter and d50 are set to the defined ranges, and high capacity, and excellent discharging load characteristics and low-temperature output characteristics were exhibited. On the other hand, in Experimental Examples D3 and D4 in which the pore mode diameter and d50 are out of the defined ranges, deterioration of discharging load characteristics and low-temperature output characteristics was confirmed.

A fifth experimental example (Experimental Example E) of the invention will be described below.

<Preparation of Electrode Sheet>

An electrode plate including an active material layer having an active material layer density of $1.60\pm0.03$ $g/cm^3$ was prepared by using the graphite particles of the experimental example. Specifically, $50.00\pm0.02$ g (0.500 g in terms of a solid content) of 1% by mass of carboxymethyl cellulose sodium salt aqueous solution and $1.00\pm0.05$ g (0.5 g in terms of a solid content) of styrenebutadiene rubber aqueous dispersion having a weight-average molecular weight of 270,000 were added to 50.00±0.02 g of negative electrode material. The resultant mixture was stirred for 5 minutes by using a hybrid mixer manufactured by Keyence Corporation, and the resultant mixture was degassed for 30 seconds, thereby obtaining slurry.

The slurry was applied onto copper foil having a thickness of 10 $\mu$m as a current collector in a width of 10 cm so that adhesion of a negative electrode material occurs in 9.00±0.3 mg/cm$^2$ by using a small-sized die coater manufactured by Itochu Machine-Technos Corporation, and roll pressing was performed by using a roller having a diameter of 20 cm to adjust a density of the active material layer to 1.60±0.03 g/cm$^3$, thereby obtaining an electrode sheet.

<Preparation of Non-aqueous Secondary Battery (2016 Coin-Type Battery)>

The electrode sheet, which was prepared by the above-described method, was punched into a disc shape having a diameter of 12.5 mm, and lithium metal foil was punched into a disc shape having a diameter of 14 mm. The electrode sheet and the lithium metal foil, which were punched, were set as counter electrodes. A separator (formed from a porous polyethylene film), to which an electrolytic solution obtained by dissolving LiPF$_6$ in a mixed solvent (volume ratio = 3 : 7) of ethylene carbonate and ethyl methyl carbonate in a concentration of 1 mol/L, is impregnated was disposed between the electrodes, thereby preparing 2016 coin-type battery.

<Method of Preparing of Non-aqueous Secondary Battery (Laminated Battery)>

The electrode sheet, which was prepared by the above-described method, was cut out into 4 cm × 3 cm as a negative electrode, and a positive electrode formed from NMC was cut out to have the same size. In addition, a separator (formed from porous polyethylene film) was disposed between the negative electrode and the positive electrode, and the positive electrode, the negative electrode, and the separator were combined. 225 $\mu$L of electrolytic solution, which is obtained by dissolving LiPF$_6$ in a mixed solvent (volume ratio = 3 : 3 : 4) of ethylene carbonate, ethyl methyl carbonate, and dimethyl carbonate in a concentration of 1.2 mol/L, was injected to the resultant combined body, thereby preparing a laminated battery.

<Method of Measuring Discharging Capacity>

Capacity in battery charging and discharging was measured by using the non-aqueous secondary battery (2016 coin-type battery), which was prepared by the above-described method, in accordance with the following measurement method.

Charging was performed with respect to a lithium counter electrode at a current density of 0.05 C until reaching 5 mV, and charging was additionally performed with a constant voltage of 5 mV until a current density reaches 0.005 C. In addition, after the negative electrode was doped with lithium, discharging was performed with respect to the lithium counter electrode at a current density of 0.1 C until reaching 1.5 V. Discharging capacity at this time was set as the discharging capacity of the present material.

<Low-Temperature Output Characteristics>

Low-temperature output characteristics were measured by using the laminated non-aqueous electrolyte secondary battery (laminated battery) prepared by the above-described method in accordance with the following measurement method.

The non-aqueous electrolyte secondary battery not having gone through any charging and discharging cycle was subjected to initial charging and discharging cycles at 25°C that included: three cycles in a voltage range of 4.1 to 3.0 V at a current value of 0.2 C ("1C" stands for a current value required to fully discharge the one-hour rated capacity in one hour. The same definition applies hereafter.); and two cycles in a voltage range of 4.2 to 3.0 V at a current value of 0.2 C (in charging, constant-voltage charging was additionally performed with 4.2 V for 2.5 hours).

In addition, after charging with a current value of 0.2 C up to SOC 50%, constant-current discharging was performed for 2 seconds under a low-temperature environment of -30°C with respective current values of 1/8 C, 1/4 C, 1/2 C, 1.5 C, and 2 C, and a battery voltage drop after 2 seconds in discharging under each condition was measured. When a charging upper limit voltage is set to 3 V, a current value I capable being flowed for 2 seconds was calculated from the measurement value. A value, which is calculated by an expression of 3 × I (W), was set as low-temperature output characteristics of each battery.

<d50>

Measurement was performed by the same method as in the first experimental example.

<BET Specific Surface Area (SA)>

Measurement was performed by the same method as in the first experimental example.

<Tap Density>

Measurement was performed by the same method as in the first experimental example.

(Experimental Example E1)

To 100 g of green coke particles as a precursor of the bulk mesophase artificial graphite particle having d50 of 17.7 $\mu$m, 20 g of paraffin-based oil (liquid paraffin, manufactured by Wako Pure Chemical Industries, Ltd., first grade, flashing point: 238°C) as a granulating agent was added, followed by mixing by stirring. The obtained sample was crushed and mixed by using a hammer mill (MF10, manufactured by IKA Works, Inc.) at the number of revolutions of 3000 rpm, thereby obtaining green coke particles to which the granulating agent was uniformly attached. 20 g of squamous natural graphite particles having d50 of 8.1 $\mu$m was added to the obtained sample, and the resultant mixture was stirred and mixed. Then, the mixture was subjected to a compositing and granulating treatment by using Hybdization System NHS-1 type (manufactured by Nara Machinery Co., Ltd.) at a rotor peripheral speed of 85 m/second for 5 minutes while applying impact, compression, friction, and a shear force due to a mechanical operation to the mixture.

The obtained composite granulated graphite particle precursor was baked in an electric furnace under a nitrogen atmosphere at 1000°C for 1 hour, and was additionally graphitized in an electric furnace at 3000°C under a flow of Ar, thereby obtaining a composite granulated graphite particles in which the bulk mesophase artificial graphite particles and the graphite particles were composited. A cross-section of the obtained sample was observed with a SEM. From the observation, a structure, in which a graphite crystal layered structure of the squamous graphite particles was arranged in the same direction as that of an outer peripheral surface of the bulk mesophase artificial graphite particles at least at a part of the surface of the bulk mesophase artificial graphite particles, was observed.

With respect to the obtained sample, d50, SA, Tap, discharging capacity, and low-temperature input and output characteristics were measured by the above-described measurement method. Results are shown in Table E1.

(Experimental Example E2)

Green coke particles as a precursor of the bulk mesophase artificial graphite particle having d50 of 17.7 $\mu$m were baked as was in an electric furnace under a nitrogen atmosphere at 1000°C for 1 hour, and were additionally graphitized in an electric furnace at 3000°C under a flow of Ar, thereby obtaining bulk mesophase artificial graphite particles. The same measurement as in Experimental Example E1 was performed with respect to the obtained sample. Results are shown in Table E1.

[Table 12]

**Table E1**

|  | d50, $\mu$m | Tap density, g/cm$^3$ | SA, m$^2$/g | Discharging capacity, mAh/g | Low-temperature output characteristics, (Experimental ExampleE2=100) |
|---|---|---|---|---|---|
| **Experimental ExampleE1** | 23.6 | 0.86 | 7.7 | 355 | 158 |
| **Experimental ExampleE2** | 18.1 | 1.25 | 0.7 | 354 | 100 |

It was confirmed that Experimental Example E1 was sufficiently excellent in discharging capacity and low-temperature input and output characteristics in comparison to Experimental Example E2.

**Claims**

1. A composite carbon material for a non-aqueous secondary battery,
   the composite carbon material containing at least a bulk mesophase artificial graphite particle (A) and a graphite particle (B) having an aspect ratio of 5 or greater, and being capable of absorbing and releasing lithium ions, wherein a graphite crystal layered structure of the graphite particle (B) is arranged in the same direction as a direction of an outer peripheral surface of the bulk mesophase artificial graphite particle (A) at a part of a surface of the bulk mesophase artificial graphite particle (A), and an
   average circularity, as defined in the description, of the composite carbon material obtained by a flow-type particle image analyzer is 0.9 or greater.

2. The composite carbon material for a non-aqueous secondary battery according to Claim 1, wherein a crystal plane (AB plane) of the graphite crystal layered structure of the graphite particle (B) conforms to an approximately peripheral direction of the bulk mesophase artificial graphite particle (A) that is close to the crystal plane.

3. The composite carbon material for a non-aqueous secondary battery according to Claim 1 or 2, wherein a perpendicular line drawn to the center of a major axis of the graphite particles (B) in the vicinity of a surface of the bulk mesophase artificial graphite particle (A) and a tangential line at a point at which the perpendicular line intersects the outer periphery of the bulk mesophase artificial graphite particle (A) intersect each other within an angle of $90° \pm 45°$ on a SEM image of the material.

4. The composite carbon material for a non-aqueous secondary battery according to any one of Claims 1 to 3, wherein an average particle size d50 of the graphite particle (B) is smaller than an average particle size d50 of the bulk mesophase artificial graphite particle (A).

5. The composite carbon material for a non-aqueous secondary battery according to Claim 4, wherein the average particle size d50 of the graphite particle (A) is 3 $\mu$m or greater and 60 $\mu$m or less, and the average particle size d50 of the graphite particle (B) is 1 $\mu$m or greater and 50 $\mu$m or less.

6. The composite carbon material for a non-aqueous secondary battery according to any one of Claims 1 to 5, wherein an artificial graphite particle (C) having an average particle size d50, which is smaller than the average particle size d50 of the bulk mesophase artificial graphite particle (A), adheres to at least a part of a surface of the bulk mesophase artificial graphite particle (A) or the graphite particle (B).

7. The composite carbon material for a non-aqueous secondary battery according to any one of Claims 1 to 6, wherein the graphite particle (B) contains natural graphite.

8. A lithium ion secondary battery, comprising: a positive electrode and a negative electrode capable of absorbing and releasing lithium ions; and an electrolyte, wherein the negative electrode includes a current collector and an active material layer that is formed on the current collector, and the active material layer contains the composite carbon material for a non-aqueous secondary battery according to any one of Claims 1 to 7.


**Patentansprüche**

1. Ein Kohlenstoff-Verbundmaterial für eine nichtwässrige Sekundärbatterie,
   wobei das Kohlenstoff-Verbundmaterial mindestens ein künstliches Massen-Mesophase-Graphitteilchen (A) und ein Graphitteilchen (B) mit einem Seitenverhältnis von 5 oder mehr enthält und in der Lage ist, Lithiumionen zu absorbieren und freizusetzen, wobei eine geschichtete Graphitkristallstruktur des Graphitteilchens (B) in der gleichen Richtung wie eine Richtung einer äußeren Umfangsfläche des künstlichen Massen-Mesophase-Graphitteilchens (A) an einem Teil einer Oberfläche des künstlichen Massen-Mesophase-Graphitteilchens (A) angeordnet ist und wobei eine
   durchschnittliche Rundheit, wie in der Beschreibung definiert, des Kohlenstoff-Verbundmaterials, erhalten durch einen Teilchenbildanalysator vom Strömungstyp, 0,9 oder mehr ist.

2. Das Kohlenstoff-Verbundmaterial für eine nichtwässrige Sekundärbatterie gemäß Anspruch 1, wobei eine Kristallebene (AB-Ebene) der geschichteten Graphitkristallstruktur des Graphitteilchens (B) einer ungefähren Umfangsrichtung des künstlichen Massen-Mesophase-Graphitteilchens (A), das der Kristallebene nahe ist, entspricht.

3. Das Kohlenstoff-Verbundmaterial für eine nichtwässrige Sekundärbatterie gemäß Anspruch 1 oder 2, wobei eine senkrechte Linie, die zum Mittelpunkt einer Hauptachse der Graphitteilchen (B) in der Nähe einer Oberfläche des künstlichen Massen-Mesophase-Graphitteilchens (A) gezogen ist, und eine tangentiale Linie an einem Punkt, an dem die senkrechte Linie den äußeren Umfang des künstlichen Massen-Mesophase-Graphitteilchens (A) kreuzt, einander auf einem Rasterelektronenmikroskop (SEM)-Bild des Materials innerhalb eines Winkels von 90°±45° kreuzen.

4. Das Kohlenstoff-Verbundmaterial für eine nichtwässrige Sekundärbatterie gemäß einem der Ansprüche 1 bis 3, wobei eine durchschnittliche Teilchengröße d50 des Graphitteilchens (B) kleiner ist als eine durchschnittliche Teilchengröße d50 des künstlichen Massen-Mesophase-Graphitteilchens (A).

5. Das Kohlenstoff-Verbundmaterial für eine nichtwässrige Sekundärbatterie gemäß Anspruch 4, wobei die durchschnittliche Teilchengröße d50 des Graphitteilchens (A) 3 $\mu$m oder mehr und 60 $\mu$m oder weniger beträgt und die durchschnittliche Teilchengröße d50 des Graphitteilchens (B) 1 $\mu$m oder mehr und 50 $\mu$m oder weniger beträgt.

6. Das Kohlenstoff-Verbundmaterial für eine nichtwässrige Sekundärbatterie gemäß einem der Ansprüche 1 bis 5, wobei ein künstliches Graphitteilchen (C) mit einer durchschnittlichen Teilchengröße d50, die kleiner ist als die durchschnittliche Teilchengröße d50 des künstlichen Massen-Mesophase-Graphitteilchens (A), an mindestens einem Teil einer Oberfläche des künstlichen Massen-Mesophase-Graphitteilchens (A) oder des Graphitteilchens (B) haftet.

7. Das Kohlenstoff-Verbundmaterial für eine nichtwässrige Sekundärbatterie gemäß einem der Ansprüche 1 bis 6, wobei das Graphitteilchen (B) natürliches Graphit enthält.

8. Eine Lithiumionen-Sekundärbatterie, umfassend: eine positive Elektrode und eine negative Elektrode, die in der Lage sind, Lithiumionen zu absorbieren und freizusetzen; und ein Elektrolyt, wobei die negative Elektrode einen Stromabnehmer und eine Aktivmaterial-Schicht, die auf dem Stromabnehmer gebildet ist, enthält und die Aktivmaterial-Schicht das Kohlenstoff-Verbundmaterial für eine nichtwässrige Sekundärbatterie gemäß einem der Ansprüche 1 bis 7 enthält.

**Revendications**

1. Matériau de carbone composite pour un accumulateur secondaire non aqueux,
le matériau de carbone composite contenant au moins une particule de graphite artificiel de mésophase en vrac (A) et une particule de graphite (B) ayant un rapport des dimensions de 5 ou supérieur, et étant capable d'absorber et libérer des ions lithium, dans lequel une structure en couches de cristal de graphite de la particule de graphite (B) est disposée dans la même direction qu'une direction d'une surface périphérique externe de la particule de graphite artificiel de mésophase en vrac (A) en une partie d'une surface de la particule de graphite artificiel de mésophase en vrac (A), et une circularité moyenne, comme définie dans la description, du matériau de carbone composite obtenu par un analyseur d'image de particule de type écoulement est de 0,9 ou supérieure.

2. Matériau de carbone composite pour un accumulateur secondaire non aqueux selon la revendication 1, dans lequel un plan de cristal (plan AB) de la structure en couches de cristal de graphite de la particule de graphite (B) est conforme à une direction approximativement périphérique de la particule de graphite artificiel de mésophase en vrac (A) qui est proche du plan de cristal.

3. Matériau de carbone composite pour un accumulateur secondaire non aqueux selon la revendication 1 ou 2, dans lequel une ligne perpendiculaire tirée vers le centre d'un axe majeur des particules de graphite (B) au voisinage d'une surface de la particule de graphite artificiel de mésophase en vrac (A) et une ligne tangentielle en un point auquel la ligne perpendiculaire coupe la périphérie externe de la particule de graphite artificiel de mésophase en vrac (A) se coupent l'une l'autre dans un angle de 90° ± 45° sur une image SEM du matériau.

4. Matériau de carbone composite pour un accumulateur secondaire non aqueux selon l'une quelconque des revendications 1 à 3, dans lequel une taille moyenne de particule d50 de la particule de graphite (B) est inférieure à une taille moyenne de particule d50 de la particule de graphite artificiel de mésophase en vrac (A).

5. Matériau de carbone composite pour un accumulateur secondaire non aqueux selon la revendication 4, dans lequel la taille moyenne de particule d50 de la particule de graphite (A) est de 3 $\mu$m ou supérieure et 60 $\mu$m ou inférieure, et la taille moyenne de particule d50 de la particule de graphite (B) est de 1 $\mu$m ou supérieure et de 50 $\mu$m ou inférieure.

6. Matériau de carbone composite pour un accumulateur secondaire non aqueux selon l'une quelconque des revendications 1 à 5, dans lequel une particule de graphite artificiel (C) présentant une taille moyenne de particule d50, qui est inférieure à la taille moyenne de particule d50 de la particule de graphite artificiel de mésophase en vrac (A), adhère à au moins une partie d'une surface de la particule de graphite artificiel de mésophase en vrac (A) ou de la particule de graphite (B).

7. Matériau de carbone composite pour un accumulateur secondaire non aqueux selon l'une quelconque des revendications 1 à 6, dans lequel la particule de graphite (B) contient du graphite naturel.

8. Accumulateur secondaire à ions lithium, comprenant : une électrode positive et une électrode négative capables d'absorber et libérer des ions lithium ; et un électrolyte, dans lequel l'électrode négative inclut un collecteur de courant et une couche de matière active qui est formée sur le collecteur de courant, et la couche de matière active contient le matériau de carbone composite pour un accumulateur secondaire non aqueux selon l'une quelconque des revendications 1 à 7.

FIG.1

FIG.2

FIG.3

FIG.4

FIG.5

FIG.6

FIG.7

FIG.8

FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013079173 A
- JP 2007220324 A
- JP 2011216241 A
- JP 2007317551 A
- JP 2004127723 A
- JP 3534391 B
- JP 2008305722 A
- JP 2014114197 A
- WO 2014141372 A
- JP 2002083587 A
- JP 2011086617 A